# EUROPEAN PATENT SPECIFICATION

(11) **EP 1 728 838 B1**
(45) Date of publication and mention of the grant of the patent: **15.08.2007**
(21) Application number: 06011082.2
(22) Date of filing: 30.05.2006
(51) Int. Cl.: C09D 11/02

(54) **Ink composition for ink jet-recording and method for preparing lithographic printing plate using the same**
Tintenzusammensetzung für das Tintenstrahldruckverfahren und Verfahren zur Herstellung einer lithographischen Druckplatte damit
Composition d'encre pour l'enregistrement par jet d'encre et procédé de fabrication d'une plaque d'impression lithographique l'utilisant

(30) Priority: 31.05.2005 JP 2005160176
(43) Date of publication of application: 06.12.2006
(73) Proprietor: FUJIFILM Corporation, Minato-ku Tokyo (JP)
(72) Inventor: Kunita, Kazuto, Yoshida-cho Haibara-gun Shizuoka (JP)
(74) Representative: HOFFMANN EITLE

(56) References cited:
- WO-A-20/04090030
- US-A- 4 922 004
- US-A- 5 030 548

## Description

### Technical Field

The present invention relates to an ink composition for use in the ink jet-recording technique (ink jet-recording ink composition) and a method for the preparation of a lithographic printing plate using the ink composition and, more particularly, to an ink jet-recording ink composition, which is highly sensitive to the irradiation with radiant rays, permits the formation of a high quality image and is excellent in the storage stability as well as a method for the preparation of a lithographic printing plate, which is free of any developing treatment and permits the formation of images having high printing durability and high quality.

### Background Art

As the image-recording methods in which images are formed on a medium to be recorded (or a recording medium) such as paper on the basis of image data signals, there have been known, for instance, the electrophotogaphy technique, the sublimation-type and melt-type thermal ink-transfer techniques, and the ink jet-recording technique. The electrophotogaphy technique requires the use of a process for forming an electrostatic latent image on a drum made of a light-sensitive material through charging and light-exposure operations and therefore, this technique suffers from various problems. For instance, the technique requires the use of a complicated system and this in turn results in an increase in the production cost. In addition, the device used in the thermal ink-transfer technique is rather cheap, but this technique suffers from problems in that the technique requires the use of an ink ribbon, and this in turn leads to an increase in the running cost and the generation of a large amount of waste matter. On the other hand, the ink jet-recording technique uses a cheap device and is a technique in which images are directly formed on a recording medium by discharging ink only on the desired image area. Accordingly, this technique permits the efficient use of the ink and requires a reduced running cost. Furthermore, this technique is less noisy and therefore, it is quite excellent as an image-recording technique.

As an example of such an ink jet-recording technique, there has been known a recording technique which makes use of an ink jet-recording ink capable of being cured through the irradiation thereof with radiant rays.

For instance, such an ink jet-recording technique using an ultraviolet ray-curable ink jet-recording ink has attracted special interest lately since this technique may give out a relatively small quantity of bad smells, is excellent in the quick drying ability and permits the recording of images even on a recording medium free of any ink absorbability. There has been proposed, in the following Patent Document 1, a composition comprising a polymerizable compound selected from the group consisting of specific acrylate compounds and a coloring material for the purpose of providing a highly safe ink jet-recording ink, which can record images even on a substrate whose direct image-recording through the ink jet-recording technique has in general been believed to be considerably difficult, without causing any bleeding, while ensuring high sensitivity and high adhesion to a recording medium and which has only a reduced skin-irritating effect and/or only a slight sensitization.

Patent Document 1: Japanese Un-Examined Patent Publication (hereunder referred to as "J.P. KOKAI") 2003-192943

### Disclosure of the Invention

The ink jet-recording ink capable of being cured through the irradiation thereof with radiant rays such as ultraviolet light rays (radiation-curable ink jet-recording ink) should not only have sufficiently high sensitivity, but also provide high quality images. A variety of advantages can be obtained by the development of a radiation-curable ink jet-recording ink having high sensitivity. For instance, a high radiation-curing ability is imparted to the resulting ink, the electric power consumption of the ink jet-recording can be reduced, the service life of a source of radiant rays is improved through the reduction of the load to be applied thereto and the generation of any low molecular weight substances due to any insufficient curing of the ink can be prevented. Moreover, the improvement of the ink-sensitivity leads to the improvement of the strength of the cured images, in particular, when the ink jet-recording ink is used as the image area of a lithographic printing plate and this in turn results in the formation of such a printing plate having high printing durability.

On the other hand, to obtain high quality images, the ink jet-recording ink should satisfy the following requirements: the ink particles injected on the surface of a recording medium should maintain their shape (uncrushable) even after the injection thereof; and the ink particles never undergo any deformation (free of any bleeding and/or penetration) on the surface of the recording medium till the ink particles injected in a predetermined pattern or shape are cured by the irradiation with radiant rays and thus fixed thereon.

However, any conventional technique including that disclosed in the foregoing Patent Document 1 has not yet provided any radiation-curable ink jet-recording ink which has sufficient sensitivity and can ensure the formation of high quality images.

Accordingly, it is an object of the present invention to provide an ink jet-recording ink composition, which is highly sensitive to the irradiation with radiant rays, permits the formation of a high quality image and is excellent in the storage stability as well as a method for the preparation of a lithographic printing plate, which is free of any developing treatment and permits the formation of images having high printing durability and high quality.

According to the present invention, there are provided inventions each specified below:
(1) An ink jet-recording ink composition capable of being cured through the irradiation with radiant rays, which comprises at least a coloring material, a polymerizable compound and a polymerization initiator, wherein the polymerization initiator is a compound possessing a polymerizable structure in the molecule wherein the polymerizable structure of the polymerization initiator is selected from the group consisting of styryl group, allyl group, vinyl group, and α-hetero methacryl group represented by the general formula (I): 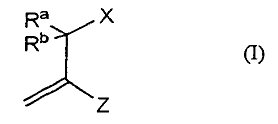 wherein, R^{a} and R^{b} each independently represents a hydrogen atom, a halogen atom, a cyano group or an organic group; Z represents CN or COY; X represents a group or a halogen atom bonded to the *α* -carbon through a hetero atom; and Y represents a group or a halogen atom bonded to the carbonyl group through a hetero atom, provided that X and Y, R^{a} and R^{b}, or X and R^{a} or R^{b} may be linked together to thus form a ring-like structure.
(2) The ink jet-recording ink composition as set forth in item (1), wherein the polymerizable structure of the polymerization initiator is *α* -hetero methacryl group represented by the general formula (I).
(3) The ink jet-recording ink composition as set forth in item (1), wherein the polymerization initiator is a compound represented by the following general formula (II): 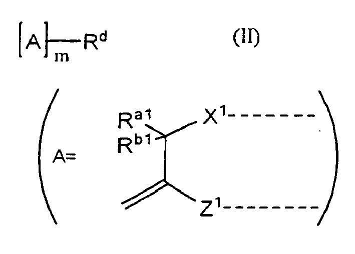 wherein, m is an integer ranging from 1 to 6, R^{a1} and R^{b1} each independently represents a hydrogen atom, a halogen atom, a cyano group or a monovalent organic group; X¹ represents a halogen atom, a monovalent or divalent group bonded through a hetero atom, or a divalent hetero atom; Z¹ represents CN or COY¹; Y¹ represents a monovalent or divalent group bonded to a carbonyl group through a hetero atom, or a halogen atom, provided that at least one of X¹ and Y¹ represents a divalent group; R^{d} represents a monovalent to hexa-valent structure for initiating polymerization derived from a polymerization initiator; the dotted line represents a bonding arm when X¹ or Y¹ and R^{d} are linked together and the number of the bonding arms present in the structure ranges from 1 to 6 in total.
(4) The ink jet-recording ink composition as set forth in item (3), wherein the "monovalent group bonded through a hetero atom" is a hydroxyl group, a substituted oxy group, a mercapto group, a substituted thio group, an amino group, a substituted amino group, a sulfo group, a sulfonate group, a substituted sulfinyl group, a substituted sulfonyl group, a phosphono group, a substituted phosphono group, a phosphonate group, a substituted phosphonate group, a nitro group or a hetero ring-containing group (provided that this group is linked through the hetero atom), and the "divalent group bonded through a hetero atom" is one derived from the foregoing monovalent group in which one hydrogen atom or other atom or group is replaced with a bonding arm.
(5) The ink jet-recording ink composition as set forth in item (3), wherein the monovalent to hexa-valent group for initiating polymerization is derived from a polymerization initiator selected from the group consisting of (a) aromatic ketones, (b) aromatic onium salt compounds, (c) organic peroxides, (d) thio compounds, (e) hexaaryl-biimidazole compounds, (f) ketoxime ester compounds, (g) borate compounds, (h) azinium compounds, (i) metallocene compounds, (j) activated ester compounds, and (k) carbon-halogen bond-containing compounds.
(6) A method for the preparation of a lithographic printing plate comprising the steps of ejecting the ink composition as set forth in the foregoing items (1) to (5) to place it on a hydrophilic substrate (or to impact the ink composition on the substrate) and then irradiating the ink composition with radiant rays to thus form an image on the substrate.

The inventors of this invention have conducted various studies and have found that the curing ability of an ink jet-recording ink composition can be improved by the use of a polymerization initiator having a polymerizable group, in particular, a structure represented by the foregoing general formula (I) in the molecule (hereunder sometimes referred to as " *α*-hetero (atom-containing) methacrylic initiator"). Regarding the polymerizable initiator, the radicals generated through the irradiation thereof with radiant rays permits the improvement of the polymerization-initiating rate through the immediate transfer of the radicals to the nearest polymerizable groups within the molecule as compared with the initiator free of any polymerizable group. Moreover, the initiator would be incorporated into the cured matrix formed from a large amount of the polymerizable compound when the composition is exposed to light to cure the same and to thus improve the strength of the cured product, and this may in turn leads to the improvement of the apparent degree of curing. In addition, the use of an *α* -hetero atom-containing methacrylic initiator would permit the further improvement of the effects described above as compared with the acrylate type initiators each carrying the usual polymerizable group, since the former has a quite excellent self-coagulation ability and ensures a high polymerization rate in the presence of oxygen.

The method for the preparation of a lithographic printing plate according to the present invention employs the ink jet-recording ink composition likewise according to the present invention and therefore, the resulting product is improved in the strength of the cured image area and the adhesion between the image area and the surface of a substrate, as compared with those prepared according to the conventional method.

In particular, the *α* -hetero methacrylic initiator has an ability of undergoing thermal polymerization lower than that observed for the acrylic compound and accordingly, the resulting ink composition is also excellent in the storage stability.

Consequently, the present invention can thus provide an ink jet-recording ink composition, which is highly sensitive to the irradiation with radiant rays, permits the formation of a high quality image and is excellent in the storage stability as well as a method for the preparation of a lithographic printing plate, which is free of any developing treatment and permits the formation of images having high printing durability and high quality.

### Best Mode for Carrying Out the Invention

The ink composition of the invention is characterized in that it can be cured through the irradiation with radiant rays and that it comprises a coloring material and a polymerizable compound having a specific structure. The term "radiant rays (radiation)" used herein means wide variety of radiations such as *α* -beams, *y* -beams, X-rays, ultraviolet light rays, visible light rays and electron beams and the present invention is intended to provide an ink composition which can be cured by the irradiation with ultraviolet light rays and electron beams among others and, in particular, ultraviolet light rays.

### [Polymerization Initiator]

The polymerization initiator used in the ink composition of the present invention is a compound having a polymerizable structure (also referred to as "polymerizable group") in the molecule and it is not restricted to any specific one inasmuch as it simultaneously comprises the structure of an initiator as will be detailed below and a polymerizable group in the same molecule.

### (Polymerizable Group)

Such polymerizable groups may be, for instance, styryl, allyl and vinyl groups, and *α* -hetero methacryl group represented by the general formula (I). Among them, preferred are *α* -hetero methacryl groups because of their excellent balance between the polymerizability and the storage stability.

Particularly preferred compounds as those each having a polymerizable structure in the molecule are ones each having at least one structure represented by the general formula (I). The structure represented by the general formula (I) is in the form of a monovalent or divalent substituent and at least one of R^{a}, R^{b}, X and Y has at least one bonding arm. Moreover, X and Y may serve as a connecting group having n connectable sites and at least one structure of an initiator and a group represented by the general formula (I) may be linked to the terminals thereof (n is an integer of not less than 2) (multimer).

In Formula (I), X and Y each represent a hetero atom or a halogen atom, each of them may be a terminal group or a connecting group and the connecting group may further be linked to another substituent (in this respect, the substituent may also include the structures of Formula (I) and the initiator structure as has been described above).

When the structure represented by Formula (I) is linked to an initiator structure through X or Y, the hetero atoms as a part of the initiator structures may serve as the hetero atoms represented by X, Y The substituent X preferably represents a halogen atom, or an initiator structure having at least one bonding arm as a group, in which X serves as a connecting group and it is linked to another substituent, or a hydroxyl group, a substituted oxy group, a mercapto group, a substituted thio group, an amino group, substituted amino group, a sulfo group, a sulfonate group, a substituted sulfinyl group, a substituted sulfonyl group, a phosphono group, a substituted phosphono group, a phosphonate group, a substituted phosphonate group, a nitro group or a hetero ring-containing group (provided that it is connected through the hetero atom). The substituent Y may be, for instance, a halogen atom, or an initiator structure having at least one bonding arm as a group, in which Y serves as a connecting group and it is linked to another substituent, or a hydroxyl group, a substituted oxy group, a mercapto group, a substituted thio group, an amino group, substituted amino group or a hetero ring-containing group (provided that it is connected through the hetero atom).

In case where X or Y serves as a connecting group and it is linked to another substituent to form a group, the group may be converted into a connecting group having n connectable sites through the elimination of n hydrogen atoms therefrom and then n groups represented by Formula (I) may be linked to the connecting group (n is an integer of not less than 2). Moreover, X and Y may be bonded together to form a ring-like structure.

More preferably, R^{a} and R^{b} each independently represents a hydrogen atom, a halogen atom, a cyano group or an organic group such as a substituted or unsubstituted, saturated or unsaturated hydrocarbon group, a substituted oxy group, a substituted thio group, a substituted amino group, a substituted carbonyl group or a carboxylate group, or R^{a} and R^{b} may be bonded together to form a ring-like structure.

The polymerization initiators used in the present invention and represented by the foregoing formula (I) are more preferably compounds represented by the following general formula (II):

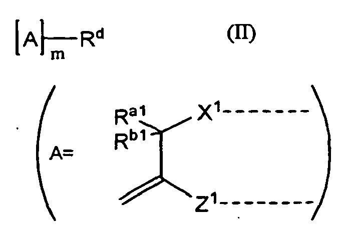

In Formula (II), m is an integer ranging from 1 to 6, R^{a1} and R^{b1} each independently represents a hydrogen atom, a halogen atom, a cyano group or a monovalent organic group; X¹ represents a halogen atom, a monovalent or divalent group bonded through a hetero atom, or a divalent hetero atom; Z¹ represents CN or COY¹; and Y¹ represents a monovalent or divalent group bonded to a carbonyl group through a hetero atom, or a halogen atom. R^{d} represents a monovalent to hexa-valent structure for initiating polymerization derived from a polymerization initiator (the structure of the polymerization initiator will be described later). In this respect, at least one of X¹ and Y¹ represents a divalent group. The dotted line represents a bonding arm when X¹ or Y¹ and R^{d} are linked together and the number of the bonding arms present in the structure of Formula (II) ranges from 1 to 6 in total. Further, X¹ and Y¹, R^{a1} and R^{b1}, or X¹ and R^{a1} or R^{b1} may be linked together to thus form a ring-like structure.

Then each group in Formulas (I) and (II) will be detailed below.

The "hetero atom" may preferably be non-metallic atom and more specifically, it may be, for instance, an oxygen, sulfur, nitrogen or phosphorus atom. The hetero atom may have a charge. The "monovalent group bonded through a hetero atom" may preferably be, for instance, a hydroxyl group, a substituted oxy group, a mercapto group, a substituted thio group, an amino group, a substituted amino group, a sulfo group, a sulfonate group, a substituted sulfinyl group, a substituted sulfonyl group, a phosphono group, a substituted phosphono group, a phosphonate group, a substituted phosphonate group, a nitro group or a hetero ring-containing group (provided that this group is linked through the hetero atom). The "divalent (or higher-valent) group bonded through a hetero atom" may be one derived from the foregoing monovalent group in which one or more hydrogen atoms or other atoms or groups are replaced with a bonding arm or arms.

The term "halogen atom" used herein means, for instance, a chlorine, bromine, iodine or fluorine atom.

In the foregoing general formulas (I) and (II), the "organic group" or "monovalent organic group" means, for instance, a hydrocarbon group which may have a substituent and which may have an unsaturated bond, a substituted oxy group, a substituted thio group, a substituted amino group, a substituted carbonyl group, or a carboxylate group. The "divalent (or higher-valent) organic group" may be one derived in the monovalent organic group from which one or more hydrogen atoms or other atoms or groups are replaced with a bonding arm or arms.

The foregoing "hydrocarbon group which may have a substituent and which may have an unsaturated bond" may be, for instance, (i) an alkyl group, (ii) a substituted alkyl group, (iii) an aryl group, (iv) a substituted aryl group, (v) an alkenyl group, (vi) a substituted alkenyl group, (vii) an alkynyl group and (viii) a substituted alkynyl group.

The alkyl group (i) may be, for instance, linear, branched or cyclic alkyl groups having 1 to 20 carbon atoms and specific examples thereof are methyl, ethyl, propyl, butyl, pentyl, hexyl, heptyl, octyl, nonyl, decyl, undecyl, dodecyl, tridecyl, hexadecyl, octadecyl, eicosyl, isopropyl, isobutyl, s-butyl, t-butyl, isopentyl, neopentyl, 1-methylbutyl, isohexyl, 2-ethylhexyl, 2-methylhexyl, cyclohexyl, cyclopentyl, and 2-norbornyl groups. Among these, more preferably used herein are linear alkyl groups having 1 to 12 carbon atoms, branched alkyl groups having 3 to 12 carbon atoms, and cyclic alkyl groups having 5 to 10 carbon atoms.

The substituted alkyl group (ii) is constituted by bonding a substituent with an alkylene group and such a substituent may be a monovalent non-metallic atomic group other than hydrogen atom and examples thereof preferably used herein are halogen atoms (such as -F, -Br, -Cl, -I), hydroxyl group, alkoxy groups, aryloxy groups, mercapto groups, alkylthio groups, arylthio groups, alkyl dithio groups, aryl dithio groups, amino groups, N-alkylamino groups, N,N-dialkylamino groups, N-arylamino groups, N,N-diarylamino groups, N-alkyl-N-arylamino groups, acyloxy groups, carbamoyloxy groups, N-alkyl carbamoyloxy groups, N-aryl carbamoyloxy groups, N,N-dialkyl carbamoyloxy groups, N,N-diaryl carbamoyloxy groups, N- alkyl-N-aryl carbamoyloxy groups, alkylsulfoxy groups, arylsulfoxy groups, acylthio groups, acylamino groups, N-alkyl-acylamino groups, N-aryl-acylamino groups, ureido group, N'-alkyl-ureido groups, N',N'-dialkyl-ureido groups, N'-aryl-ureido groups, N',N'-diaryl-ureido groups, N'-alkyl-N'-aryl ureido groups, N-alkyl-ureido groups, N-aryl-ureido groups, N'-alkyl-N-alkyl ureido groups, N'-alkyl-N-aryl ureido groups, N',N'-dialkyl-N-alkyl-ureido groups, N',N'-dialkyl-N-aryl-ureido groups, N'-aryl-N-alkyl ureido groups, N'-aryl-N-aryl ureido groups, N',N'-diaryl-N-alkylureido groups, N',N'-diaryl-N-aryl-ureido groups, N'-alkyl-N'-aryl-N-alkyl ureido groups, N'-alkyl-N'-aryl-N-aryl ureido groups, alkoxy-carbonylamino groups, aryloxy-carbonylamino groups, N-alkyl-N-alkoxy-carbonylamino groups, N-alkyl-N- aryloxy-carbonylamino groups, N-aryl-N-alkoxy-carbonylamino groups, N-aryl-N- aryloxy-carbonylamino groups, formyl groups, acyl groups, carboxyl groups and conjugated base groups thereof (hereunder referred to as "carboxylate(s)"), alkoxycarbonyl groups, aryloxycarbonyl groups, carbamoyl groups, N-alkyl- carbamoyl groups, N,N-dialkyl-carbamoyl groups, N-aryl-carbamoyl groups, N,N- diaryl-carbamoyl groups, N-alkyl-N-aryl-carbamoyl groups, alkylsulfinyl groups, arylsulfinyl groups, alkylsulfonyl groups, arylsulfonyl groups, sulfo group (-SO₃H) and conjugated base groups thereof (hereunder referred to as "sulfonate group(s)"), alkoxy-sulfonyl groups, aryloxy-sulfonyl groups, sulfinamoyl groups, N-alkyl-sulfinamoyl groups, N,N-dialkyl-sulfinamoyl groups, N-aryl-sulfinamoyl groups, N,N-diaryl-sulfinamoyl groups, N-alkyl-N-aryl-sulfinamoyl groups, sulfamoyl groups, N-alkyl-sulfamoyl groups, N,N-dialkyl-sulfamoyl groups, N-aryl-sulfamoyl groups, N,N-diaryl-sulfamoyl groups, N-alkyl-N-aryl-sulfamoyl groups, N-acyl- sulfamoyl groups and conjugated base groups thereof, N-alkylsulfonyl-sulfamoyl groups (-SO₂NHSO₂ (alkyl)) and conjugated base groups thereof, N-arylsulfonyl- sulfamoyl groups (-SO₂NHSO₂ (aryl)) and conjugated base groups thereof, N-alkylsulfonyl-carbamoyl groups (-CONHSO₂ (alkyl)) and conjugated base groups thereof, N-arylsulfonyl-carbamoyl groups (-CONHSO₂ (aryl)) and conjugated base groups thereof, alkoxy-silyl groups (-Si(O-alkyl)₃), aryloxy-silyl groups (-Si(O-aryl)₃), hydroxy-silyl groups (-Si(OH)₃) and conjugated base groups thereof, phosphono groups (-PO₃H₂) and conjugated base groups thereof (hereunder referred to as "phosphonate group(s)"), dialkyl-phosphono groups (-PO₃(alkyl)₂), diaryl- phosphono groups (-PO₃(aryl)₂), alkylaryl-phosphono groups (-POₛ(alkyl)(aryl)), monoalkyl-phosphono groups (-PO₃H(alkyl)) and conjugated base groups thereof (hereunder referred to as "alkyl phosphonate group(s)"), monoaryl-phosphono groups (-PO₃H(aryl)) and conjugated base groups thereof (hereunder referred to as "aryl phosphonate group(s)"), phosphono-oxy groups (-OPO₃H₂) and conjugated base groups thereof (hereunder referred to as "phosphonato-oxy group(s)"), dialkyl- phosphono-oxy groups (-OPO₃(alkyl)₂), diaryl-phosphono-oxy groups (-OPO₃(aryl)₂), alkylaryl-phosphono-oxy groups (-OPO₃(alkyl)(aryl)), monoalkyl-phosphono-oxy groups (-OPO₃H(alkyl)) and conjugated base groups thereof (hereunder referred to as "alkyl phosphonato-oxy group(s)"), monoaryl-phosphono-oxy groups (-OPO₃H-(aryl)) and conjugated base groups thereof (hereunder referred to as "aryl phosphonato-oxy group(s)"), cyano group, nitro group, aryl groups, alkenyl groups and alkynyl groups.

In the foregoing "substituted alkyl groups", examples of the alkyl groups as the substituents thereof are alkyl groups specified above and specific examples of the aryl groups as the substituents thereof are phenyl, biphenyl, naphthyl, tolyl, xylyl, mesityl, cumenyl, fluorophenyl, chlorophenyl, bromophenyl, chloromethyl-phenyl, hydroxyphenyl, methoxyphenyl, ethoxyphenyl, phenoxy-phenyl, acetoxyphenyl, benzoyloxy-phenyl, methylthio-phenyl, phenylthio-phenyl, methylamino-phenyl, di-methylamino-phenyl, acetylamino-phenyl, carboxyphenyl, methoxycarboxy-phenyl, ethoxy-carboxyphenyl, phenoxy-carboxyphenyl, N-phenyl-carbamoylphenyl, phenyl, nitrophenyl, cyanophenyl, sulfophenyl, sulfonato-phenyl, phosphono-phenyl, and phosphonato-phenyl groups. Moreover, examples of the alkenyl groups as the substituents thereof are vinyl, 1-propenyl, 1-butenyl, cinnamyl and 2-chloro-1-ethenyl, and examples of the alkynyl groups thereof are ethynyl, 1-propynyl, 1-butynyl, trimethylsilyl-ethynyl, and phenyl-ethynyl groups. Examples of the acyl groups present as the substituents of the foregoing substituted alkyl groups are those represented by the general formula: R⁴CO-, wherein R⁴ may be, for instance, a hydrogen atom, and the aforementioned alkyl, aryl, alkenyl and alkynyl groups.

On the other hand, the alkylene groups in the foregoing substituted alkyl groups may be, for instance, divalent organic groups derived from the foregoing alkyl groups having 1 to 20 carbon atoms, in which either of the hydrogen atoms is removed, and preferably used herein may be, for instance, linear alkylene groups having 1 to 12 carbon atoms, branched alkylene groups having 3 to 12 carbon atoms and cyclic alkylene groups having 5 to 10 carbon atoms. Specific examples of the substituted alkyl groups preferably used herein are chloromethyl, bromomethyl, 2-chloroethyl, trifluoromethyl, methoxymethyl, methoxy-ethoxyethyl, allyloxy- methyl, phenoxy-methyl, methylthio-methyl, tolylthio-methyl, ethyl-aminoethyl, diethylamino-propyl, morpholino-propyl, acetyloxy-methyl, benzoyloxy-methyl, N- cyclohexyl-carbamoyloxy-ethyl, N-phenyl-carbamoyloxy-ethyl, acetylamino-ethyl, N-methylbenzoyl-aminopropyl, 2-oxoethyl, 2-oxopropyl, carboxypropyl, methoxy- carbonyl-ethyl, methoxycarbonyl-methyl, methoxycarbonyl-butyl, ethoxycarbonyl- methyl, butoxycarbonyl-methyl, allyloxy-carbonylmethyl, benzyloxy-carbonyl- methyl, methoxycarbonyl-phenylmethyl, trichloromethyl-carbonylmethyl, allyloxy-carbonylbutyl, chlorophenoxy-carbonylmethyl, carbamoylmethyl, N-methyl-carbamoylethyl, N,N-dipropyl-carbamoylmethyl, N-(methoxyphenyl)-carbamoylethyl, N-methyl-N-(sulfophenyl) carbamoylmethyl, sulfopropyl, sulfobutyl, sulfonato-butyl, sulfamoyl-butyl, N-ethylsulfamoyl-methyl, N,N-dipropyl-sulfamoylpropyl, N-tolylsulfamoyl-propyl, N-methyl-N-(phosphono-phenyl) sulfamoyl-octyl, phosphono-butyl, phosphonato-hexyl, diethyl-phosphono-butyl, di- phenyl-phosphono-propyl, methyl-phosphono-butyl, methyl-phosphonato-butyl, tolyl-phosphonohexyl, tolyl-phosphonatohexyl, phosphono-oxypropyl, phosphonato- oxybutyl, benzyl, phenethyl, *α* -methylbenzyl, 1-methyl-1-phenylethyl, p-methyl- benzyl, cinnamyl, allyl, 1-propenylmethyl, 2-butenyl, 2-methylallyl, 2-methyl- propenyl-methyl, 2-propynyl, 2-butynyl and 3-butynyl groups, and the groups represented by the following formulas:

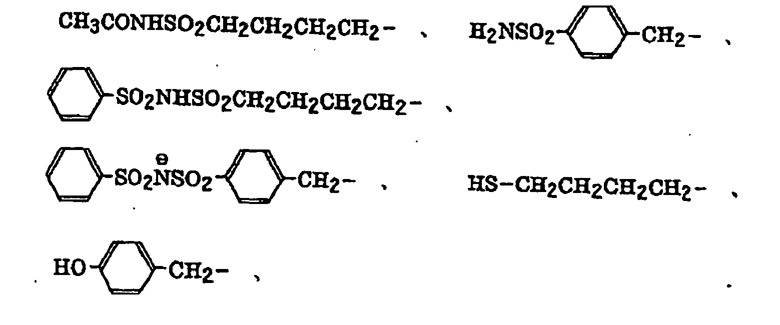

The aryl groups (iii) may be, for instance, fused rings each formed from 1 to 3 benzene rings through fusion, and fused rings each formed from a benzene ring and a 5-membered unsaturated ring through fusion and specific examples thereof are phenyl, naphthyl, anthryl, phenanthryl, indenyl, acenaphthenyl and fluorenyl groups, with phenyl and naphthyl groups being more preferably used herein among others.

The substituted aryl group (iv) is an aryl group to which a substituent is linked and usable herein may be, for instance, the foregoing aryl groups carrying, on the ring-constituting carbon atom(s), one or more of monovalent non-metal atomic groups except for hydrogen atom. Examples of such substituents preferably used herein are the aforementioned alkyl and substituted alkyl groups and those listed above as substituents in the substituted alkyl groups. Specific examples of these substituted aryl groups preferably used in the invention include biphenyl, tolyl, xylyl, mesityl, cumenyl, chlorophenyl, bromophenyl, fluorophenyl, chloro- methyl-phenyl, trifluoromethyl-phenyl, hydroxyphenyl, methoxy-phenyl, methoxy- ethoxy-phenyl, allyloxy-phenyl, phenoxy-phenyl, methylthio-phenyl, tolyl-thio- phenyl, phenylthio-phenyl, ethylamino-phenyl, diethylamino-phenyl, morpholino- phenyl, acetyloxy-phenyl, benzoyloxy-phenyl, N-cyclohexyl-carbamoyloxy-phenyl, N-phenyl-carbamoyloxyphenyl, acetylaminophenyl, N-methylbenzoyl-amino-phenyl, carboxyphenyl, methoxy-carboxyphenyl, allyloxy-carboxyphenyl, chloro-phenoxy- carboxyphenyl, carbamoylphenyl, N-methyl-carbamoylphenyl, N,N-di-propyl- carbamoylphenyl, N-(methoxyphenyl)-carbamoylphenyl, N-methyl-N-(sulfophenyl) carbamoylphenyl, sulfophenyl, sulfonato-phenyl, sulfamoyl-phenyl, N-ethylsulfamoyl-phenyl, N,N-dipropyl-sulfamoylphenyl, N-tolyl-sulfamoylphenyl, N-methyl-N-(phosphonophenyl) sulfamoylphenyl, phosphonophenyl, phosphonato-phenyl, diethyl-phosphono-phenyl, diphenyl-phosphono-phenyl, methyl-phosphono- phenyl, methyl-phosphonato-phenyl, tolyl-phosphonophenyl, tolyl-phosphonato- phenyl, allyl, 1-propenyl-methyl, 2-butenyl, 2-methylallyl-phenyl, 2-methyl- propenylphenyl, 2-propynylphenyl, 2-butynylphenyl and 3-butynylphenyl, groups.

The alkenyl groups (v) may be, for instance, those listed above. The substituted alkenyl group (vi) is an alkenyl group in which one or more of the hydrogen atoms thereof are replaced with one or more of substituents and the substituent may be, for instance, those discussed above in connection with the substituted alkyl group. On the other hand, the alkenyl groups in this case may be those described above. Examples of such substituted alkenyl groups preferably used herein include those represented by the following structural formulas:

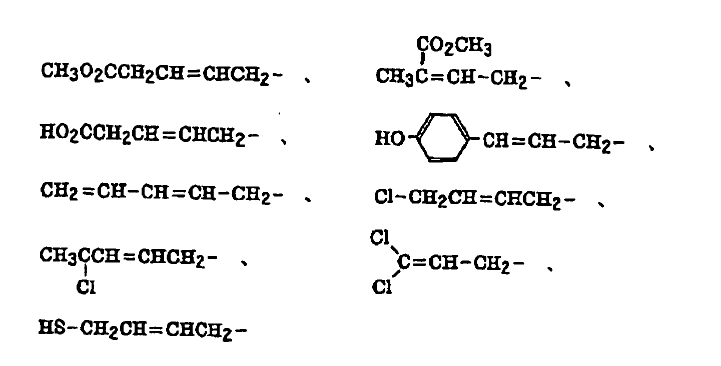

The alkynyl group (vii) may be, for instance, those described above. The substituted alkynyl group (viii) is an alkynyl group in which one or more of the hydrogen atoms of an alkynyl group are replaced with one or more of substituents and such substituents may be, for instance, those described above in connection with the substituted alkyl group. On the other hand, the alkynyl groups may be those described above.

The "hetero ring-containing group" used in this specification may be, for instance, a monovalent group obtained by removing one hydrogen atom present on the hetero ring, and a monovalent group obtained by further replacing a hydrogen atom present on the foregoing monovalent group with a substituent selected from those described above in connection with the substituted alkyl group (substituted hetero ring-containing group). Examples of preferred hetero rings are those represented by the following chemical formulas:

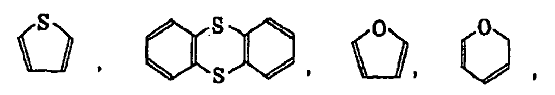

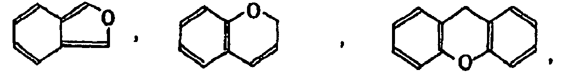

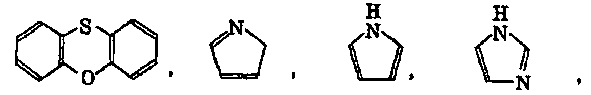

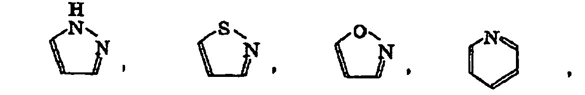

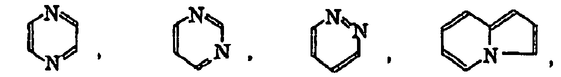

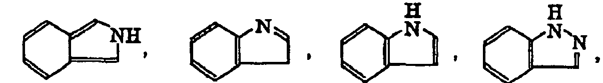

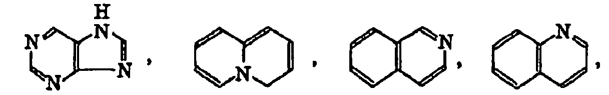

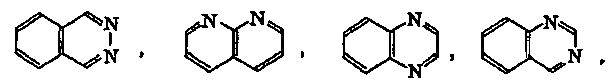

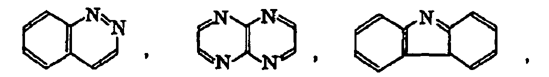

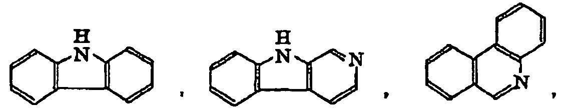

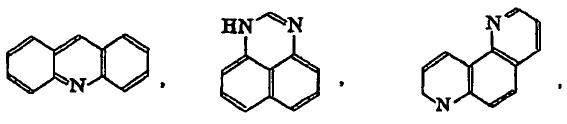

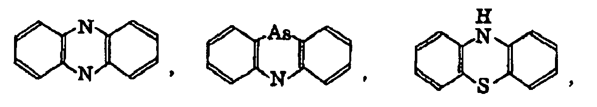

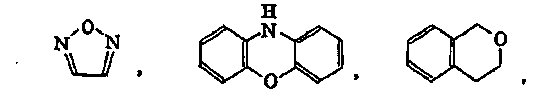

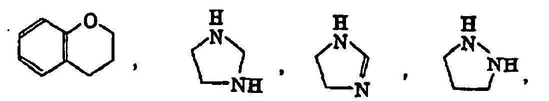

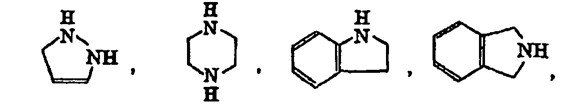

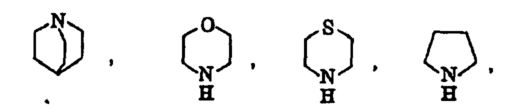

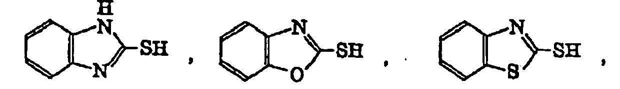

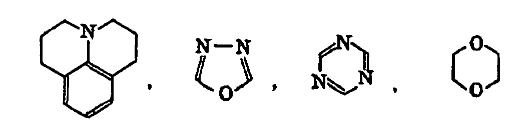

The substituted oxy group used in this specification can be represented by the general formula: R⁵O-, wherein R⁵ represents a monovalent nonmetal atomic group except for hydrogen atom. Examples of preferred substituted oxy groups include alkoxy, aryloxy, acyloxy, carbamoyloxy, N-alkyl-carbamoyloxy, N-aryl-carbamoyloxy, N,N-dialkyl-carbamoyloxy, N,N-diaryl-carbamoyloxy, N-alkyl-N-aryl-carbamoyloxy, alkylsulfoxy, arylsulfoxy, phosphono-oxy and phosphonato-oxy groups. In this respect, the alkyl and aryl groups in these groups may be alkyl and substituted alkyl groups and aryl and substituted aryl groups, as has been described above. The acyl group present in the acyloxy group may be one represented by the following general formula: R⁶CO-, wherein R⁶ may be an alkyl or a substituted alkyl group, or an aryl or a substituted aryl group, as has been described above. Among these substituents, more preferably used herein are alkoxy, aryloxy, acyloxy and arylsulfoxy groups. Specific examples of substituted oxy groups preferably used herein include methoxy, ethoxy, propyloxy, isopropyloxy, butyloxy, pentyloxy, hexyloxy, dodecyloxy, benzyloxy, allyloxy, phenethyloxy, carboxy-ethyloxy, methoxy- carbonylethyloxy, ethoxycarbonyl-ethyloxy, methoxyethoxy, phenoxyethoxy, methoxy-ethoxyethoxy, ethoxy-ethoxyethoxy, morpholino-ethoxy, morpholinopropyl- oxy, allyloxy-ethoxyethoxy, phenoxy, tolyloxy, xylyloxy, mesityloxy, cumenyloxy, methoxy-phenyloxy, ethoxy-phenyloxy, chlorophenyl-oxy, bromophenyl-oxy, acetyloxy, benzoyloxy, naphthyloxy, phenyl-sulfonyloxy, phosphono-oxy and phosphonato- oxy groups.

The substituted thio group used herein and disclosed in this specification is one represented by the following general formula: R⁷S-, wherein R⁷ represents a monovalent non-metal atomic group except for hydrogen atom. Examples of preferred substituted thio groups are alkylthio, arylthio, alkyldithio, aryldithio and acylthio groups. In this respect, the alkyl and aryl groups in these groups may be alkyl and substituted alkyl groups and aryl and substituted aryl groups, as has been described above and the substituent R⁶ appearing in the acyl group (R⁶CO-) present in the acylthio group may be the same as that specified above. Among these, more preferably used herein are alkylthio and arylthio groups among others. Specific examples of preferred substituted thio groups are methylthio, ethylthio, phenylthio, ethoxy-ethylthio, carboxy-ethylthio and methoxycarbonyl-thio groups.

The substituted amino group used herein and disclosed in this specification is one represented by the following general formula: R⁸NH- or (R⁹)(R¹⁰)N-, wherein R⁸, R⁹ and R¹⁰ each represents a monovalent non-metal atomic group except for hydrogen atom. Examples of such substituted amino groups preferably used in the invention include N-alkylamino, N,N-dialkylamino, N-arylamino, N,N-diarylamino, N-alkyl-N-arylamino, acylamino, N-alkyl-acylamino, N-aryl-acylamino, ureido, N'-alkylureido, N',N'-dialkyl-ureido, N'-arylureido, N',N'-diaryl-ureido, N'-alkyl-N'- arylureido, N-alkylureido, N-arylureido, N'-alkyl-N-alkylureido, N'-alkyl-N-aryl- ureido, N',N'-dialkyl-N-alkylureido, N',N'-dialkyl-N-arylureido, N'-aryl-N-alkyl- ureido, N'-aryl-N-arylureido, N',N'-diaryl-N-alkylureido, N',N'-diaryl-N-arylureido, N'-alkyl-N'-aryl-N-alkylureido, N'-alkyl-N'-aryl-N-arylureido, alkoxy-carbonylamino, aryloxy-carbonylamino, N-alkyl-N-alkoxy-carbonylamino, N-alkyl-N-aryloxy -carbonylamino, N-aryl-N-alkoxy-carbonylamino and N-aryl-N-aryloxy-carbonyl- amino groups. In this respect, the alkyl and aryl groups in these groups may be alkyl and substituted alkyl groups and aryl and substituted aryl groups, as has been described above. Moreover, the acyl group present in the acylamino, N-alkyl-acylamino, and N-aryl-acylamino groups may be one represented by the following general formula: R⁶CO-, wherein R⁶ may be the same as that defined above. Among these, more preferably used herein are N-alkylamino, N,N-dialkyl- amino, N-arylamino, and acylamino groups. Examples of preferred substituted amino groups are methylamino, ethylamino, diethylamino, morpholino, piperidino, pyrrolidino, phenylamino, benzoylamino and acetylamino groups.

The substituted carbonyl group used herein and disclosed in this specification may be one represented by the following general formula: R¹¹CO-, wherein R¹¹ represents a monovalent non-metal atomic group. Examples of such substituted carbonyl groups preferably used in the invention are formyl, acyl, carboxyl, alkoxycarbonyl, aryloxycarbonyl, carbamoyl, N-alkyl-carbamoyl, N,N-di-alkyl- carbamoyl, N-aryl-carbamoyl, N,N-diaryl-carbamoyl and N-alkyl-N-aryl-carbamoyl groups. In this respect, the alkyl and aryl groups in these groups may be alkyl and substituted alkyl groups and aryl and substituted aryl groups, as has been described above. Among them, more preferably used substituted carbonyl groups are formyl, acyl, carboxyl, alkoxycarbonyl, aryloxycarbonyl, carbamoyl, N-alkyl- carbamoyl, N,N-di- alkyl-carbamoyl and N-aryl-carbamoyl groups, with formyl, acyl, alkoxycarbonyl and aryloxycarbonyl being more preferably used in the invention. Specific examples of substituted carbonyl groups preferably used herein are formyl, acetyl, benzoyl, carboxyl, methoxycarbonyl, allyloxy-carbonyl, N-methyl-carbamoyl, N-phenyl-carbamoyl, N,N-diethyl-carbamoyl and morpholino-carbonyl groups.

The substituted sulfinyl group used herein and described in this specification may be one represented by the following general formula: R¹²SO-, wherein R¹² represents a monovalent non-metal atomic group. Examples thereof preferably used herein are alkylsulfinyl, arylsulfinyl, sulfinamoyl, N-alkyl-sulfinamoyl, N,N-di- alkyl-sulfinamoyl, N-aryl-sulfinamoyl, N,N-diaryl-sulfinamoyl and N-alkyl-N-aryl- sulfinamoyl groups. In this respect, the alkyl and aryl groups in these groups may be alkyl and substituted alkyl groups and aryl and substituted aryl groups, as has been described above. Among these examples, more preferably used in the present invention are alkylsulfinyl groups and arylsulfinyl groups. Specific examples of such substituted sulfinyl groups include hexyl-sulfinyl group, benzyl-sulfinyl group and tolyl-sulfinyl group.

The substituted sulfonyl group used herein and described in this specification may be one represented by the following general formula: R¹³-SO₂-, wherein R¹³ represents a monovalent non-metal atomic group. More preferably used herein may be, for instance, alkylsulfonyl and arylsulfonyl groups. In this respect, the alkyl and aryl groups in these groups may be alkyl and substituted alkyl groups and aryl and substituted aryl groups, as has been described above. Specific examples of such substituted sulfonyl groups are butyl-sulfonyl and chlorophenyl-sulfonyl groups.

As has been discussed above, the sulfonate group (-SO₃-) used in the specification means anionic conjugated base groups derived from sulfo group (-SO₃H) and preferably, it is usually used in combination with a counter cation thereof. Such counter cations may be, for instance, currently known ones or a variety of onium ions (such as ammoniums, sulfoniums, phosphoniums, iodoniums and aziniums) and metal ions (such as Na⁺, K⁺, Ca²⁺ and Zn²⁺).

As has been discussed above, the carboxylate group (-CO₂-) used in this specification means anionic conjugated base groups derived from a carboxyl group (-CO₂H). Preferably, it is usually used in combination with a counter cation thereof. In this respect, such counter cations may be, for instance, currently known ones or a variety of onium ions (such as ammoniums, sulfoniums, phosphoniums, iodoniums and aziniums) and metal ions (such as Na⁺, K⁺, Ca²⁺ and Zn²⁺).

The substituted phosphono group used in the specification means a group corresponding to a phosphono group in which one or two hydroxyl groups present thereon are substituted with one or two other organic oxo groups and preferred examples thereof include dialkyl-phosphono, diaryl-phosphono, alkylaryl-phosphono, mono-alkyl-phosphono and monoaryl-phosphono groups. Among these phosphono groups, more preferably used herein are dialkyl-phosphono and diaryl-phosphono groups. Specific examples of such substituted phosphono groups include diethyl-phosphono, dibutyl-phosphono and diphenyl-phosphono groups.

The phosphonate group (-PO₃²⁻, -PO₃H⁻) used in this specification means an anionic conjugated base group derived from the acid-primary or secondary dissociation of a phosphono group (-PO₃H₂), as has been described above. Preferably, it is usually used in combination with a counter cation thereof. Such counter cations may be, for instance, currently known ones or a variety of onium ions (such as ammoniums, sulfoniums, phosphoniums, iodoniums and aziniums) and metal ions (such as Na⁺, K⁺, Ca²⁺ and Zn²⁺).

The substituted phosphonate group used in this specification means an anionic conjugated base group derived from a product obtained by replacing, with an organic oxo group, one of the hydroxyl groups present in the foregoing substituted phosphono group and specific examples thereof are conjugated bases of monoalkyl-phosphono groups (-PO₃H(alkyl)) and monoaryl-phosphono groups (-PO₃H(aryl)) as has been described above. Preferably, it is usually used in combination with a counter cation thereof. Such counter cations may be, for instance, currently known ones, or a variety of onium ions (such as ammoniums, sulfoniums, phosphoniums, iodoniums and aziniums) and metal ions (such as Na⁺, K⁺, Ca²⁺ and Zn²⁺). (or X¹)

Then examples of the ring structures formed from the pairs of X (or X¹) and Y (or Y¹); R^{a} (or R^{a1}) and R^{b} (or R^{b1}); and X (or X¹) and R^{a} (or R^{a1}) or R^{b} (or R^{b1}) linked together will be given below. The rings may be, for instance, 5-, 6-, 7- and 8-membered aliphatic rings and more preferably 5- and 6-membered aliphatic rings. These rings each may further have a substituent on a carbon atom constituting the same (examples of such substituents are those listed above in connection with the substituted alkyl group), or a part of the ring-forming carbon atoms may be replaced with a hetero atom (such as an oxygen, sulfur or nitrogen atom). Furthermore, a part of the aliphatic ring may form a part of an aromatic ring.

In the polymerization initiator having the structure represented by Formula (I), the structure for initiating polymerization (hereunder referred to as "initiator structure") are, for instance, those derived from (a) aromatic ketones, (b) aromatic onium salt compounds, (c) organic peroxides, (d) thio compounds, (e) hexaaryl- biimidazole compounds, (f) ketoxime ester compounds, (g) borate compounds, (h) azinium compounds, (i) metallocene compounds, (j) activated ester compounds, (k) carbon-halogen bond-containing compounds. The structure represented by Formula (I) is preferably linked to the initiator structure at the position of X or Y. On the other hand, the initiator structure may be linked to the structure of Formula (I) at any position thereof inasmuch as the resulting composition can surely ensure the intended effect of the present invention.

In this respect, a connecting group may be present between the structure represented by Formula (I) and the initiator structure. Such a connecting group may be, for instance, an alkylene group having 1 to 10 carbon atoms which may comprise an oxygen, nitrogen or sulfur atom or a single bond.

Then the initiator structure of the polymerization initiator having the structure represented by Formula (I) or (II) will be described below in detail. Examples of such initiator structures preferably used in the invention are (a) aromatic ketones, (b) aromatic onium salt compounds, (c) organic peroxides, (d) thio compounds, (e) hexaaryl-biimidazole compounds, (f) ketoxime ester compounds, (g) borate compounds, (h) azinium compounds, (i) metallocene compounds, (j) activated ester compounds, (k) carbon-halogen bond-containing compounds, as has been described above.

Preferably, the polymerization initiator for the initiator structure is selected from the group consisting of (a) aromatic ketones, (b) aromatic onium salt compounds, (f) ketoxime ester compounds, and (k) carbon-halogen bond-containing compounds.

More preferably, (a) aromatic ketones are represented by the following general formula Rd-1: 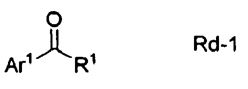 wherein Ar¹ is an optionally substituted C6-C18 aromatic hydrocarbon, and R¹ is an optionally substituted C1-C18 hydrocarbons. Examples of substituents in the definition of Ar¹ and R¹ include those listed above as substituents in the "(ii) substituted alkyl group".

More preferably, (f) ketoxime ester compounds are represented by the following general formula Rd-2: 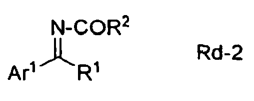 wherein Ar¹ is an optionally substituted C6-C18 aromatic hydrocarbon, and R¹ and R² independently represent an optionally substituted C1-C18 hydrocarbons. Examples of substituents in the definition of Ar¹, R¹ and R² include those listed above as substituents in the "(ii) substituted alkyl group".

More preferably, (b) aromatic onium salt compounds are represented by the following general formula Rd-3, Rd-4, Rd-5 or Rd-6: 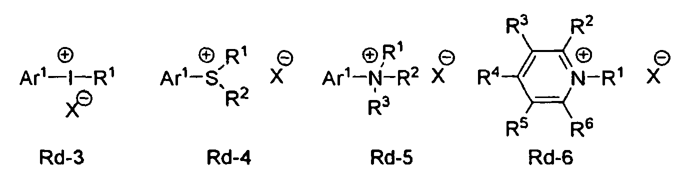 wherein Ar¹ is an optionally substituted C6-C18 aromatic hydrocarbon, R¹, R², R³, R⁴, R⁵, R⁶ independently represent an optionally substituted C1-C18 hydrocarbons, and X represents a counter anion. Examples of substituents in the definition of Ar¹, R¹, R², R³, R⁴, R⁵ and R⁶ include those listed above as substituents in the "(ii) substituted alkyl group".

More preferably, (k) carbon-halogen bond-containing compounds are represented by the following general formula Rd-7:

Ar²(̵CCl₃)ₙ Rd-7

wherein Ar² is an optionally substituted C6-C18 hetero atom-containing aromatic hydrocarbon, and n is an integer from 1 to 3. Examples of substituents in the definition of Ar² include those listed above as substituents in the "(ii) substituted alkyl group".

Preferred examples of the aromatic ketones (a) are benzophenone or thioxanthone skeleton-containing compounds disclosed in J.P. FOUASSIER, J.F. RABEK, "Radiation Curing in Polymer Science and Technology", 1993, pp. 77-117, for instance, those represented by the following chemical formulas:

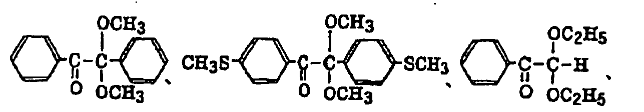

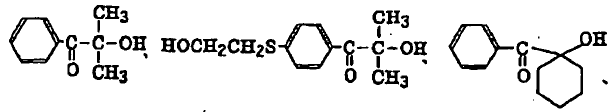

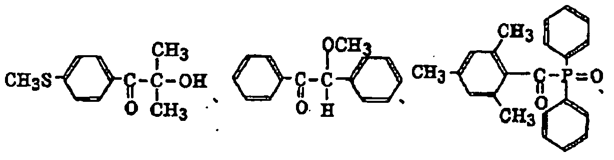

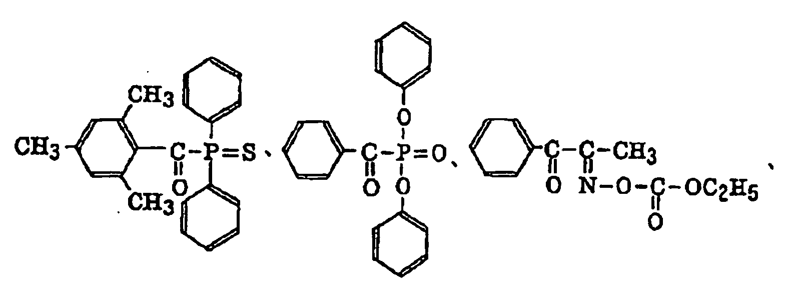

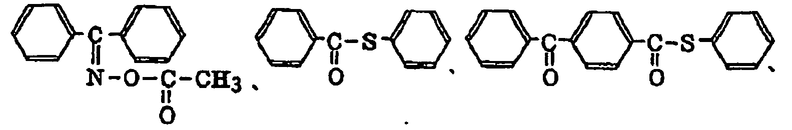

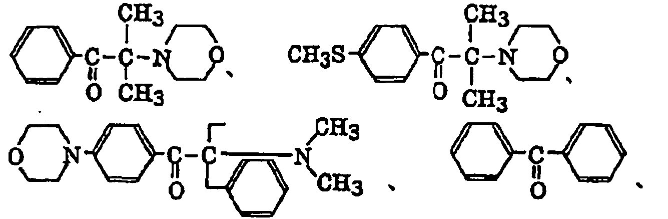

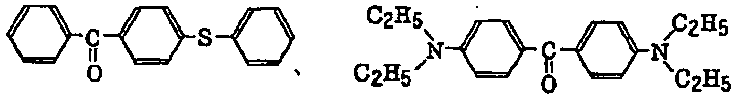

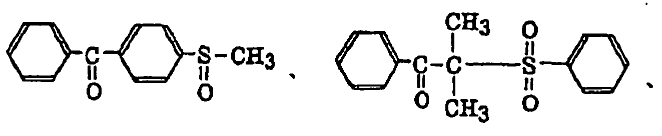

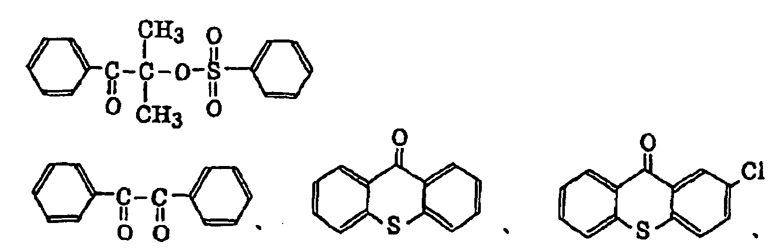

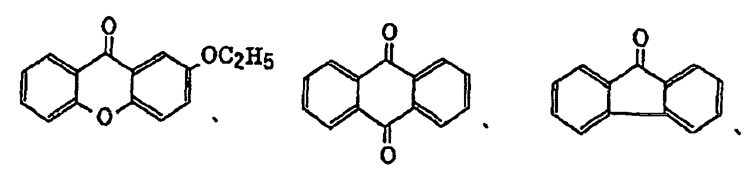

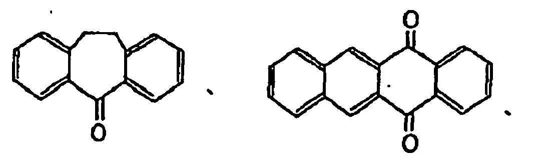

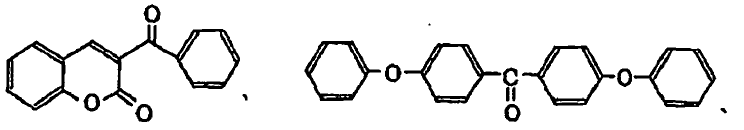

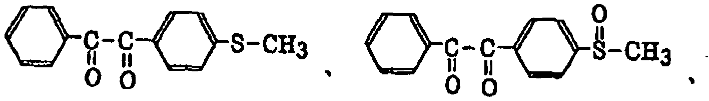

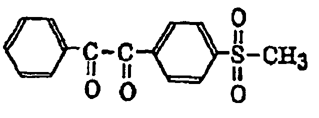

Examples of the aromatic ketones (a) more preferably used herein are those listed below:

*α* Thiobenzophenone compounds disclosed in Japanese Examined Patent Publication (hereunder referred to as "J.P. KOKOKU") Sho 47-6416 and benzoin ether compounds disclosed in J.P. KOKOKU Sho 47-3981 such as those represented by the following chemical formulas:

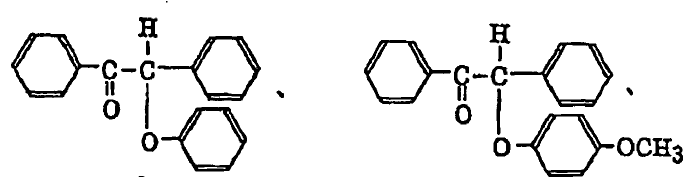

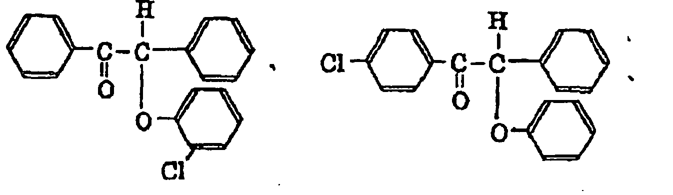

*α* -Substituted benzoin compounds disclosed in J.P. KOKOKU Sho 47-22326 such as those represented by the following chemical formulas:

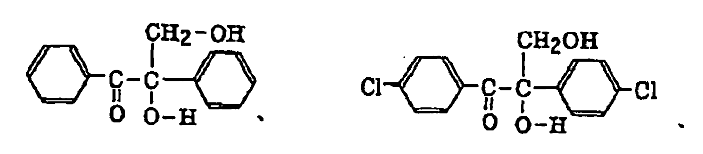

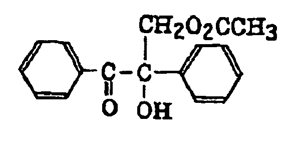

Benzoin derivatives disclosed in J.P. KOKOKU Sho 47-23664, aroylphosphonic acid esters disclosed in J.P. KOKAI Sho 57-30704 and dialkoxybenzophenones disclosed in J.P. KOKOKU Sho 60-26483 such as those represented by the following chemical formulas:

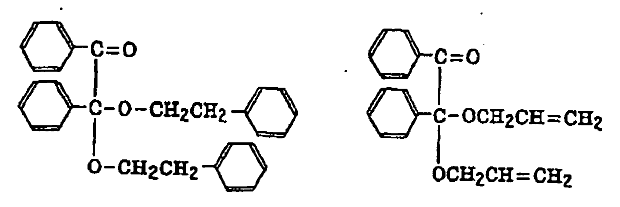

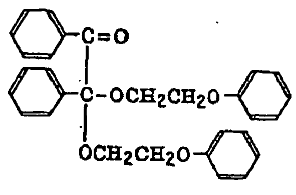

Benzoin ethers disclosed in J.P. KOKOKU Sho 60-26403 and J.P. KOKAI Sho 62-81345 such as those represented by the following chemical formulas:

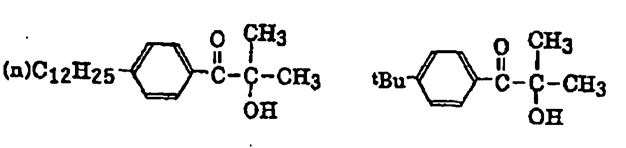

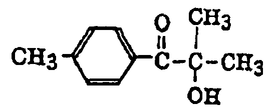

*α* -Amino-benzophenones disclosed in J.P. KOKOKU Hei 1-34242, United States Patent (hereunder referred to as "USP") No. 4,318,791 and European Patent (hereunder referred to as "EP") No. 0284561A1 such as those represented by the following chemical formulas:

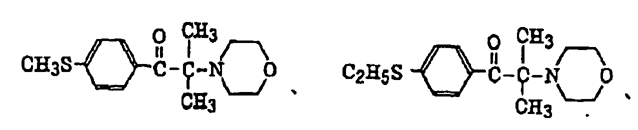

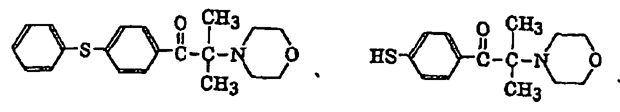

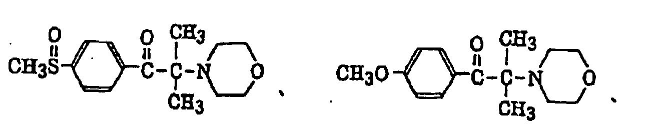

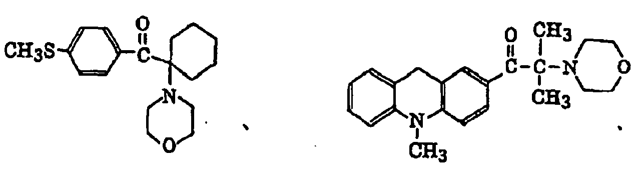

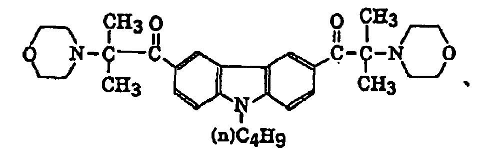

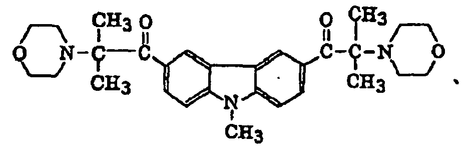

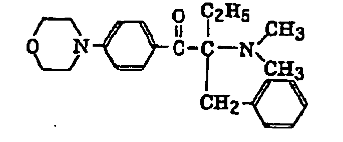

p-Di(dimethyl-aminobenzoyl) benzene disclosed in J.P. KOKAI Hei 2-211452 such as those represented by the following chemical formulas:

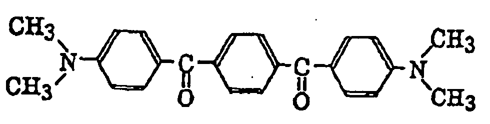

Thio-substituted aromatic ketones disclosed in J.P. KOKAI Sho 61-194062 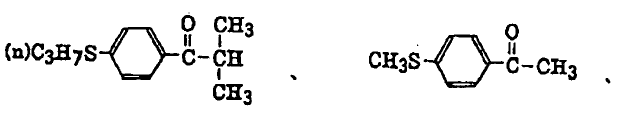 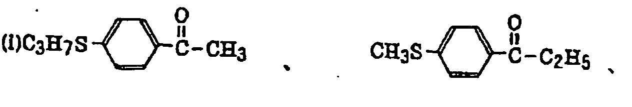 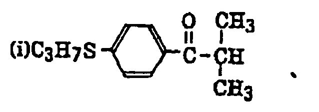 such as those represented by the following chemical formulas:

Acyl-phosphine sulfides disclosed in J.P. KOKOKU Hei 2-9597 such as those represented by the following chemical formulas:

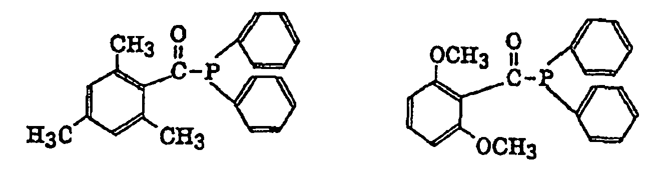

Acyl-phosphines disclosed in J.P. KOKOKU Hei 2-9596 such as those represented by the following chemical formulas: 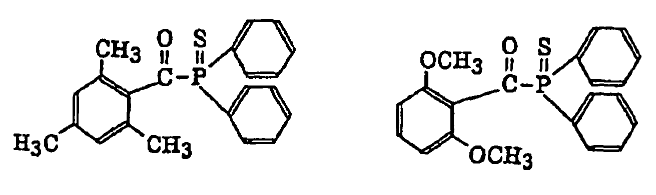 and thioxanthones disclosed in J.P. KOKOKU Sho 63-61950 and coumarins disclosed in J.P. KOKOKU Sho 59-42864.

Moreover, examples of the foregoing aromatic onium salts (b) as another origin of the initiator structures include aromatic onium salts with elements belonging to Groups V, VI and VII of Periodic Table such as N, P, As, Sb, Bi, O, S, Se, Te, or I. Examples of such aromatic onium salts include compounds disclosed in J.P. KOKOKU Nos. Sho 52-14277, Sho 52-14278 and Sho 52-14279. Specific examples thereof are those listed below:

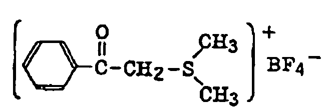

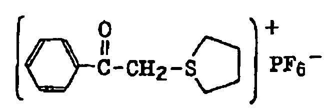

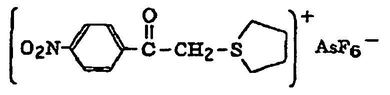

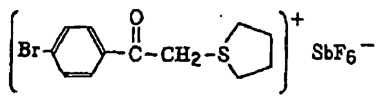

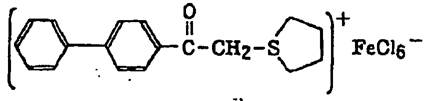

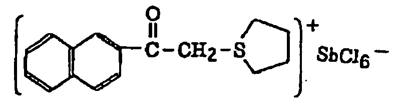

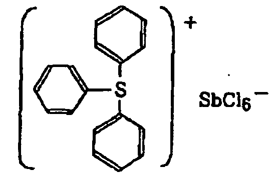

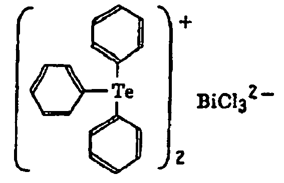

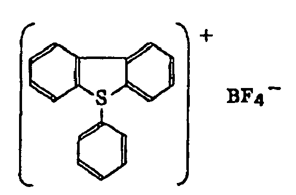

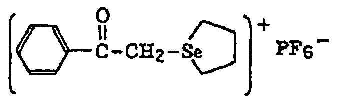

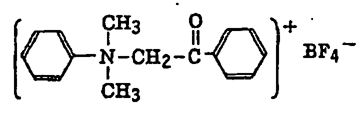

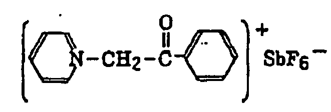

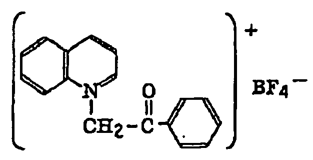

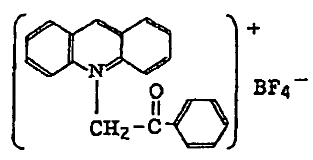

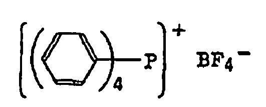

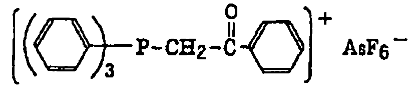

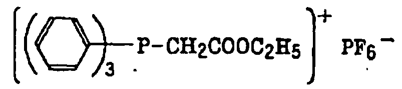

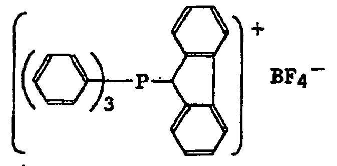

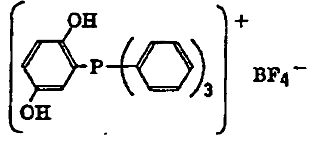

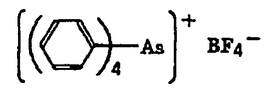

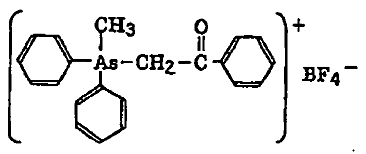

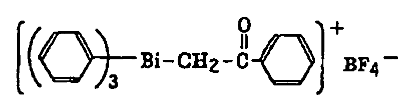

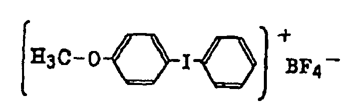

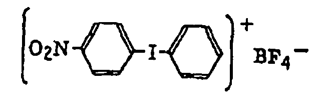

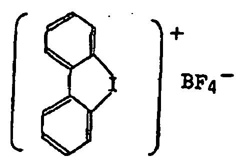

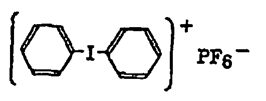

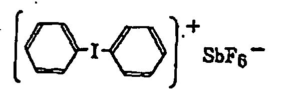

Further examples likewise usable herein include, for instance, the following diazonium salts:

### (Diazonium Salts or Quinone-diazide)

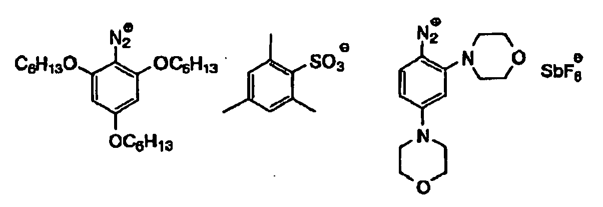

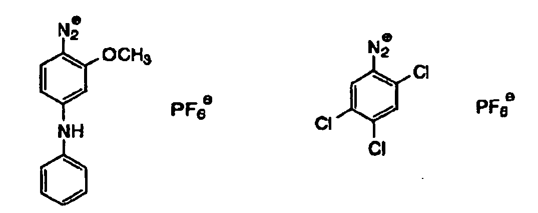

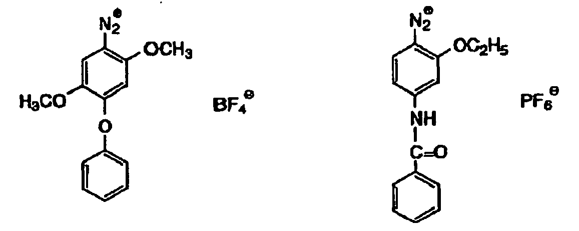

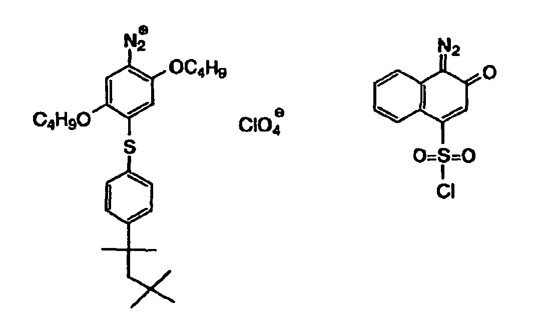

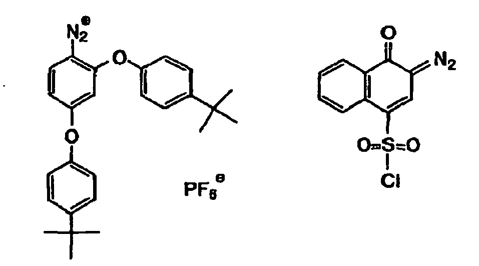

The "organic peroxides" (c) as a further example of the polymerization initiator which can provide the initiator structure used in the present invention may include almost all of the organic compounds each having at least one oxygen-oxygen bond within the molecule and specific examples thereof are methyl ethyl ketone peroxide, cyclohexanone peroxide, 3,3,5-trimethyl-cyclohexanone peroxide, methyl-cyclohexanone peroxide, acetylacetone peroxide, 1,1-bis(t-butylperoxy)-3,3,5-trimethyl-cyclohexane, 1,1-bis(t-butyl-peroxy)-cyclohexane, 2,2-bis(t- butylperoxy)-butane, t-butyl-hydroperoxide, cumene hydroperoxide, di-isopropyl- benzene hydroperoxide, paramethane hydroperoxide, 2,5-dimethylhexane-2,5-di- hydroperoxide, 1,1,3,3-tetramethyl-butyl hydroperoxide, di-t-butyl peroxide, t-butyl-cumyl peroxide, di-cumyl peroxide, bis(t-butylperoxy-isopropyl) benzene, 2,5-dimethyl-2,5-di(t-butylperoxy) hexane, 2,5-xylenecarbonyl peroxide, succinic acid peroxide, benzoyl peroxide, 2,4-dichlorobenzoyl peroxide, m-toluoyl peroxide, diisopropyl-peroxy dicarbonate, di-2-ethylhexyl peroxy-dicarbonate, di-2-ethoxy- ethyl peroxy-dicarbonate, dimethoxy-isopropyl peroxy-dicarbonate, di-(3-methyl-3- methoxybutyl) peroxy-dicarbonate, t-butylperoxy acetate, t-butylperoxy pivalate, t-butylperoxy neodecanoate, t-butylperoxy octanoate, t-butylperoxy-3,5,5-trimethyl hexanoate, t-butylperoxy laurate, tertiary carbonate, 3,3',4,4'-tetra-(t-butylperoxy- carbonyl) benzophenone, 3,3',4,4'-tetra-(t-amylperoxy-carbonyl) benzophenone, 3,3',4,4'-tetra-(t-hexylperoxy-carbonyl) benzophenone, 3,3',4,4'-tetra-(t-octylperoxy- carbonyl) benzophenone, 3,3',4,4'-tetra-(cumylperoxy-carbonyl) benzophenone, 3,3',4,4'-tetra-(p-isopropyl-cumyl-peroxycarbonyl) benzophenone, carbonyl di-(t-butylperoxy-dihydrogen di-phthalate) and carbonyl di-(t-hexylperoxy-dihydrogen di-phthalate).

Among them, preferably used herein are peroxy esters such as 3,3',4,4'-tetra- (t-butyl-peroxycarbonyl) benzophenone, 3,3',4,4'-tetra-(t-amylperoxy-carbonyl) benzophenone, 3,3',4,4'-tetra-(t-hexylperoxy-carbonyl) benzophenone, 3,3',4,4'-tetra-(t-octylperoxy-carbonyl) benzophenone, 3,3',4,4'-tetra-(cumylperoxy-carbonyl) benzophenone, 3,3',4,4'-tetra-(p-isopropyl-cumyl-peroxycarbonyl) benzophenone, and di-t-butyl di-peroxy isophthalate.

The thio compounds (d) as polymerization initiators capable of providing the initiator structures used in the present invention are those represented by the following general formulas (II):

R²⁰-NH-C(R²¹)=S or R²⁰-N=C(R²¹)-SH (II)

(Wherein R²⁰ represents an aryl or substituted aryl group, and R²¹ represents a hydrogen atom or an alkyl group, provided that R²⁰ and R²¹ represent non-metal atomic groups capable of being bonded together to form a 5- to 7-membered ring which may comprise a hetero atom selected from oxygen, sulfur and nitrogen atoms).

The alkyl group present in the foregoing general formula (II) is preferably one having 1 to 4 carbon atoms. In addition, the aryl group is preferably one having 6 to 10 carbon atoms such as a phenyl or naphthyl group and the substituted aryl groups include, for instance, the foregoing aryl groups each substituted with a halogen atom, an alkyl group such as a methyl group, or an alkoxy group such as a methoxy or ethoxy group. R²¹ preferably represents an alkyl group having 1 to 4 carbon atoms. Specific examples of the thio compounds represented by the general formula (II) include those represented by the following compounds:

| No. | R²⁰ | R²¹ |
|---|---|---|
| 1 | H | H |
| 2 | H | CH₃ |
| 3 | CH₃ | H |
| 4 | CH₃ | CH₃ |
| 5 | C₆H₅ | C₂H₅ |
| 6 | C₆R₆ | C₄H₉ |
| 7 | C₆H₄Cl | CH₃ |
| 8 | C₆H₄Cl | C₄H₉ |
| 9 | C₆H₄-CH₃ | C₄H₉ |
| 10 | C₆H₄-OCH₃ | CH₃ |
| 11 | C₆H₄-OCH₃ | C₂H₅ |
| 12 | C₆H₄OC₂H₅ | CH₃ |
| 13 | C₆H₄OC₂H₅ | C₂H₅ |
| 14 | C₆H₄OCH₃ | C₄H₉ |
| 15 | 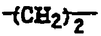 | |
| 16 | 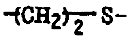 | |
| 17 | -CH(CH₃)-CH₂-S- | |
| 18 | -CH₂-CH(CH₃)-S- | |
| 19 | -C(CH₃)₂-CH₂-S- | |
| 20 | -CH₂-G(CH₃)₂-S- | |
| 21 | 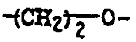 | |
| 22 | -CH(CH₃)-CH₂-O- | |
| 23 | -C(CH₃)₂-CH₂-O- | |
| 24 | -CH=CH-N(CH₃)- | |
| 25 | 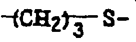 | |
| 26 | 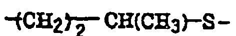 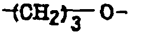 | |
| 27 | | |
| 28 | 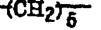 | |
| 29 | C₅H₄-O- | |
| 30 | -N=C(SCH₃)-S- | |
| 31 | -C₆H₄-NH- | |
| 32 | 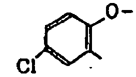 | |

The hexaaryl-biimidazole compounds (e) as further examples of the polymerization initiators capable of providing the initiator structures used in the present invention may be lophine dimers disclosed in J.P. KOKOKU Nos. Sho 45-37377 and Sho 44-86516 such as 2,2'-bis(o-chlorophenyl)-4,4'5,5'-tetraphenyl biimidazole, 2,2'-bis(o-bromophenyl)-4,4'5,5'-tetraphenyl biimidazole, 2,2'-bis(o,p-di- chlorophenyl)-4,4'5,5'-tetraphenyl biimidazole, 2,2'-bis(o-chlorophenyl)-4,4'5,5'- tetra-(m-methoxyphenyl) biimidazole, 2,2'-bis(o,o'-dichlorophenyl)-4,4'5,5'-tetra- phenyl biimidazole, 2,2'-bis(o-nitrophenyl)-4,4'5,5'-tetraphenyl biimidazole, 2,2'-bis-(o-methylphenyl)-4,4'5,5'-tetraphenyl biimidazole and 2,2'-bis(o-trifluorophenyl)-4,4'5,5'-tetraphenyl biimidazole.

The ketoxime ester compounds (f) as further examples of the polymerization initiators capable of providing the initiator structures used in the present invention may be, for instance, 3-benzoyloxy-iminobutan-2-one, 3-acetoxy-iminobutan-2-one, 3-propionyloxy-iminobutan-2-one, 2-acetoxyimino-pentan-3-one, 2-acetoxyimino-1- phenylpropan-1-one, 2-benzoyloxyimino-1-phenylpropan-1-one, 3-p-toluenesulfonyl-oxyiminobutan-2-one, and 2-ethoxycarbonyloxyimino-1-phenylpropan-1-one.

Examples of the borate salts (g) as further examples of the polymerization initiators capable of providing the initiator structures used in the present invention include compounds represented by the following general formula (III):

R²²-B·(R²³)(R²⁴)-R²⁵ Z⁺ (III)

(Wherein R²², R²³, R²⁴ and R²⁵ may be the same or different from one another and each independently represents a substituted or unsubstituted alkyl group, a substituted or unsubstituted aryl group, a substituted or unsubstituted alkenyl group, a substituted or unsubstituted alkynyl group, or a substituted or unsubstituted heterocyclic group, or at least two of these substituents R²², R²³, R²⁴ and R²⁵ may be bonded together to form a ring-like structure, provided that at least one of these substituents R²², R²³, R²⁴ and R²⁵ represents a substituted or unsubstituted alkyl group. Z⁺ represents an alkali metal cation or a quaternary ammonium cation). The alkyl groups represented by the foregoing substituents R²² to R²⁵may be linear, branched or cyclic ones and preferably those having 1 to 18 carbon atoms. Specific examples thereof are methyl, ethyl, propyl, isopropyl, butyl, pentyl, hexyl, octyl, stearyl, cyclobutyl, cyclopentyl, and cyclohexyl groups. In addition, examples of the substituted alkyl groups are alkyl groups listed above which are substituted with the following substituents: halogen atoms (such as -Cl, and -Br), cyano group, nitro group, aryl groups (preferably phenyl group), hydroxyl group, the group represented by the following general formula: -N(R²⁶)(R²⁷) (wherein R²⁶ and R²⁷ each independently represents a hydrogen atom, an alkyl group having 1 to 14 carbon atoms or an aryl group), -COOR²⁸ (wherein R²⁸ represents a hydrogen atom, an alkyl group having 1 to 14 carbon atoms or an aryl group), -OCOR²⁹ or -OR³⁰ (wherein each of R²⁹ and R³⁰ represents an alkyl group having 1 to 14 carbon atoms or an aryl group). The aryl groups represented by R²² to R²⁵ may be, for instance, monocyclic to tricyclic aryl groups such as phenyl and naphthyl groups and the substituted aryl groups may be, for instance, those described above which are substituted with substituents such as those listed above in connection with the substituted alkyl groups, or alkyl groups having 1 to 14 carbon atoms. The alkenyl groups represented by the foregoing substituents R²² to R²⁵ may be linear, branched or cyclic ones having 2 to 18 carbon atoms and examples of substituents for the substituted alkenyl groups may be, for instance, those listed above in connection with the substituted alkyl groups. The alkynyl groups represented by the foregoing substituents R²² to R²⁵may be linear or branched ones having 2 to 28 carbon atoms and examples of substituents for the substituted alkynyl groups may be, for instance, those listed above in connection with the substituted alkyl groups. The heterocyclic groups represented by the foregoing substituents R²² to R²⁵ may be, for instance, 5-membered or higher heterocyclic groups each having at least one member selected from N, S and O and preferably 5- to 7-membered heterocyclic groups and these heterocyclic groups each may comprise a fused ring. Moreover, each of thee heterocyclic group may further comprise a substituent selected from those listed above in connection with the substituted aryl groups. Specific examples of the compounds represented by Formula (III) those disclosed in USP Nos. 3,567,453 and 4,343,891 and EP Nos. 109,772 and 109,773; and those listed below:

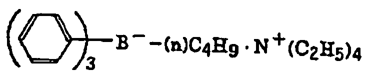

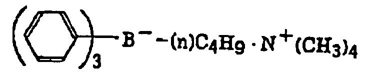

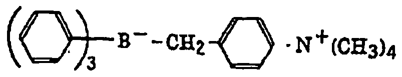

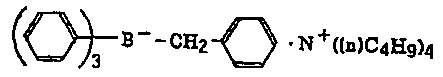

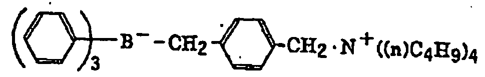

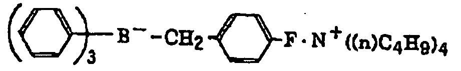

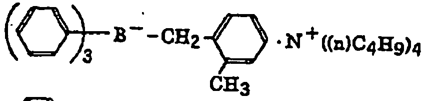

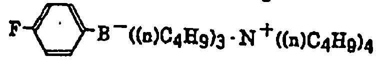

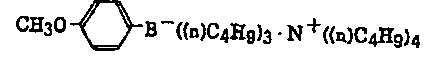

The azinium compounds (h) as further examples of the polymerization initiators capable of providing the initiator structures used in the present invention include, for instance, a group of N-O bond-containing compounds disclosed in J.P. KOKAI Nos. Sho 63-138345, Sho 63-142345 and Sho 63-142346 and 63-143537 and J.P. KOKOKU Sho 46-42363.

The metallocene compounds (i) as further examples of the polymerization initiators capable of providing the initiator structures include, for instance, titanocene compounds disclosed in J.P. KOKAI Nos. Sho 59-152396, Sho 61-151197, Sho 63-41484, Hei 2-249 and Hei 2-4705; and iron-arene complexes disclosed in J.P. KOKAI Nos. Hei 1-304453 and Hei 1-152109.

Specific examples of the foregoing titanocene compounds include di-cyclopentadienyl-Ti-di-chloride, di-cyclopentadienyl-Ti-bis-phenyl, di-cyclopentadienyl-Ti-bis-2,3,4,5,6-pentafluorophen-1-yl, di-cyclopentadienyl-Ti-bis-2,3,5,6-tetrafluoro- phen-1-yl, di-cyclopentadienyl-Ti-bis-2,4,6-trifluorophen-1-yl, di-cyclopentadienyl-Ti-2,6-difluorophen-1-yl, di-cyclopentadienyl-Ti-bis-2,4-difluorophen-1-yl, dimethyl- cyclopentadienyl-Ti-bis-2,3,4,5,6-pentafluorophen-1-yl, dimethyl-cyclopentadienyl- Ti-bis-2,3,5,6-tetrafluorophen-1-yl, di-methyl-cyclopentadienyl-Ti-bis-2,4-diffuoro- phen-1-yl, bis(cyclopentadienyl)-bis[2,6-difluoro-3-(pyr-1-yl) phenyl] titanium, bis-(cyclopentadienyl)-bis[2,6-difluoro-3-(methyl-sulfonamide) phenyl] titanium, bis-(cyclopentadienyl)-bis[2,6-difluoro-3-(N-butyl-biaroyl-amino) phenyl] titanium, bis- (cyclopentadienyl)-bis[2,6-difluoro-3-(N-ethylacetyl-amino) phenyl] titanium, bis- (cydopentadienyl)-bis[2,6-difluoro-3-(N-methylacetyl-amino) phenyl] titanium, bis- (cyclopentadienyl)-bis[2,G-difluoro-3-(N-ethyl-propionyl-amino) phenyl] titanium, bis(cyclopentadienyl)-bis[2,6-difluoro-3-(N-ethyl-(2,2-dimethyl-butanoyl) amino) phenyl] titanium, bis(cyclopentadienyl)-bis[2,6-difluoro-3-(N-butyl-(2,2-dimethylbutanoyl) amino) phenyl] titanium, bis(cyclopentadienyl)-bis[2,6-difluoro-3-(N-pentyl-(2,2-dimethylbutanoyl) amino) phenyl] titanium, bis(cyclopentadienyl)-bis-[2,6-difluoro-3-(N-hexyl)-(2,2-dimethylbutanoyl) phenyl] titanium, bis(cyclopentadienyl)-bis[2,6-difluoro-3-(N-methyl-butyryl-amino) phenyl] titanium, bis(cyclopentadienyl)-bis[2,6-difluoro-3-(N-methyl-pentanoyl-amino) phenyl] titanium, bis-(cyclopentadienyl)-bis[2,6-difluoro-3-(N-ethylcyclohexyl-carbonylamino) phenyl] titanium, bis(cyclopentadienyl)-bis[2,6-difluoro-3-(N-ethyl-isobutyryl-amino) phenyl] titanium, bis(cyclopentadienyl)-bis[2,6-difluoro-3-(N-ethylacetyl-amino) phenyl] titanium, bis(cyclopentadienyl)-bis[2,6-difluoro-3-(2,2,5,5-tetramethyl-1,2,5-azadisilolidin-1-yl) phenyl] titanium, bis(cyclopentadienyl)-bis[2,6-difluoro-3-(octyl-sulfonamide) phenyl] titanium, bis(cyclopentadienyl)-bis[2,6-difluoro-3-(4- tolyl-sulfonamide) phenyl] titanium, bis(cyclopentadienyl)-bis[2,6-difluoro-3-(4- dodecylphenyl-sulfonamide) phenyl] titanium, bis(cyclopentadienyl)-bis[2,6-di- fluoro-3-(4-(1-pentylheptyl) phenyl-sulfonamide) phenyl] titanium, bis(cyclopentadienyl)-bis[2,6-difluoro-3-(ethyl-sulfonylamide) phenyl] titanium, bis(cyclopentadienyl)-bis[2,6-difluoro-3-((4-bromophenyl)-sulfonylamide) phenyl] titanium, bis-(cyclopentadienyl)-bis[2,6-difluoro-3-(2-naphthyl-sulfonylamide) phenyl] titanium, bis(cyclopentadienyl)-bis[2,6-diffuoro-3-(hexadecyl-sulfonylamide) phenyl] titanium, bis(cyclopentadienyl)-bis[2,6-difluoro-3-(N-methyl-(4-dodecylphenyl) sulfonylamide) phenyl] titanium, bis(cyclopentadienyl)-bis[2,6-difluoro-3-(N-methyl-4-(1-pentyl- heptyl) phenyl) sulfonylamide] titanium, bis(cyclopentadienyl)-bis[2,6-difluoro-3-(N-hexyl-(4-tolyl)-sulfonylamide) phenyl] titanium, bis(cyclopentadienyl)-bis[2,6-di- fluoro-3-(pyrrolidine-2,5-dion-1-yl) phenyl] titanium, bis(cyclopentadienyl)-bis[2,6-difluoro-3-(3,4-dimethyl-3-pyrrolidine-2,5-dion-1-yl) phenyl] titanium, bis(cyclopentadienyl)-bis[2,G-difluoro-3-(phthalimide) phenyl] titanium, bis(cyclopentadienyl)-bis[2,6-difluoro-3-(isobutoxy-carbonylamino) phenyl] titanium, bis(cyclopentadienyl)-bis[2,6-difluoro-3-(ethoxy-carbonylamino) phenyl] titanium, bis(cyclo- pentadienyl)-bis[2,6-difluoro-3-(2-chloroethoxy-carbonylamino) phenyl] titanium;
bis(cyclopentadienyl)-bis[2,6-difluoro-3-(phenoxy-carbonylamino) phenyl] titanium, bis(cyclopentadienyl)-bis[2,6-difuoro-3-(3-phenyl-thioureido) phenyl] titanium, bis(cyclopentadienyl)-bis[2,6-difluoro-3-(3-butyl-thioureido) phenyl] titanium, bis(cyclopentadienyl)-bis[2,6-difluoro-3-(3-phenylureido) phenyl] titanium, bis(cyclopentadienyl)-bis[2,6-difluoro-3-(3-butylureido) phenyl] titanium, bis(cyclo- pentadienyl)-bis[2,6-difluoro-3-(N,N-di-acetylamino) phenyl] titanium, bis(cyclo- pentadienyl)-bis[2,6-difluoro-3-(3,3-dimethylureido) phenyl] titanium, bis(cyclo- pentadienyl)-bis[2,6-difluoro-3-(acetylamino) phenyl] titanium, bis(cyclopenta- dienyl)-bis[2,6-difluoro-3-(butyryl-amino) phenyl] titanium, bis(cyclopentadienyl)- bis[2,6-difluoro-3-(decanoyl-amino) phenyl] titanium, bis(cyclopentadienyl)-bis[2,6- difluoro-3-(octadecanoyl-amino) phenyl] titanium, bis(cyclopentadienyl)-bis[2,6-di- fluoro-3-(isobutyryl-amino) phenyl] titanium, bis(cyclopentadienyl)-bis[2,6-difluoro- 3-(2-ethylhexanoylamino) phenyl] titanium, bis(cyclopentadienyl)-bis[2,6-difluoro- 3-(2-methylbutanoylamino) phenyl] titanium, bis(cyclopentadienyl)-bis[2,6-difluoro- 3-(pivaloylamino) phenyl] titanium, bis(cyclopentadienyl)-bis[2,6-difluoro- 3-(2,2-di- methyl-butanoylamino) phenyl] titanium, bis(cyclopentadienyl)-bis[2,6-difluoro-3-(2-ethyl-2-methylheptanoylamino) phenyl] titanium, bis(cyclopentadienyl)-bis[2,6- di-fluoro-3-(cyclohexyl-carbonylamino) phenyl] titanium, bis(cyclopentadienyl)-bis-[2,6-difluoro-3-(2,2-dimethyl-3-chloropropanoylamino) phenyl] titanium, bis(cyclopentadienyl)-bis[2,6-difluoro-3-(3-phenylpropanoylamino) phenyl] titanium, bis-(cyclopentadienyl)-bis[2,6-difluoro-3-(2-chloromethyl-2-methyl-3-chloropropanoylamino) phenyl] titanium, bis(cyclopentadienyl)-bis[2,6-difluoro-3-(3,4-xyloylamino) phenyl] titanium, bis(cyclopentadienyl)-bis[2,6-difluoro-3-(4-ethylbenzoylamino) phenyl] titanium, bis(cyclopentadienyl)-bis[2,6-difluoro-3-(2,4,6-mesitylcarbonyl- amino) phenyl] titanium, bis(cyclopentadienyl)-bis[2,G-difluoro-3-(benzoylamino) phenyl] titanium, bis(cyclopentadienyl)-bis[2,6-dinuoro-3-(N-(3-phenylpropyl) benzoylamino) phenyl]titanium, bis(cyclopentadienyl)-bis[2,6-difluoro-3-(N-(3-ethyl-heptyl)-2,2-dimethyl-pentanoylamino) phenyl] titanium, bis(cyclopentadienyl)-bis[2,6-difluoro-3-(N-isobutyl-(4-toluyl) amino) phenyl] titanium, bis(cyclopentadienyl)-bis[2,6-difluoro-3-(N-isobutyl-benzoylamino) phenyl] titanium, bis-(cyclopentadienyl)-bis[2,6-difluoro-3-(N-cyclohexyl-methyl-pivaloylamino) phenyl] titanium, bis(eyclopentadienyl)-bis[2,6-difluoro-3-(N-(oxolan-2-ylmethyl) benzoylamino) phenyl] titanium, bis(cyclopentadienyl)-bis[2,6-difluoro-3-(N-(3-ethylheptyl)-2,2-dimethyl-butanoylamino) phenyl] titanium, bis(cyclopentadienyl)-bis-[2,6-difluoro-3-(N-(3-phenylpropyl-(4-toluylamino) phenyl] titanium, bis(cyclopenta- dienyl)-bis[2,6-difluoro-3-(N-(oxolan-2-ylmethyl)-(4-toluyl) amino) phenyl] titanium, bis(cyclopentadienyl)-bis[2,6-difluoro-3-(N-(4-toluylmethyl) benzoylamino) phenyl] titanium,
bis(cyclopentadienyl)-bis[2,6-difluoro-3-(N-(4-toluylmethyl)-(4-toluyl) amino) phenyl] titanium, bis(cyclopentadienyl)-bis[2,6-difluoro-3-(N-butyl-benzoylamino) phenyl] titanium, bis(cyclopentadienyl)-bis[2,6-difluoro-3-(N-butyl-(4-toluyl) amino) phenyl] titanium, bis(cyclopentadienyl)-bis[2,6-difluoro-3-(N-hexyl-(4-toluyl) amino) phenyl] titanium, bis(cyclopentadienyl)-bis[2,6-difluoro-3-(N-(2,4-dimethylpentyl)-2,2-dimethyl-butanoylamino) phenyl] titanium, bis(cyclopentadienyl)-bis[2,6-difluoro-3-(2,4-dimethylpentyl)-2,2-dimethyl-pentanoylamino) phenyl] titanium, bis- (cyclopentadienyl)-bis[2,6-difluoro-3-((4-toluyl) amino) phenyl] titanium, bis(cyclo- pentadienyl)-bis[2,6-difluoro-3-(2,2-dimethyl-pentanoylamino) phenyl] titanium,
bis(cyclopentadienyl)-bis[2,6-difluoro-3-(2,2-dimethyl-3-ethoxy-propanoylamino) phenyl] titanium, bis(cyclopentadienyl)-bis[2,6-difluoro-3-(2,2-dimethyl-3-allyloxy-propanoyl-amino) phenyl] titanium, bis(cyclopentadienyl)-bis[2,6-difluoro-3-(N-allyl-acetylamino) phenyl] titanium, bis(cyclopentadienyl)-bis[2,6-difluoro-3-(2-ethyl-butanoylamino) phenyl] titanium, bis(cyclopentadienyl)-bis[2,6-difluoro-3-(N- cyclohexylmethyl-benzoylamino) phenyl] titanium, bis(cyclopentadienyl)-bis[2,6-difluoro-3-(N-cydohexylmethyl-(4-toluyl) amino) phenyl] titanium, bis(cyclopentadienyl)-bis[2,6-difluoro-3-(N-(2-ethylhexyl) benzoylamino) phenyl] titanium, bis-(cyclopentadienyl)-bis[2,6-difluoro-3-(N-isopropyl-benzoylamino) phenyl] titanium, bis(cyclopentadienyl)-bis[2,6-difluoro-3-(N-(3-phenylpropyl)-2,2-dimethylpentano yl-amino) phenyl] titanium, bis(cyclopentadienyl)-bis[2,6-difluoro-3-(N-hexyl-benzoyl- amino) phenyl] titanium, bis(cyclopentadienyl)-bis[2,6-difluoro-3-(N-cyclohexylmethyl)-(2,2-dimethyl-pentanoylamino) phenyl] titanium, bis(cyclopentadienyl)-bis- [2,6-difluoro-3-(N-butyl-benzoylamino) phenyl] titanium, bis(cyclopentadienyl)-bis-[2,6-difluoro-3-(N-(2-ethylhexyl)-(2,2-dimethyl-pentanoyl) amino) phenyl] titanium,
bis(cyclopentadienyl)-bis-[2,6-difluoro-3-(N-hexyl-2,2-dimethyl-pentanoyl-amino) phenyl] titanium, bis(cyclopentadienyl)-bis[2,6-difluoro-3-(N-isopropyl-2,2-dimethyl-pentanoyl-amino) phenyl] titanium, bis(cyclopentadienyl)-bis[2,6-difluoro-3-(N-(3-phneylpropyl) pivaloylamino) phenyl] titanium, bis(cyclopentadienyl)-bis-[2,6-difluoro-3-(N-butyl-2,2-dimethylpentanoylamino) phenyl] titanium, bis(cyclopentadienyl)-bis-[2,6-difluoro-3-(N-(2-methoxyethyl) benzoylamino) phenyl] titanium, bis(cyclopentadienyl)-bis[2,6-difluoro-3-(N-benzyl-benzoylamino) phenyl] titanium, bis(cyclopentadienyl)-bis[2,6-difluoro-3-(N-benzyl-(4-toluyl) amino) phenyl] titanium, bis(cyclopentadienyl)-bis[2,6-difluoro-3-(N-(2-methoxyethyl)-(4- toluyl) amino) phenyl] titanium, bis(cyclopentadienyl)-bis[2,6-difluoro-3-(N-(4-methylphenyl-methyl)-2,2-dimethyl-pentanoylamino) phenyl] titanium, bis(cyclopentadienyl)-bis-[2,6-difluoro-3-(N-(2-methoxyethyl)-2,2-dimethyl-pentanoylamin o) phenyl] titanium, bis(cyclopentadienyl)-bis[2,6-difluoro-3-(N-cyclohexylmethyl-(2-ethyl-2-methylheptanoyl) amino) phenyl] titanium,
bis(cyclopentadienyl)-bis[2,6-difluoro-3-(N-butyl-(4-chlorobenzoyl) amino) phenyl] titanium, bis(cyclopentadienyl)-bis[2,6-difluoro-3-(N-hexyl-(2-ethyl-2-methyl-butanoyl) amino) phenyl] titanium, bis(cyclopentadienyl)-bis[2,6-difluoro-3-(N-cyclohexyl-2,2-dimethylpentanoyl) amino) phenyl] titanium, bis(cyclopentadienyl)-bis(2,6-difluoro-3-(N-(oxolan-2-ylmethyl)-2,2-dimethylpentanoyl) amino) phenyl] titanium, bis(cyclopentadienyl)-bis[2,6-difluoro-3-(N-cyclohexyl-(4-chlorobenzoyl) amino) phenyl] titanium, bis(cyclopentadienyl)-bis[2,6-difluoro-3-(N-cyclo- hexyl-(2-chlorobenzoyl) amino) phenyl] titanium, bis(cyclopentadienyl)-bis[2,6-difluoro-3-(3,3-dimethyl-2-azetidinon-1-yl) phenyl] titanium, bis(cyclopentadienyl)-bis [2,6-difluoro-3-(isocyanate) phenyl] titanium, bis(cyclopentadienyl)-bis[2,6-difluoro- 3-(N-ethyl-(4-tolylsulfonyl) amino) phenyl] titanium, bis(cyclopentadienyl)-bis[2,6- difluoro-3-(N-hexyl-(4-tolylsulfonyl) amino) phenyl] titanium, bis(cyclopentadienyl)-bis[2,6-difluoro-3-(N-butyl-(4-tolylsulfonyl) amino) phenyl] titanium, bis(cyclopenta- dienyl)-bis[2,6-difluoro-3-(N-isobutyl-(4-tolylsulfonyl) amino) phenyl] titanium, bis-(cyclopenta-dienyl)-bis[2,6-difluoro-3-(N-butyl-(2,2-dimethyl-3-chloro-propanoyl) amino) phenyl] titanium, bis(cyclopentadienyl)-bis[2,6-difluoro-3-(N-(3-phenylpropanoyl)-2,2-dimethyl-3-chloropropanoyl) amino) phenyl] titanium, bis(cyclopenta-dienyl)-bis[2,6-di-fluoro-3-(N-cyclohexyl-methyl-(2,2-di-methyl-3-chloropropanoyl) amino) phenyl] titanium, bis(cyclopentadienyl)-bis[2,6-difluoro-3-(N-isobutyl-(2,2-dimethyl-3-chloropropanoyl) amino) phenyl] titanium, bis(cyclopentadienyl)-bis[2,6-difluoro-3-(N-butyl-(2-chloromethyl-2-methyl-3-chloropropanoyl) amino) phenyl] titanium, bis(cyclopentaclienyl)-bis[2,6-clifluoro-3-(butyl-thio-carbonylamino) phenyl] titanium, bis(cyclopentadienyl)-bis[2,6-difluoro-3-(phenyl- thio-carbonylamino) phenyl] titanium, bis(cyclopentadienyl)-bis[2,6-difluoro-3-iso- cyanato-phenyl] titanium, bis(cyclopentadienyl)-bis[2,6-difluoro-3-(N-ethyl-(4-tolyl- sulfonyl) amino) phenyl] titanium, bis(cyclopentadienyl)-bis[2,6-difluoro-3-(N-hexyl- (4-tolylsulfonyl) amino) phenyl] titanium, bis(cyclopentadienyl)-bis[2,6-difluoro-3-(N-butyl-(4-tolylsulfonyl) amino) phenyl] titanium, bis(cyclopentadienyl)-bis[2,6-di- fluoro-3-(N-isobutyl-(4-tolylsulfonyl) amino) phenyl] titanium, bis(cyclopentadienyl)-bis[2,6-difluoro-3-(N-butyl-(2,2-di-methyl-3-chloropropanoyl) amino) phenyl] titanium, bis(cyclopentadienyl)-bis[2,6-difluoro-3-(N-(3-phenylpropanoyl)-2,2-dimethyl-3-chloropropanoyl) amino) phenyl] titanium, bis(cyclopentadienyl)-bis[2,6-difluoro-3-(N-cyclohexyl-methyl-(2,2-dimethyl-3-chloropropanoyl) amino) phenyl] titanium, bis(cyclo-pentadienyl)-bis[2,6-di-fluoro-3-(N-isobutyl-(2,2-dimethyl-3-chloro-propanoyl) amino) phenyl] titanium, bis(cyclopentadienyl)-bis[2,6-difluoro-3-(N-butyl-(2-chloromethyl-2-methyl-3-chloro-propanoyl) amino) phenyl] titanium, bis(cyclopentadienyl)-bis[2,6-difluoro-3-(butylthio-carbonylamino) phenyl] titanium, bis(cyclopentadienyl)-bis[2,6-difluoro-3-(phenylthio-carbonylamino) phenyl] titanium,
bis(methyl-cyclopentadienyl)-bis[2,6-difluoro-3-(N-hexyl-2,2-dimethyl-butanoyl) phenyl] amino] titanium, bis(methyl-cyclopentadienyl)-bis[2,6-difluoro-3-(N-hexyl-2,2-dimethyl-pentanoylamino) phenyl] titanium, bis(methyl-cyclopentadienyl)-bis- [2,6-difluoro-3-(N-ethyl-acetylamino) phenyl] titanium, bis(methyl-cyclopentadienyl)-bis[2,6-diffuoro-3-(N-ethyl-propionyl-amino) phenyl] titanium, bis(trimethylsilyl-pentadienyl)-bis[2,6-clifluoro-3-(N-butyl-2,2-dimethyl-propanoylamino ) phenyl] titanium, bis(cyclopentadienyl)-bis[2,6-difluoro-3-(N-(2-methoxyethyl)-trimethylsilyl-amino) phenyl] titanium, bis(cyclopentadienyl)-bis[2,6-difluoro-3-(N-butyl-hexyl-dimethylsilyl-amino) phenyl] titanium, bis(cyclopentadienyl)-bis[2,6-di- fluoro-3-(N-ethyl-(1,1,2-trimethylpropyl) dimethylsilyl-amino) phenyl] titanium, bis(cyclo-pentadienyl)-bis[2,6-diuuoro-3-(3-ethoxy-methyl-3-methyl-2-azetidinon-1- yl) phenyl] titanium, bis(cyclopentadienyl)-bis[2,6-difluoro-3-(3-allyloxy-methyl-3-methyl-2-azetidinon-1-yl) phenyl] titanium, bis(cyclopentadienyl)-bis[2,6-difluoro-3-(3-chloromethyl-3-methyl-2-azetidinon-1-yl) phenyl] titanium, bis(cyclopentadienyl)-bis[2,6-difluoro-3-(N-benzyl-2,2-dimethyl-propanoyl-amino) phenyl] titanium,
bis(cyclopentadienyl)-bis[2,6-difluoro-3-(5,5-dimethyl-2-pyrrolidinon-1-yl) phenyl] titanium, bis(cyclopentadienyl)-bis[2,6-difluoro-3-(6,6-diphenyl-2-piperidinon-1-yl) phenyl] titanium, bis(cyclopentadienyl)-bis[2,6-difluoro-3-(N-(2,3-dihydro-1,2-benzothiazol-3-one-(1,1-dioxide)-2-yl) phenyl] titanium, bis(cyclopenta- dienyl)-bis[2,6-difluoro-3-(N-hexyl-(4-chlorobenzoyl) amino) phenyl] titanium, bis-(cyclopentadienyl)-bis[2,6-difluoro-3-(N-hexyl-(2-chlorobenzoyl) amino) phenyl] titanium, bis(cyclopentadienyl)-bis[2,6-difluoro-3-(N-isopropyl-(4-chlorobenzoyl) amino) phenyl] titanium, bis(cyclopentadienyl)-bis[2,6-difluoro-3-(N-(4-methylphenylmethyl)-(4-chlorobenzoyl) amino) phenyl] titanium, bis(cyclopentadienyl)-bis[2,6-difluoro-3-(N-(4-methyl-phenylmethyl)-(2-chlorobenzoyl) amino) phenyl] titanium, bis(cyclopentadienyl)-bis[2,6-difluoro-3-(N-butyl-(4-chlorobenzoyl) amino) phenyl] titanium, bis(cyclopentadienyl)-bis[2,6-difluoro-3-(N-benzyl-2,2-dimethyl- pentanoyl-amino) phenyl] titanium, bis(cyclopentadienyl)-bis(2,6-difluoro-3-(N-(2-ethylhexyl)-4-tolylsulfonyl) amino) phenyl] titanium, bis(cyclopentadienyl)-bis[2,6- difluoro-3-(N-(3-oxaheptyl) benzoylamino) phenyl] titanium, bis(cyclopentadienyl)- bis[2,6-difluoro-3-(N-(3,6-dioxadecyl) benzoylamino) phenyl] titanium, bis(cyclopentadienyl)-bis[2,6-difluoro-3-(trifluoromethyl-sulfonyl) amino) phenyl] titanium, bis(cyclopentadienyl)-bis[2,6-difluoro-3-(trifluoro-acetylamino) phenyl] titanium, bis(cyclopentadienyl)-bis[2,6-difluoro-3-(2-chlorobenzoyl) amino) phenyl] titanium, bis(cyclopentadienyl)-bis[2,6-difluoro-3-(4-chlorobenzoyl) amino) phenyl] titanium, bis(cyclopentadienyl)-bis[2,6-difluoro-3-(N-(3,6-dioxadecyl)-2,2-dimethylpentanoyl amino) phenyl] titanium, bis(cyclopentadienyl)-bis[2,6-difluoro-3-(N-(3,7-dimethyl- 7-methoxy-octyl) benzoylamino) phenyl] titanium, and bis(cyclopentadienyl)-bis-[2,6-difluoro-3-(N-cyclohexyl-benzoylamino) phenyl] titanium.

The activated ester compounds (j) as further examples of the polymerization initiators capable of providing the initiator structures used herein include, for instance, imidosulfonate compounds disclosed in J.P. KOKOKU Sho 62-6223 and activated sulfonate compounds disclosed in J.P. KOKOKU Sho 63-14340 and J.P. KOKAI Sho 59-174831.

The carbon-halogen bond-containing compounds (k) as further examples of the polymerization initiators capable of providing the initiator structures preferably used herein include, for instance, those represented by the following general formulas (IV) to (X): 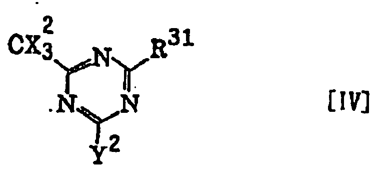 (In the formula (IV), X² represents a halogen atom. Y² represents a group: -C(X²)₃, -NH₂, -NHR³², -NR³² or -OR³². Wherein R³² represents an alkyl group, a substituted alkyl group, an aryl group or a substituted aryl group. In addition, R³¹ represents a group: -C(X²)₃, an alkyl group, a substituted alkyl group, an aryl group, a substituted aryl group or a substituted alkenyl group. 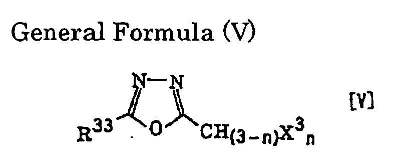 (In the formula (V), R³³ represents an alkyl group, a substituted alkyl group, an alkenyl group, a substituted alkenyl group, an aryl group, a substituted aryl group, a halogen atom, an alkoxy group, a substituted alkoxy group, a nitro group or a cyano group; X³ represents a halogen atom; and n is an integer ranging from 1 to 3).
General Formula (VI)

R³⁴-Z²-CH_{(2·m)}(X³)ₘR³⁵ (VI)

(In the formula (VI), R³⁴ represents an aryl or substituted aryl group; R³⁵ represents a halogen atom or a group represented by the following formula: 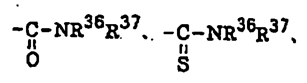 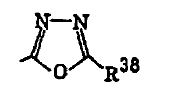 Z² represents -C(=O)-, -C(=S)- or -SO₂-; R³⁶ and R³⁷ each represents an alkyl group, a substituted alkyl group, an alkenyl group, a substituted alkenyl group, an aryl group or a substituted aryl group; R³⁸ is identical to R³² defined above in connection with Formula (IV); X³ represents a halogen atom; and m is 1 or 2). 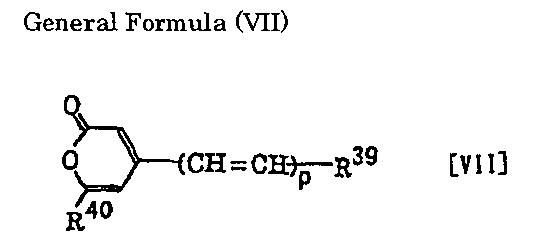 (In the formula (VII), R³⁹ represents an aryl or heterocyclic group which may be substituted; R⁴⁰ represents a trihalo-alkyl group or a trihalo-alkenyl group having 1 to 3 carbon atoms; p is 1, 2 or 3). 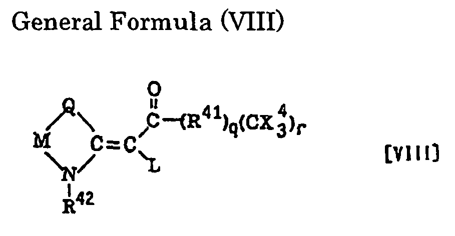 (In the formula (VIII), L represents a hydrogen atom or a substituent of the group represented by the formula: CO-(R⁴¹)_{q}(C(X⁴)₃)ᵣ; Q represents a sulfur, selenium or oxygen atom, a dialkyl-methylene group, an alken-1,2-ylene group, a 1,2-phenylene group or an N-R group; M represents a substituted or unsubstituted alkylene or alkenylene group, or a 1,2-arylene group; R⁴² represents an alkyl, aralkyl or alkoxyalkyl group; R⁴¹ represents a divalent non-heterocyclic or heterocyclic aromatic group; X⁴ represents a chlorine, bromine or iodine atom; q = 0 and r = 1, or q = 1 and r = 1 or 2) or carbonyl-methylene heterocyclic compounds having a trihalogeno-methyl group. 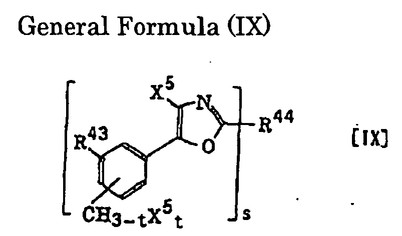 (In the formula (IX), X⁵ represents a halogen atom; t is an integer ranging from 1 to 3; s is an integer ranging from 1 to 4; R⁴³ represents a hydrogen atom or a group: CH₃₋ₜ(X⁵)ₜ; R⁴⁴ represents an s-valent unsaturated organic group which may be substituted) or 4-halogeno-5-(halogenomethyl-phenyl)-oxazole derivatives. 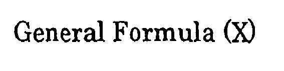 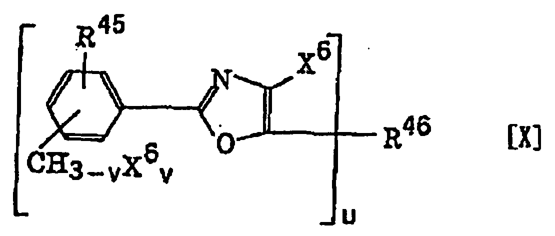 (In the formula (X), X⁶ represents a halogen atom; v is an integer ranging from 1 to 3; u is an integer ranging from 1 to 4; R⁴⁵ represents a hydrogen atom or a group: CH₃₋ᵥ(X⁶)ᵥ; R⁴⁶ represents an u-valent unsaturated organic group which may be substituted) or 2-(halogenomethyl-phenyl)-4-halogeno-oxazole derivatives.

Specific examples of such carbon-halogen bond-containing compounds include compounds disclosed in WAKABAYASHI et al., Bull. Chem. Soc. Japan, 1969, 42:2924 such as 2-phenyl-4,6-bis(trichloromethyl)-S-triazine, 2-(p-chlorophenyl)-4,6-bis(trichloromethyl)-S-triazine, 2-(p-tolyl)-4,6-bis(trichloromethyl)-S-triazine, 2-(p-methoxyphenyl)-4,6-bis(trichloromethyl)-S-triazine, 2-(2',4'-dichlorophenyl)-4,6-bis(trichloromethyl)-S-triazine, 2,4,6-tris(trichloromethyl)-S-triazine, 2- methyl-4,6-bis(trichloromethyl)-S-triazine, 2-n-nonyl-4,6-bis(trichloromethyl)-S-tri- azine and 2-( *α* , *α*, *β* -trichloroethyl)-4,6-bis(trichloromethyl)-S-triazine. Specific examples thereof further include compounds disclosed in British Patent (hereunder referred to as "GBP") No. 1,388,492 such as 2-styryl-4,6-bis(trichloromethyl)-S-tri- azine, 2-(p-methyl-styryl)-4,6-bis(trichloro-methyl)-S-triazine, 2-(p-methoxy-styryl)-4,6-bis(trichloro-methyl)-S-triazine, and 2-(p-methoxy-styryl)-4-amino-6-trichloromethyl-S-triazine; compounds disclosed in J.P. KOKAI Sho 53-133428 such as 2-(4- methoxy-naphtho-1-yl)-4,6-bis(trichloromethyl)-S-triazine, 2-(4-ethoxy-naphtho-1- yl)-4,6-bis(trichloromethyl)-S-triazine, 2-[4-(2-ethoxyethyl)-naphtho-1-yl]-4,6-bis- (trichloromethyl)-S-triazine, 2-(4,7-dimethoxy-naphtho-1-yl)-4,6-bis(trichloro- methyl)-S-triazine and 2-(acenaphtho-5-yl)-4,6-bis(trichloromethyl)-S-triazine; compounds disclosed in German Patent (hereunder referred to as "GP") No. 3,337,024 such as those represented by the following chemical formulas:

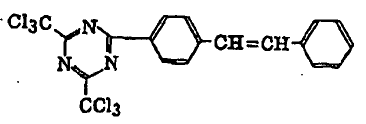

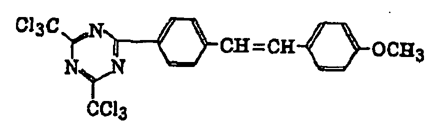

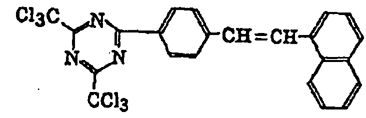

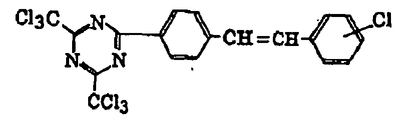

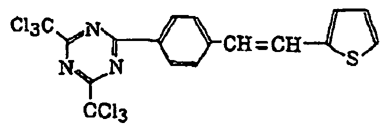

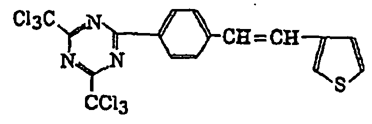

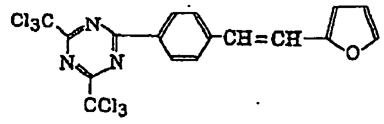

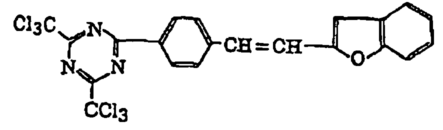

Examples of the compounds (k) likewise include those disclosed in F.C. Schaefer et al., J. Org. Chem., 1964, 29:1527 such as 2-methyl-4,6-bis(tribromomethyl)-S-triazine, 2,4,6-tris(tribromomethyl)-S-triazine, 2,4,6-tris(di-bromomethyl)-S-triazine, 2-amino-4-methyl-6-tribromomethyl-S-triazine and 2-methoxy- 4-methyl-6-trichloromethyl-S-triazine. Further, examples of the compounds (k) also include those disclosed in J.P. KOKAI Sho 62-58241 such as those represented by the following chemical formulas:

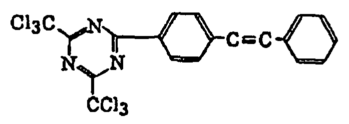

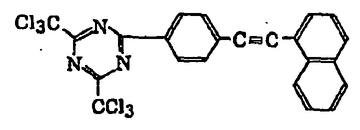

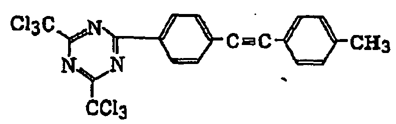

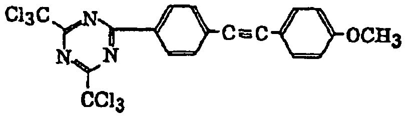

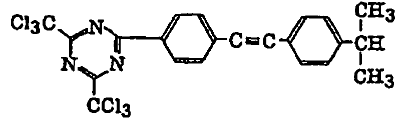

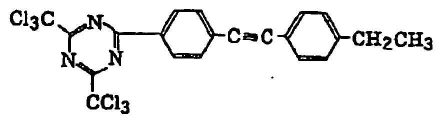

Examples of the compounds (k) likewise include those disclosed in J.P. KOKAI Hei 5-281728 such as those represented by the following chemical formulas:

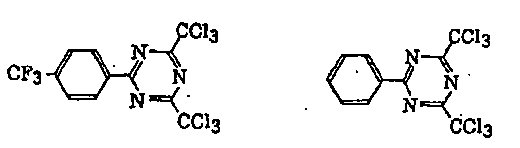

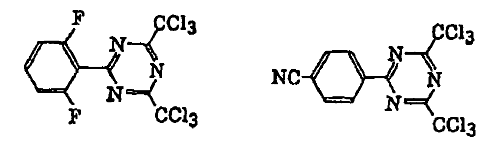

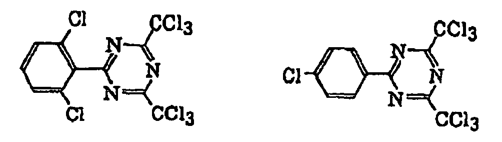

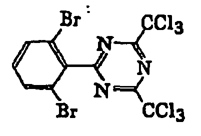

Examples of the compounds (k) likewise include a group of the following compounds which can easily be prepared by one of ordinary skill in the art according to the synthetic method disclosed by M.P. Hutt, E.F. Elslager and L.M. Herbel et al. in "Journal of Heterocyclic Chemistry", 1970, Vol. 7 (No. 3), infra p. 511:

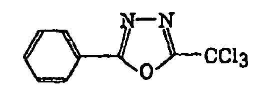

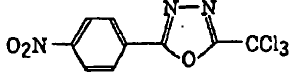

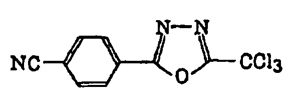

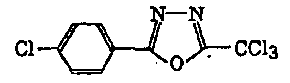

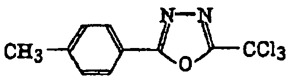

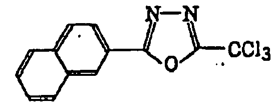

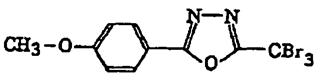

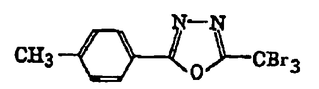

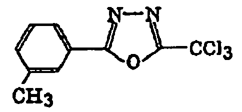

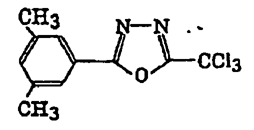

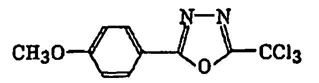

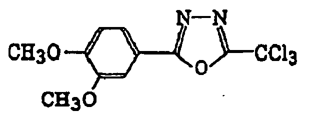

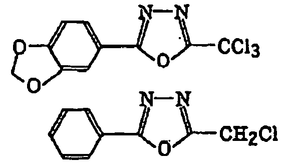

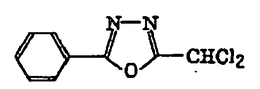

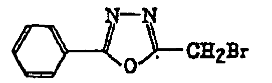

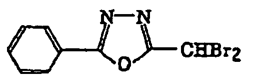

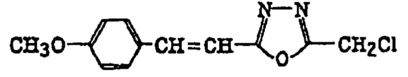

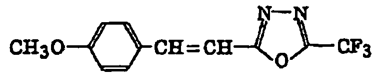

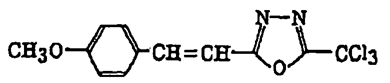

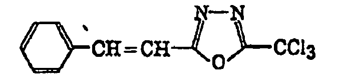

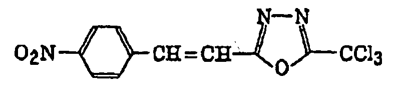

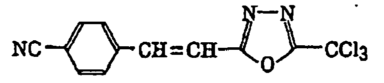

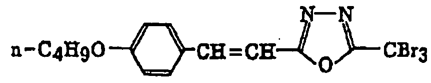

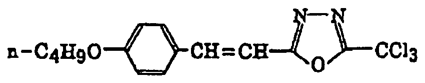

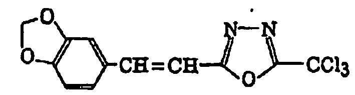

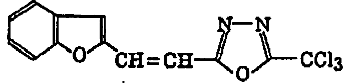

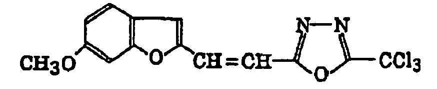

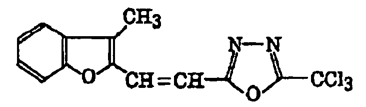

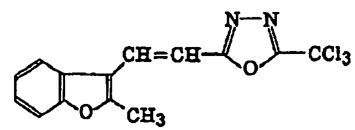

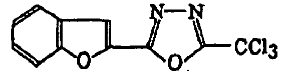

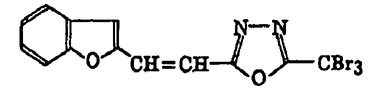

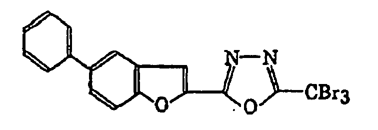

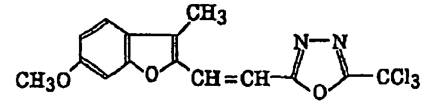

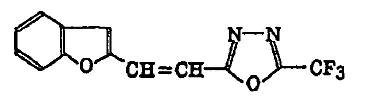

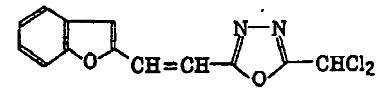

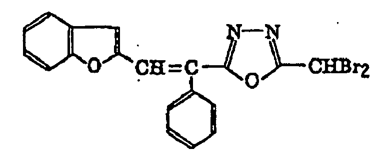

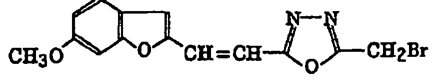

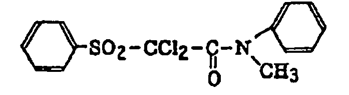

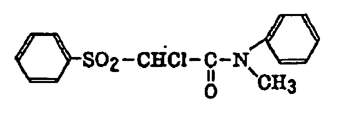

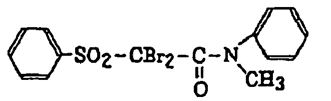

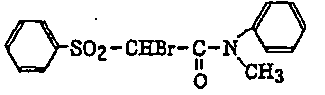

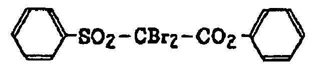

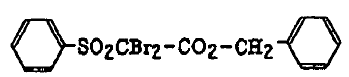

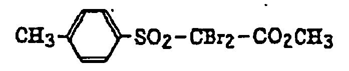

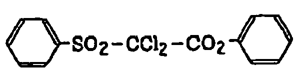

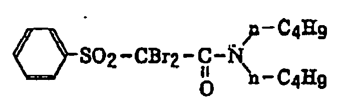

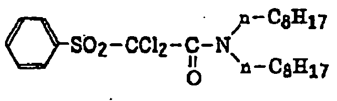

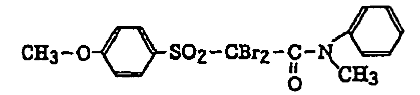

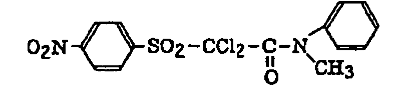

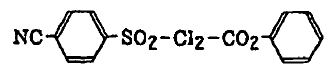

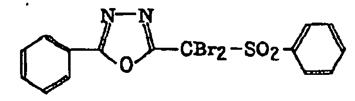

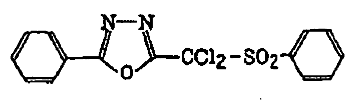

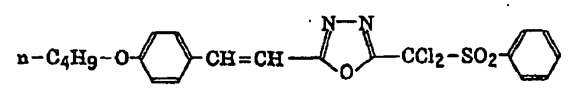

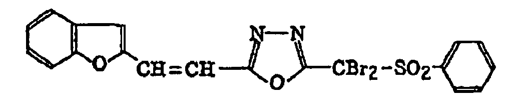

Examples of the compounds (k) likewise include those disclosed in GP No. 2,641,100 such as 4-(4-methoxy-styryl)-6-(3,3,3-trichloropropenyl)-2-pyrone and 4-(3,4,5-trimethoxy-styryl)-6-trichloromethyl-2-pyrone, or compounds disclosed in GP No. 3,333,450 such as those represented by the following general formulas: 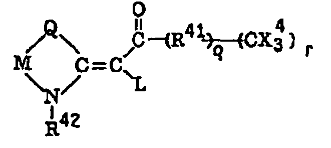 In this Formula, R⁴¹ represents a benzene ring and R⁴² represents an alkyl group, an aralkyl group or an alkoxyalkyl group.

**Table 2**

| | R⁴² | M | L | q | (C(X⁴)₃)ᵣ |
|---|---|---|---|---|---|
| 1 | C₂H₅ | 1,2-phenylene | H | 1 | 4-CCl₃ |
| 2 | CH₂C₆H₅ | 1,2-phenylene | H | 1 | 4-CCl₃ |
| 3 | C₂H₅ | 1,2-phenylene | H | 1 | 3-CCl₃ |
| 4 | C₂H₅ | 1,2-phenylene | H | 1 | 4-CF₃ |
| 5 | C₂H₅ | 5-CH₃-1,2-phenylene | H | 0 | CCl₃ |
| 6 | CH₂C₆H₅ | 1,2-phenylene | H | 0 | CCl₃ |
| 7 | C₂H₄OCH₃ | 1,2-phenylene | H | 1 | 4-CCl₃ |

Moreover, examples of the compounds (k) likewise include a groups of compounds disclosed in GP No. 3,021590 such as those represented by the following general formula:

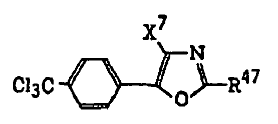

| | R⁴⁷ | X⁷ |
|---|---|---|
| 1 | 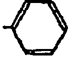 | Cl |
| 2 | 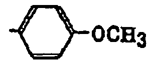 | Cl |
| 3 | 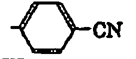 | Cl |

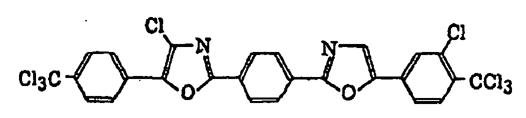

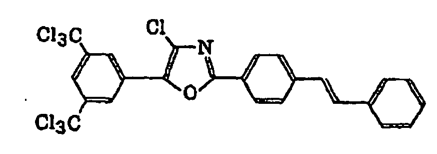

Examples of the compounds (k) likewise include a groups of compounds disclosed in GP No. 3,021,599 such as those represented by the following chemical formula:

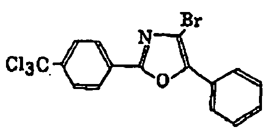

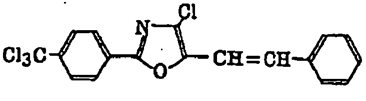

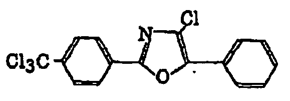

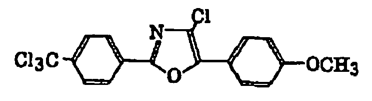

Examples of the polymerization initiators having the structures represented by Formula (I) more preferably used in the present invention are those capable of generating radicals by the action of laser light beams whose wavelength falls within the range of from 300 nm to 1200 nm. Examples of the polymerization initiators further preferably used herein are compounds having, as skeletal structures, those derived from (a) aromatic ketones, (b) aromatic onium salts, (c) organic peroxides, (e) hexaaryl-biimidazoles, (i) metallocene compounds and (k) carbon-halogen bond- containing compounds. Moreover, examples of polymerization initiators most preferably used herein are aromatic iodonium salts, aromatic diazonium salts, titanocene compounds, and trihalomethyl-S-triazine compounds represented by Formula (IV).

Then, specific examples of the polymerization initiators having the structures represented by Formula (I) will be given below:

| | |
|---|---|
| Group A (A-1)-(A-40) | 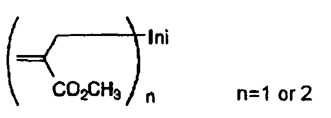 |

| Compound No. | Ini |
|---|---|
| A-1 | 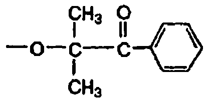 |
| A-2 | 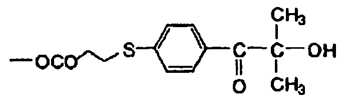 |
| A-3 | 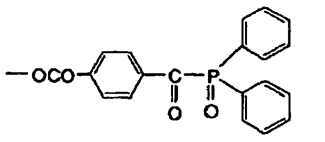 |
| A-4 | 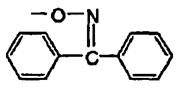 |
| A-5 | 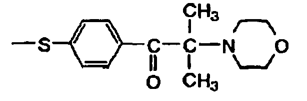 |
| A-6 | 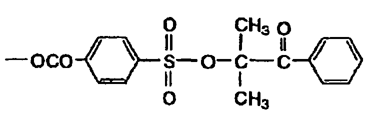 |
| A-7 | 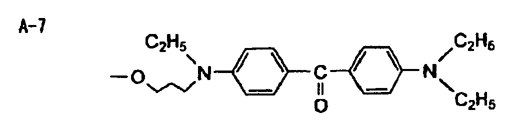 |
| A-8 | 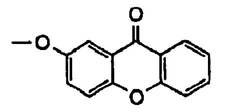 |
| A-9 | 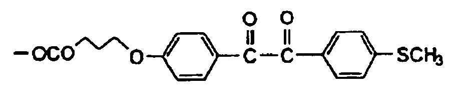 |
| A-10 | 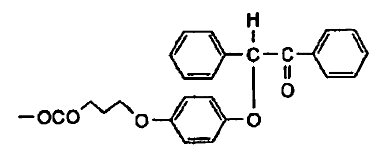 |
| A-11 | 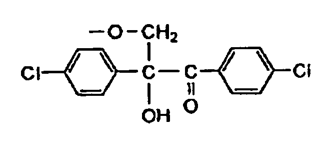 |
| A-12 | 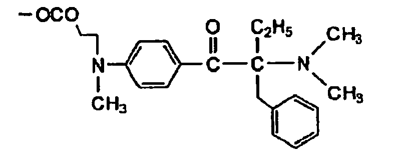 |
| A-13 | 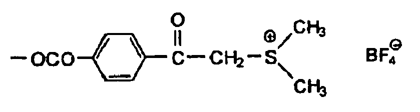 |
| A-14 | 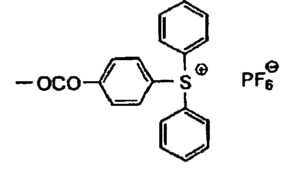 |
| A-15 | 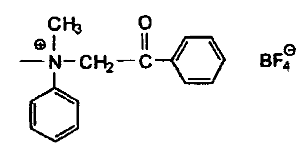 |
| A-16 | 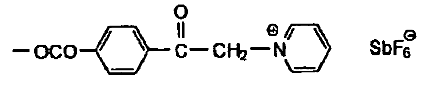 |
| A-17 | 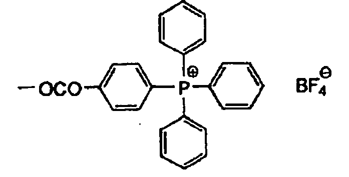 |
| A-18 | 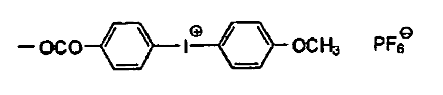 |
| A-19 | 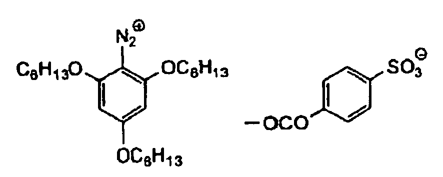 |
| A-20 | 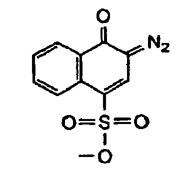 |
| A-21 | 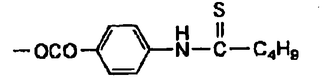 |
| A-22 | 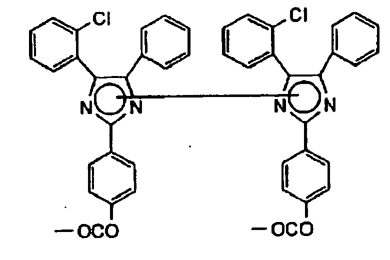 |
| A-23 | 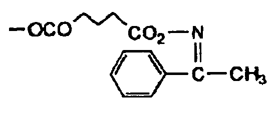 |
| A-24 | 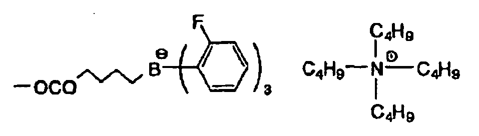 |
| A-25 | 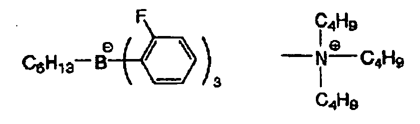 |
| A-26 | 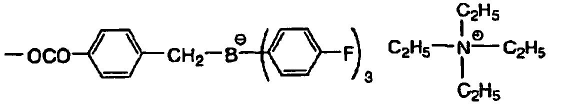 |
| A-27 | 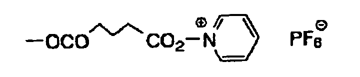 |
| A-28 | 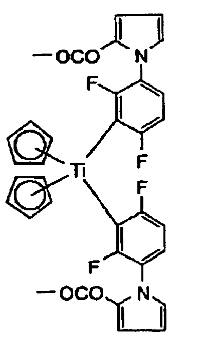 |
| A-29 | 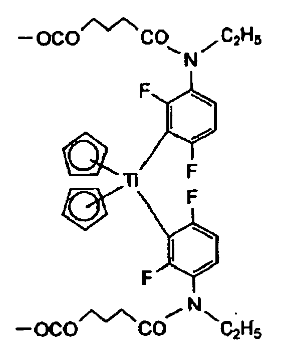 |
| A-30 | 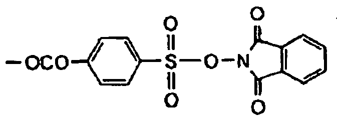 |
| A-31 | 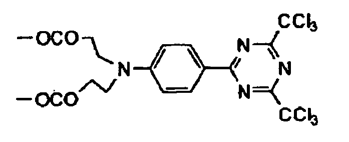 |
| A-32 | 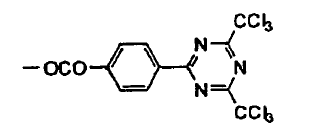 |
| A-33 | 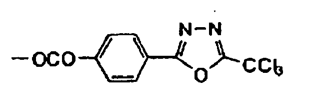 |
| A-34 | 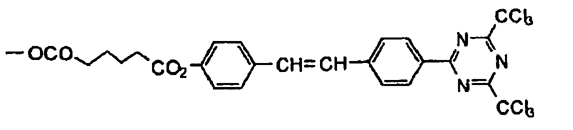 |
| A-35 | 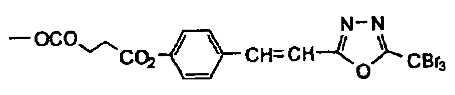 |
| A-36 | 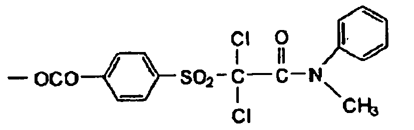 |
| A-37 | 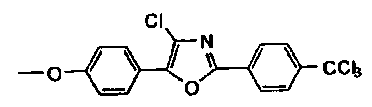 |
| A-38 | 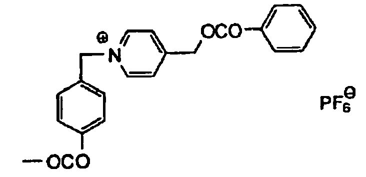 |
| A-39 | 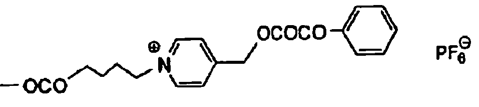 |
| A-40 | 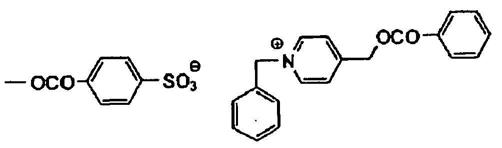 |

| | |
|---|---|
| Group B (B-1)-(B-40) | 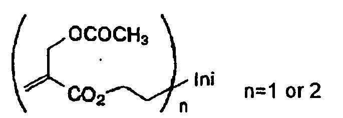 |

| Compound No. | Ini |
|---|---|
| B-1 | 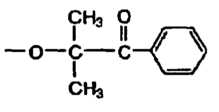 |
| B-2 | 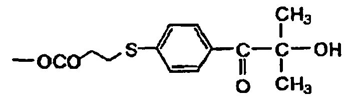 |
| B-3 | 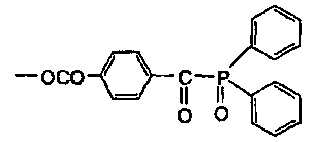 |
| B-4 | 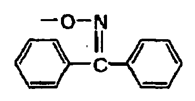 |
| B-5 | 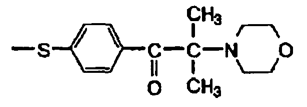 |
| B-6 | 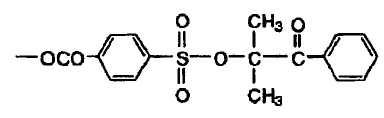 |
| B-7 | 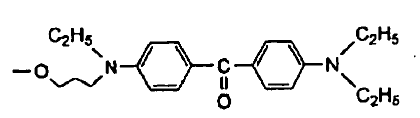 |
| B-8 | 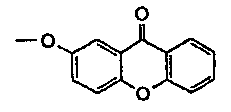 |
| B-9 | 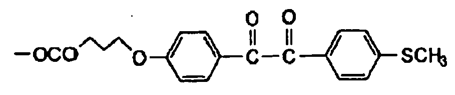 |
| B-10 | 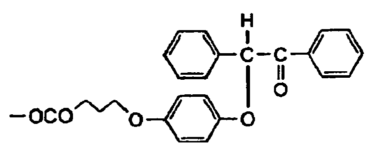 |
| B-11 | 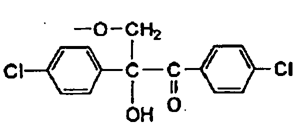 |
| B-12 | 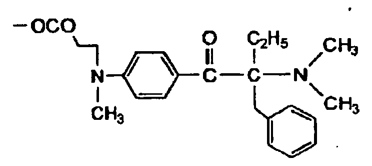 |
| B-13 | 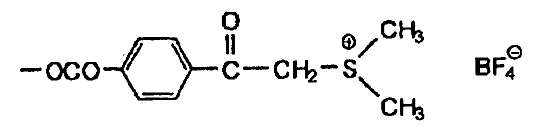 |
| B-14 | 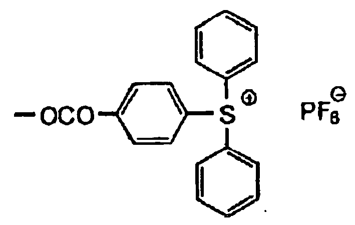 |
| B-15 | 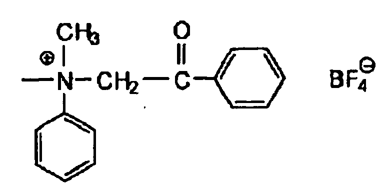 |
| B-16 | 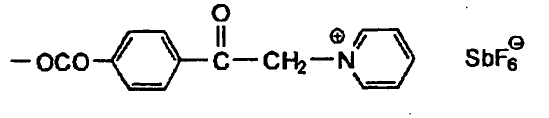 |
| B-17 | 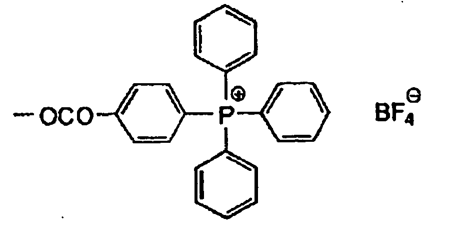 |
| B-18 | 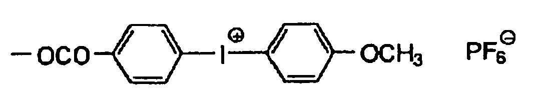 |
| B-19 | 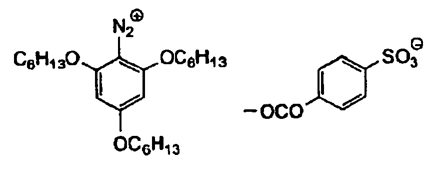 |
| B-20 | 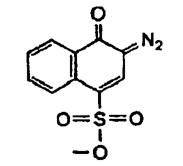 |
| B-21 | 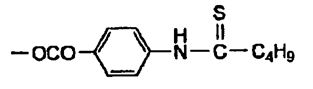 |
| B-22 | 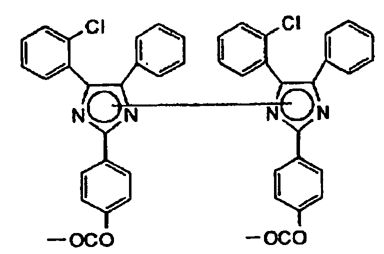 |
| B-23 | 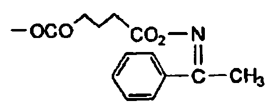 |
| B-24 | 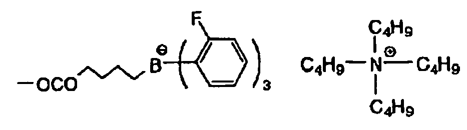 |
| B-25 | 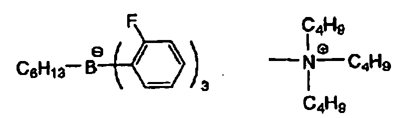 |
| B-26 | 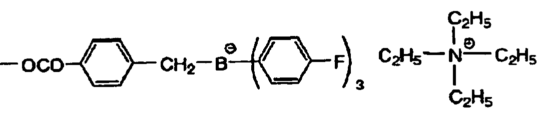 |
| B-27 | 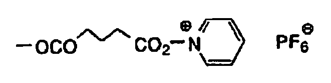 |
| B-28 | 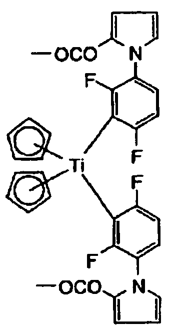 |
| B-29 | 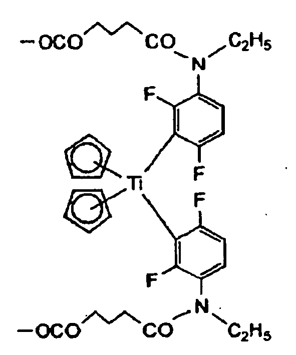 |
| B-30 | 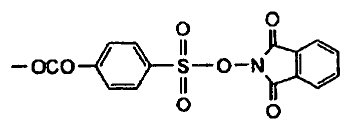 |
| B-31 | 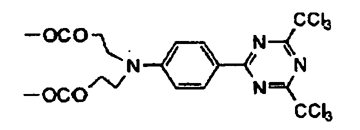 |
| B-32 | 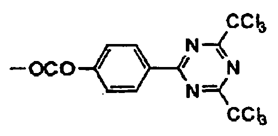 |
| B-33 | 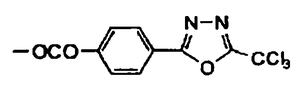 |
| B-34 | 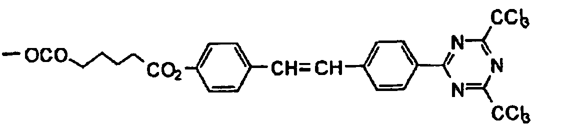 |
| B-35 | 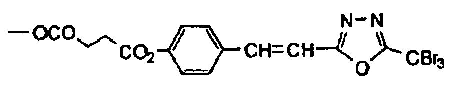 |
| B-36 | 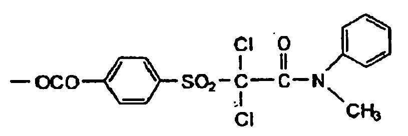 |
| B-37 | 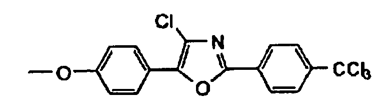 |
| B-38 | 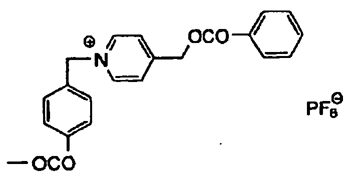 |
| B-39 | 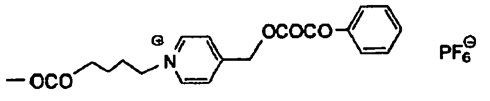 |
| B-40 | 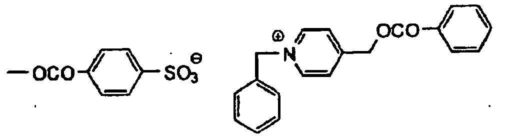 |

| | |
|---|---|
| Group C (C-1)-(C-40) | 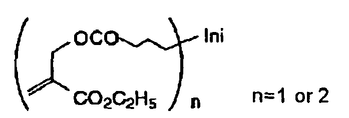 |

| Compound No. | Ini |
|---|---|
| C-1 | 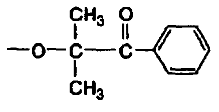 |
| C-2 | 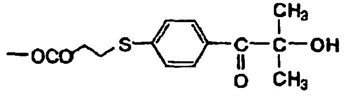 |
| C-3 | 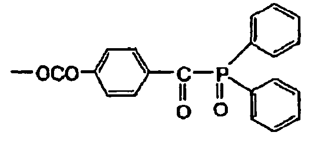 |
| C-4 | 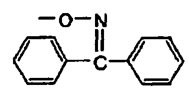 |
| C-5 | 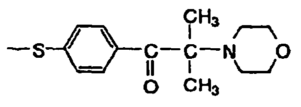 |
| C-6 | 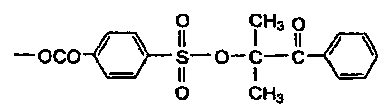 |
| C-7 | 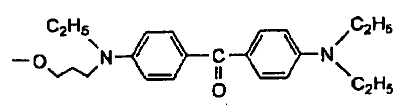 |
| C-8 | 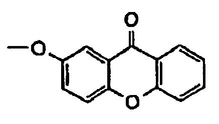 |
| C-9 | 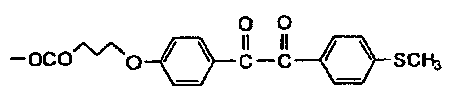 |
| C-10 | 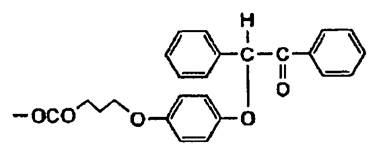 |
| C-11 | 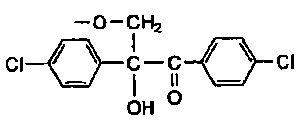 |
| C-12 | 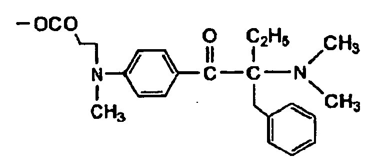 |
| C-13 | 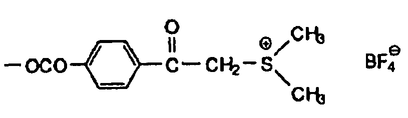 |
| C-14 | 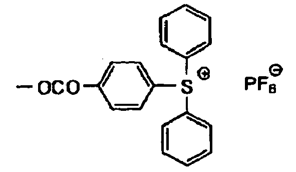 |
| C-15 | 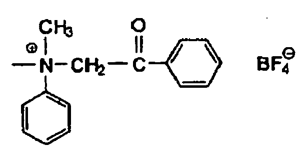 |
| C-16 | 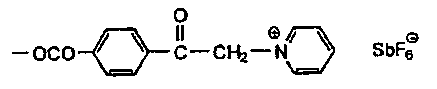 |
| C-17 | 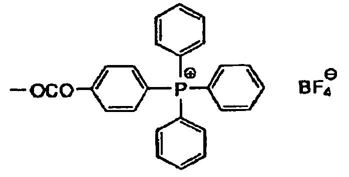 |
| C-18 | 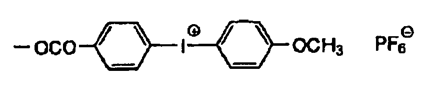 |
| C-19 | 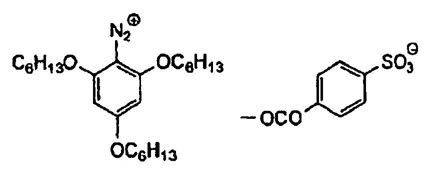 |
| C-20 | 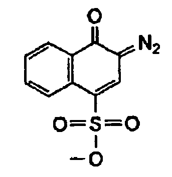 |
| C-21 | 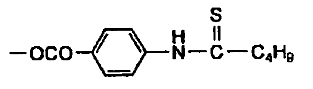 |
| C-22 | 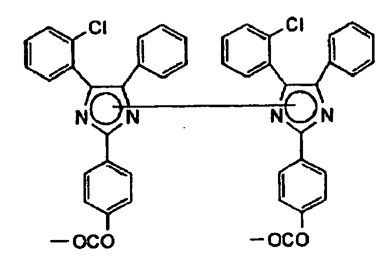 |
| C-23 | 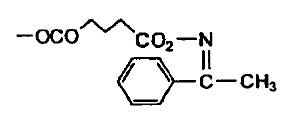 |
| C-24 | 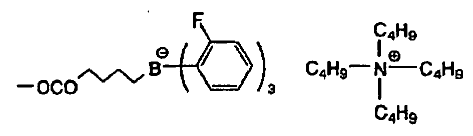 |
| C-25 | 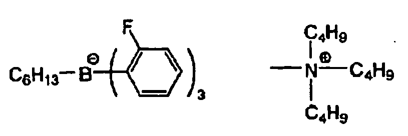 |
| C-26 | 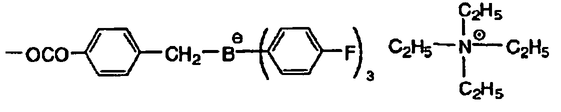 |
| C-27 | 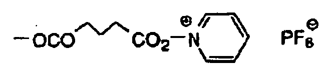 |
| C-28 | 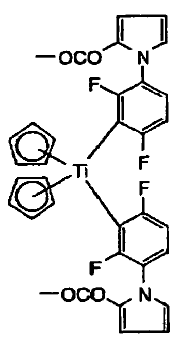 |
| C-29 | 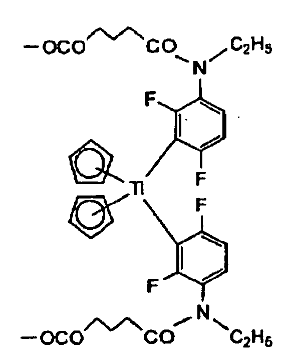 |
| C-30 | 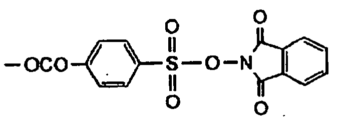 |
| C-31 | 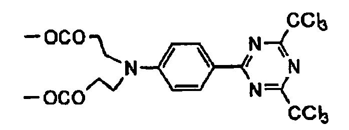 |
| C-32 | 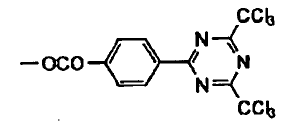 |
| C-33 | 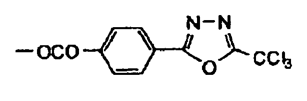 |
| C-34 | 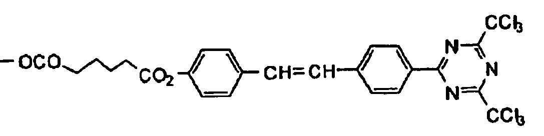 |
| C-35 | 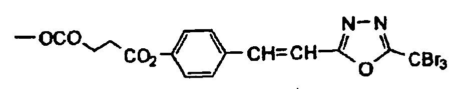 |
| C-36 | 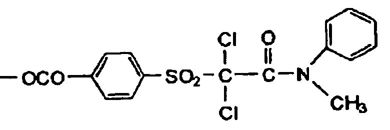 |
| C-37 | 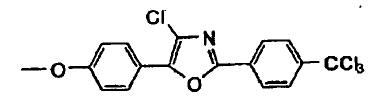 |
| C-38 | 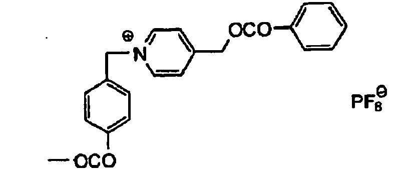 |
| C-39 | 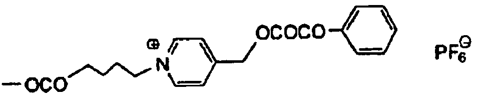 |
| C-40 | 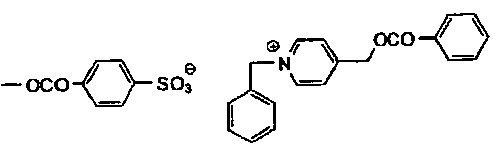 |

| | |
|---|---|
| Group D (D-1)-(D-40) | 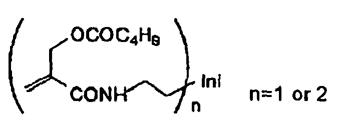 |

| Compound No. | Ini |
|---|---|
| D-1 | 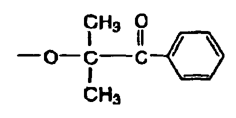 |
| D-2 | 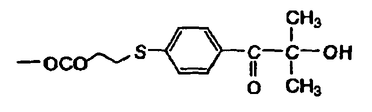 |
| D-3 | 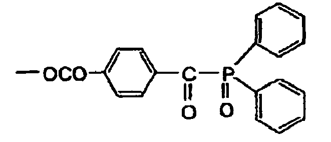 |
| D-4 | 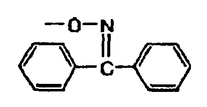 |
| D-5 | 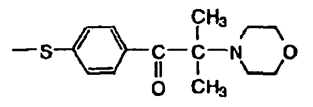 |
| D-6 | 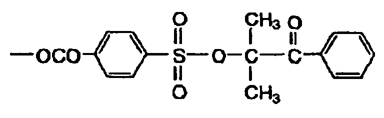 |
| D-7 | 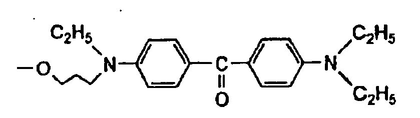 |
| D-8 | 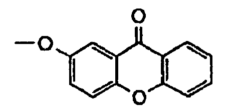 |
| D-9 | 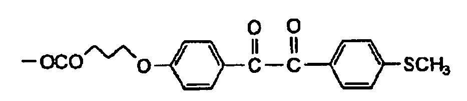 |
| D-10 | 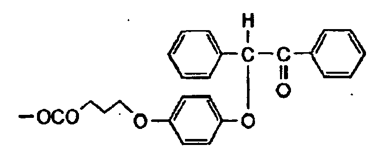 |
| D-11 | 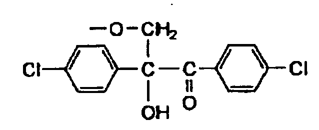 |
| D-12 | 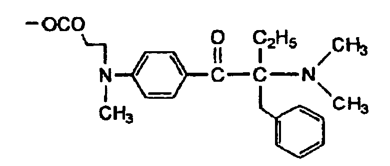 |
| D-13 | 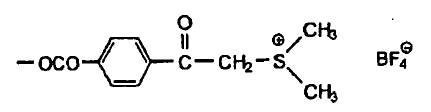 |
| D-14 | 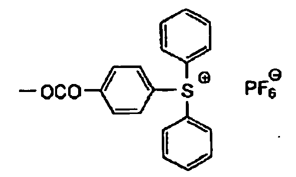 |
| D-15 | 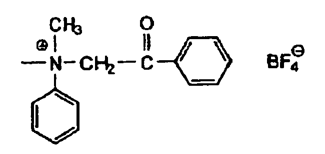 |
| D-16 | 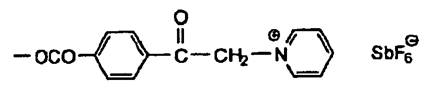 |
| D-17 | 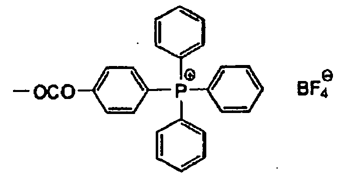 |
| D-18 | 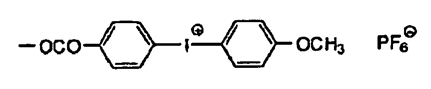 |
| D-19 | 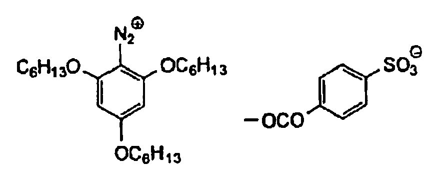 |
| D-20 | 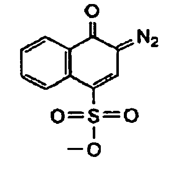 |
| D-21 | 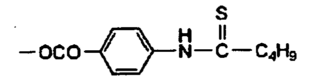 |
| D-22 | 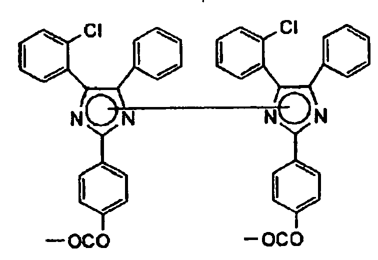 |
| D-23 | 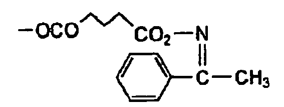 |
| D-24 | 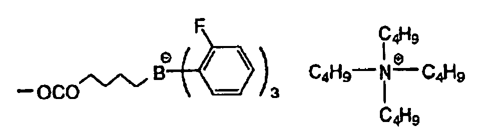 |
| D-25 | 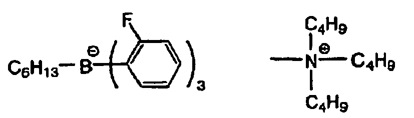 |
| D-26 | 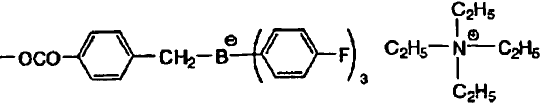 |
| D-27 | 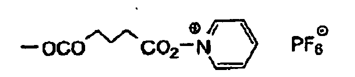 |
| D-28 | 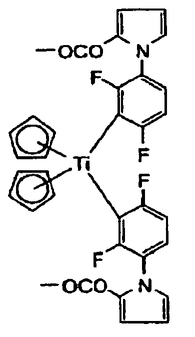 |
| D-29 | 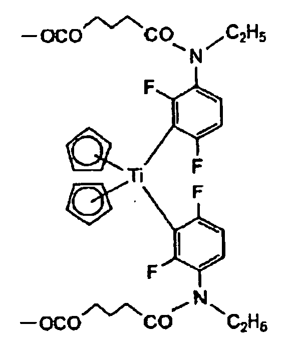 |
| D-30 | 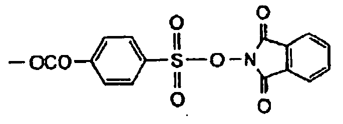 |
| D-31 | 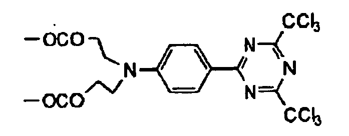 |
| D-32 | 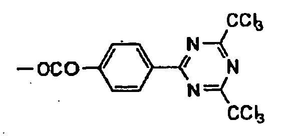 |
| D-33 | 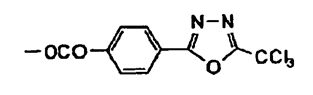 |
| D-34 | 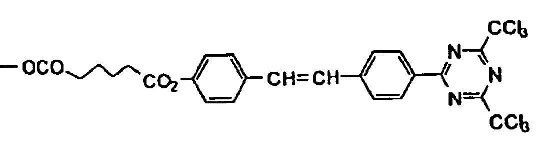 |
| D-35 | 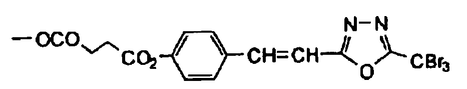 |
| D-36 | 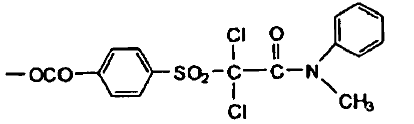 |
| D-37 | 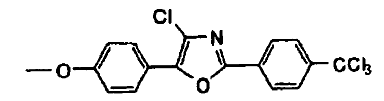 |
| D-38 | 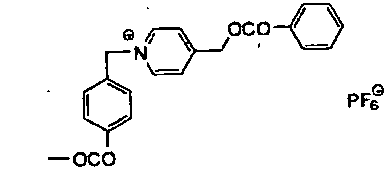 |
| D-39 | 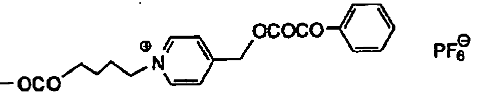 |
| D-40 | 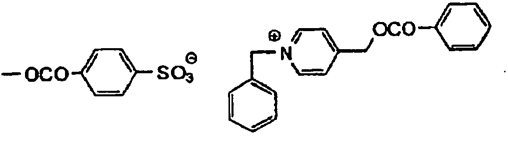 |

| | |
|---|---|
| Group E (E-1)-(E-40) | 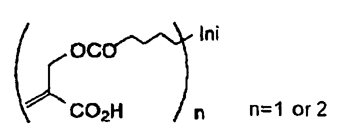 |

| Compound No. | Ini |
|---|---|
| E-1 | 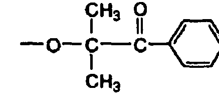 |
| E-2 | 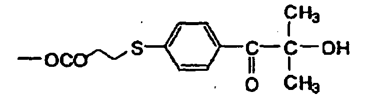 |
| E-3 | 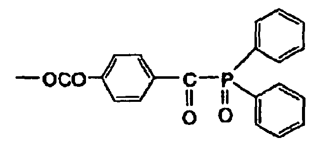 |
| E-4 | 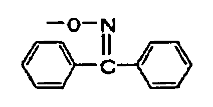 |
| E-5 | 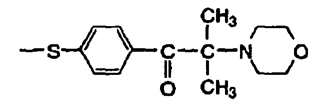 |
| E-6 | 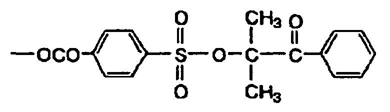 |
| E-7 | 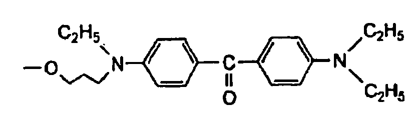 |
| E-8 | 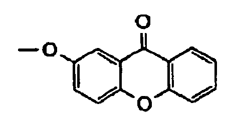 |
| E-9 | 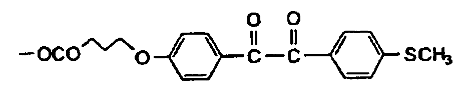 |
| E-10 | 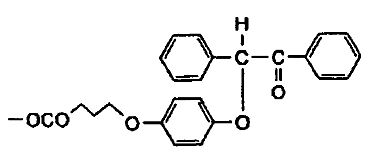 |
| E-11 | 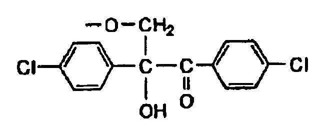 |
| E-12 | 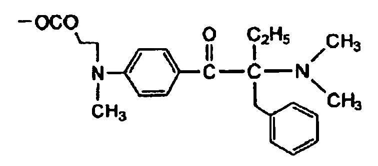 |
| E-13 | 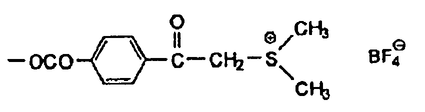 |
| E-14 | 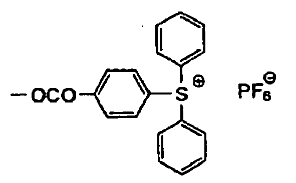 |
| E-15 | 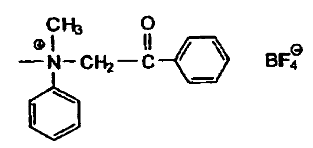 |
| E-16 | 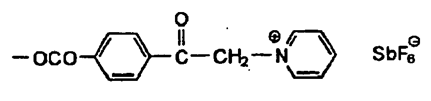 |
| E-17 | 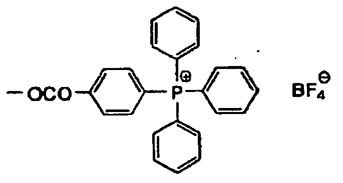 |
| E-18 | 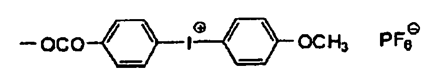 |
| E-19 | 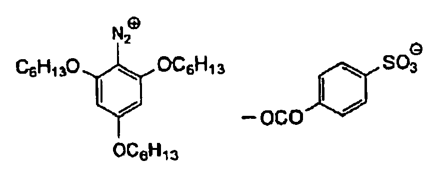 |
| E-20 | 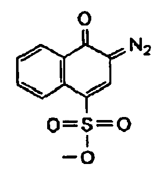 |
| E-21 | 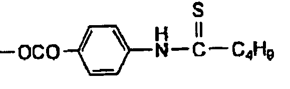 |
| E-22 | 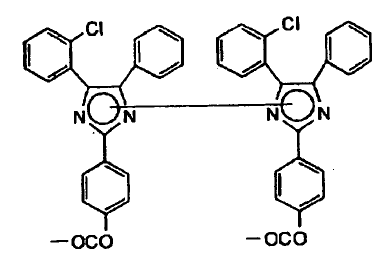 |
| E-23 | 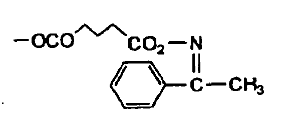 |
| E-24 | 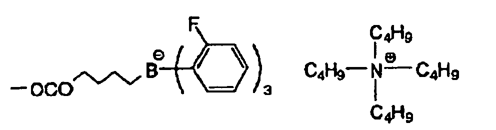 |
| E-25 | 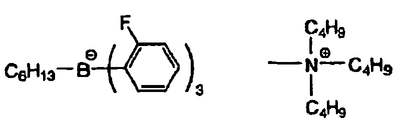 |
| E-26 | 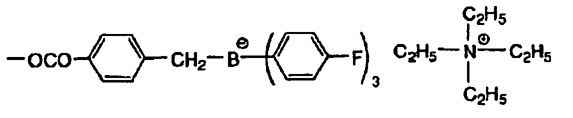 |
| E-27 | 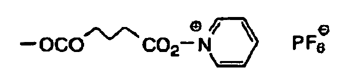 |
| E-28 | 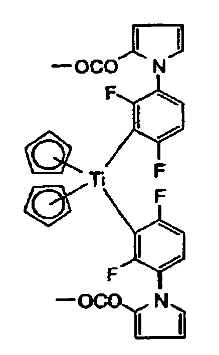 |
| E-29 | 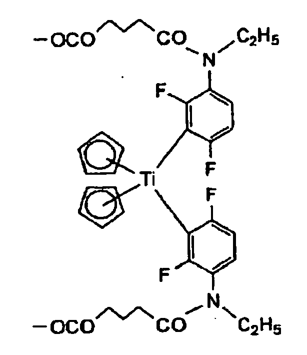 |
| E-30 | 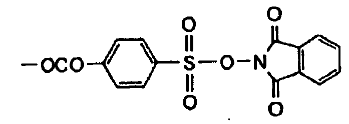 |
| E-31 | 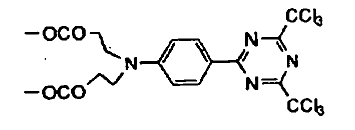 |
| E-32 | 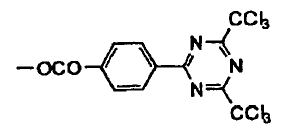 |
| E-33 | 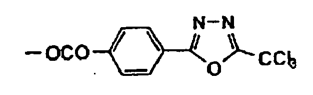 |
| E-34 | 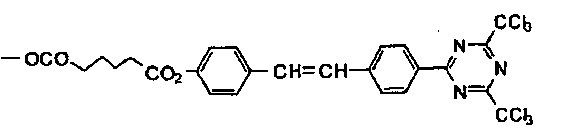 |
| E-35 | 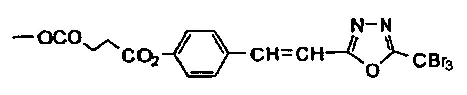 |
| E-36 | 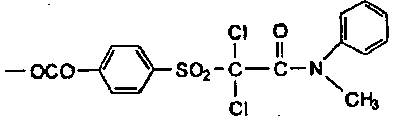 |
| E-37 | 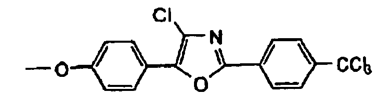 |
| E-38 | 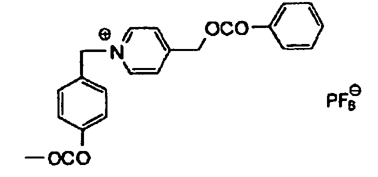 |
| E-39 | 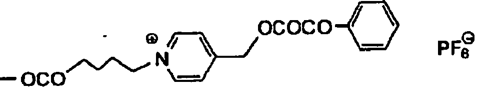 |
| E-40 | 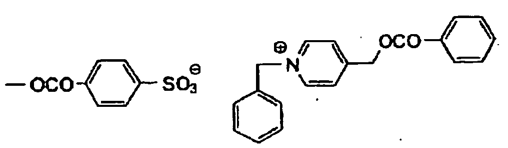 |

| | |
|---|---|
| Group F (F-1)-(F-40) | 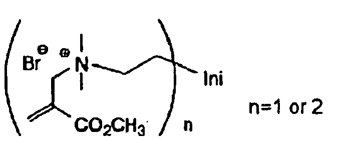 |

| Compound No. | Ini |
|---|---|
| F-1 | 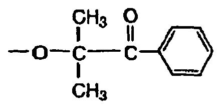 |
| F-2 | 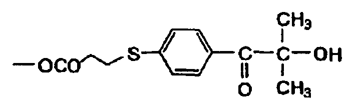 |
| F-3 | 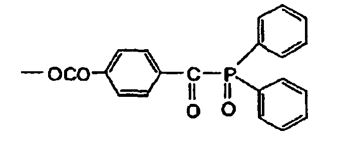 |
| F-4 | 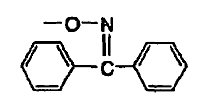 |
| F-5 | 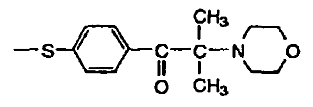 |
| F-6 | 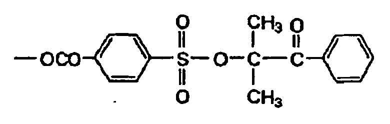 |
| F-7 | 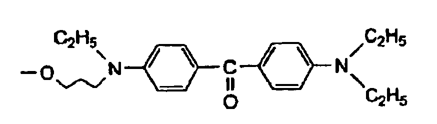 |
| F-8 | 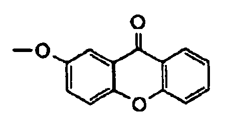 |
| F-9 | 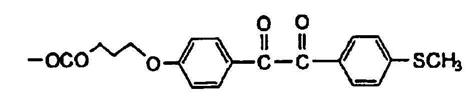 |
| F-10 | 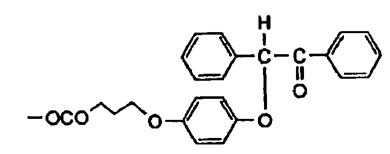 |
| F-11 | 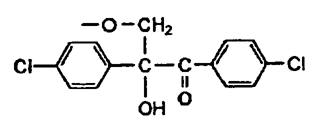 |
| F-12 | 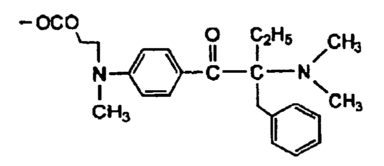 |
| F-13 | 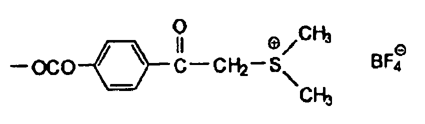 |
| F-14 | 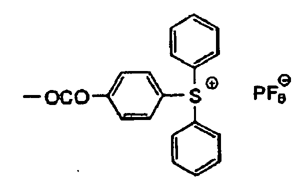 |
| F-15 | 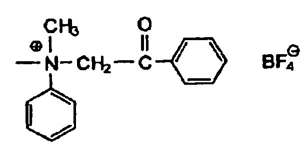 |
| F-16 | 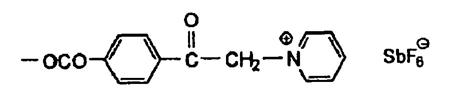 |
| F-17 | 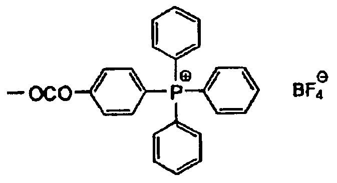 |
| F-18 | 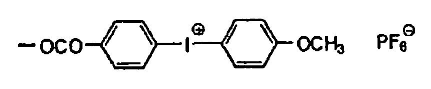 |
| F-19 | 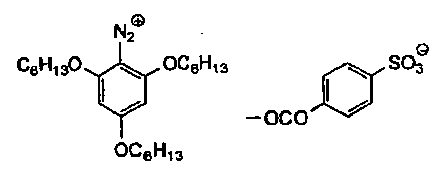 |
| F-20 | 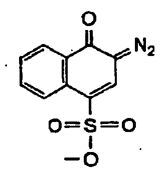 |
| F-21 | 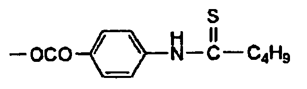 |
| F-22 | 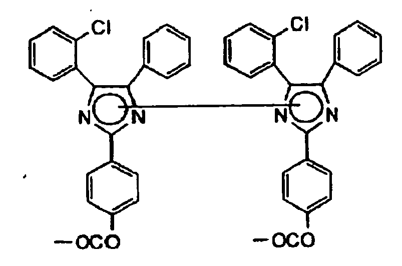 |
| F-23 | 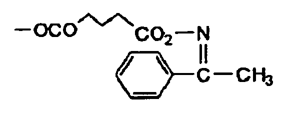 |
| F-24 | 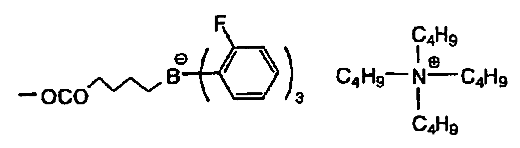 |
| F-25 | 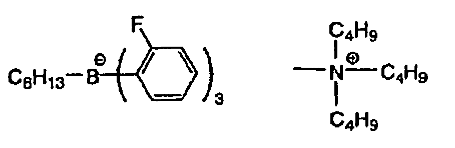 |
| F-26 | 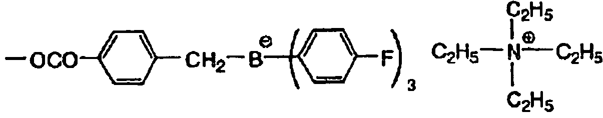 |
| F-27 | 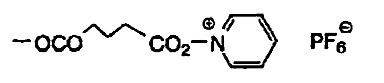 |
| F-28 | 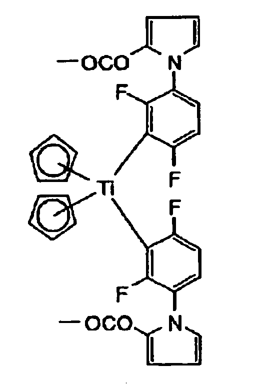 |
| F-29 | 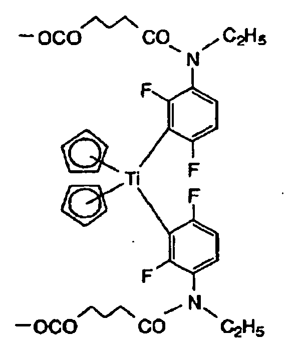 |
| F-30 | 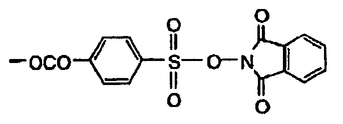 |
| F-31 | 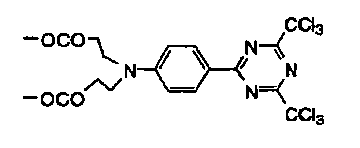 |
| F-32 | 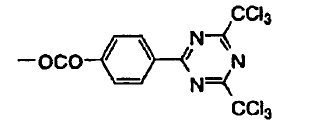 |
| F-33 | 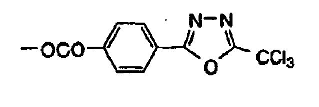 |
| F-34 | 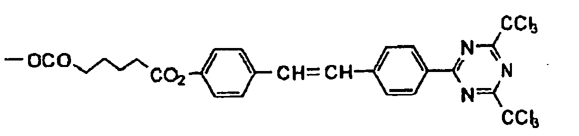 |
| F-35 | 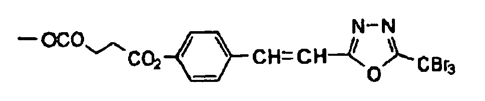 |
| F-36 | 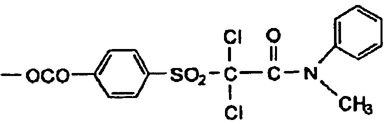 |
| F-37 | 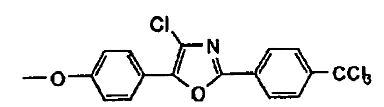 |
| F-38 | 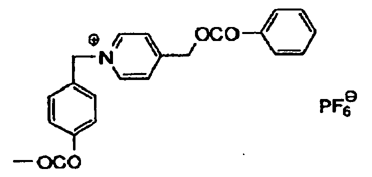 |
| F-39 | 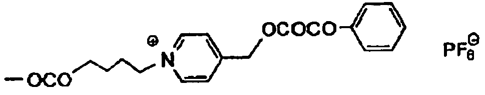 |
| F-40 | 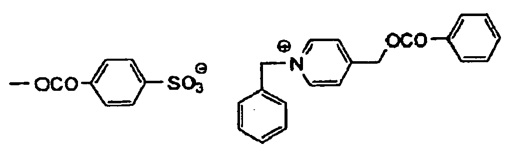 |

| | |
|---|---|
| Group G (G-1)-(G-40) | 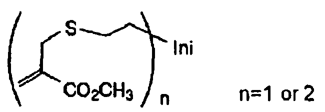 |

| Compound No. | Ini |
|---|---|
| G-1 | 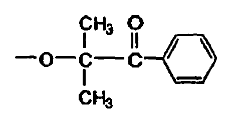 |
| G-2 | 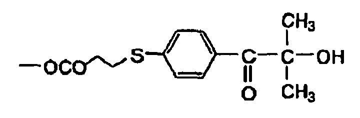 |
| G-3 | 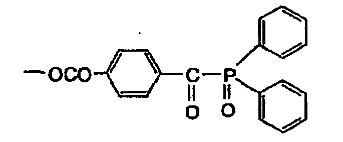 |
| G-4 | 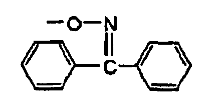 |
| G-5 | 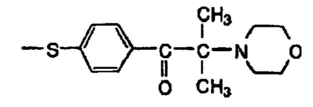 |
| G-6 | 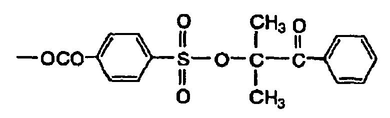 |
| G-7 | 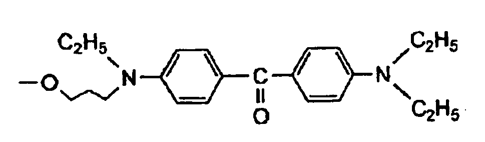 |
| G-8 | 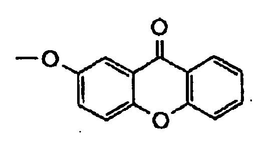 |
| G-9 | 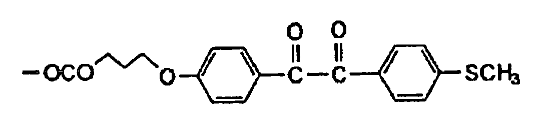 |
| G-10 | 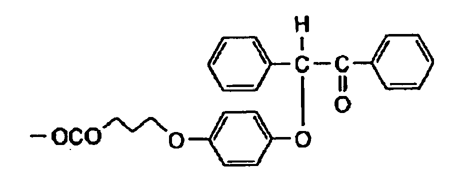 |
| G-11 | 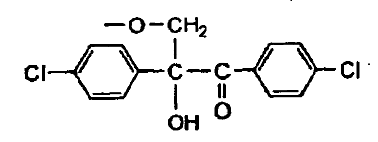 |
| G-12 | 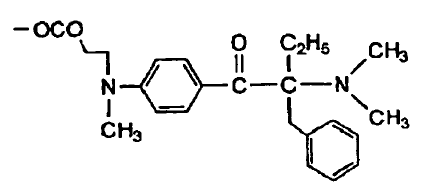 |
| G-13 | 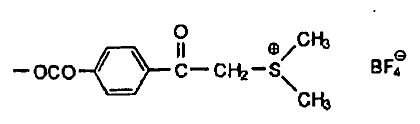 |
| G-14 | 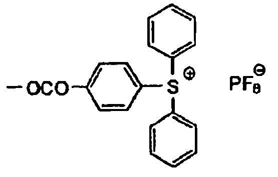 |
| G-15 | 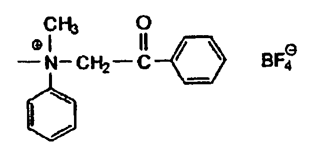 |
| G-16 | 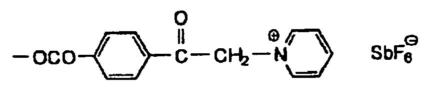 |
| G-17 | 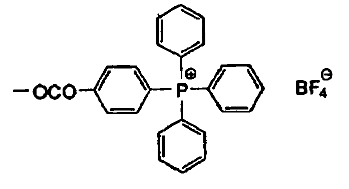 |
| G-18 | 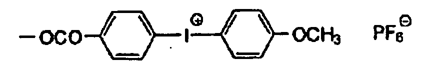 |
| G-19 | 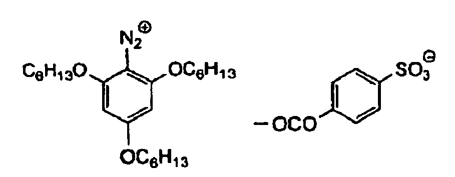 |
| G-20 | 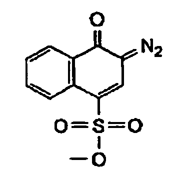 |
| G-21 | 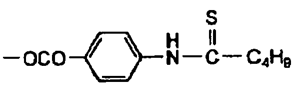 |
| G-22 | 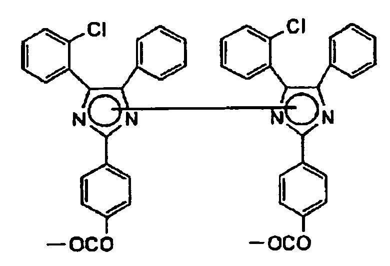 |
| G-23 | 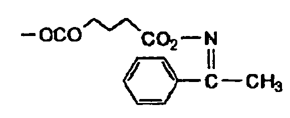 |
| G-24 | 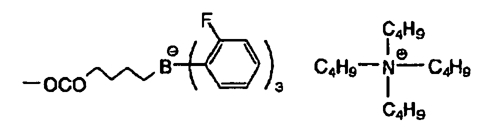 |
| G-25 | 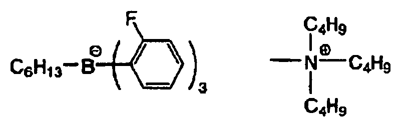 |
| G-26 | 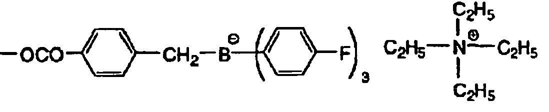 |
| G-27 | 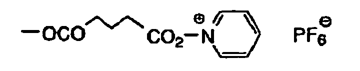 |
| G-28 | 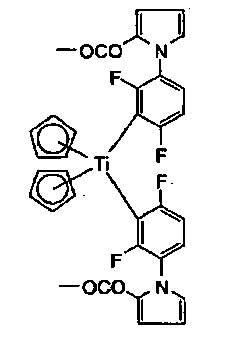 |
| G-29 | 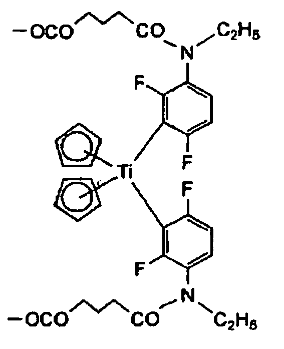 |
| G-30 | 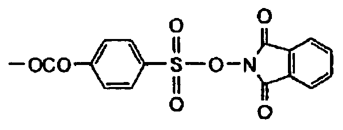 |
| G-31 | 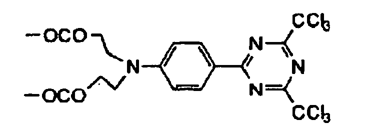 |
| G-32 | 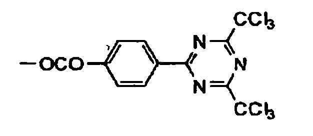 |
| G-33 | 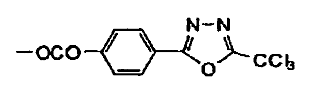 |
| G-34 | 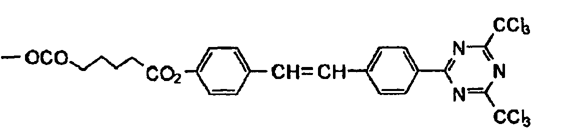 |
| G-35 | 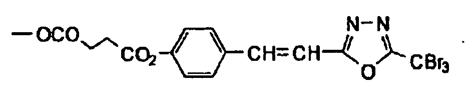 |
| G-36 | 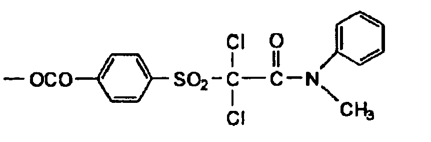 |
| G-37 | 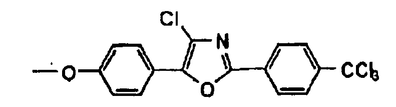 |
| G-38 | 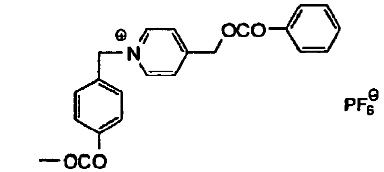 |
| G-39 | 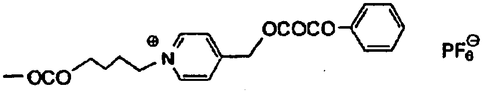 |
| G-40 | 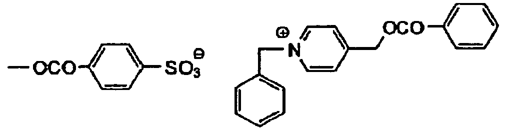 |

| | |
|---|---|
| Group H (H-1-(H-40) | 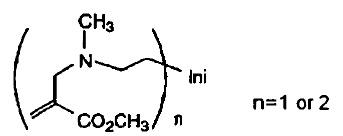 |

| Compound No. | Ini |
|---|---|
| H-1 | 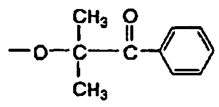 |
| H-2 | 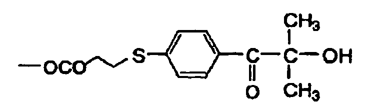 |
| H-3 | 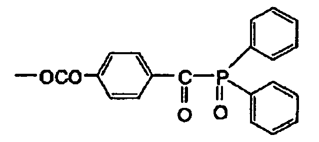 |
| H-4 | 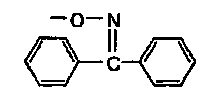 |
| H-5 | 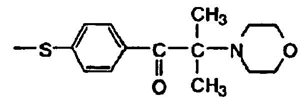 |
| H-6 | 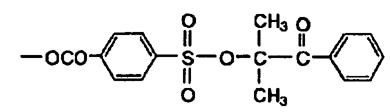 |
| H-7 | 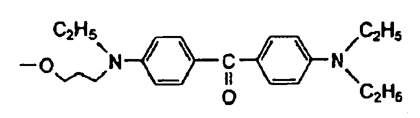 |
| H-8 | 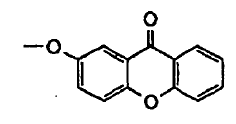 |
| H-9 | 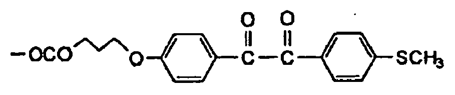 |
| H-10 | 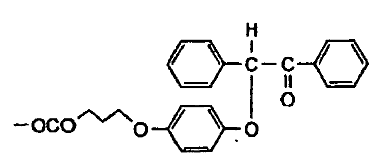 |
| H-11 | 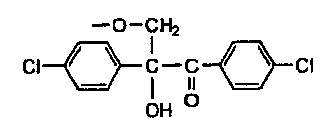 |
| H-12 | 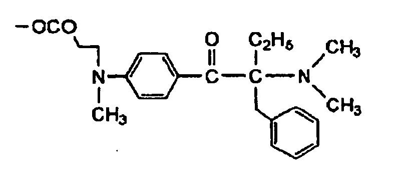 |
| H-13 | 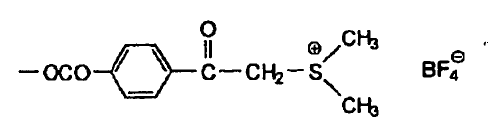 |
| H-14 | 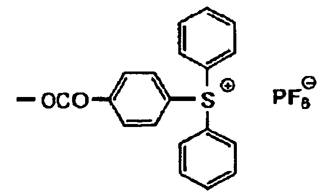 |
| H-15 | 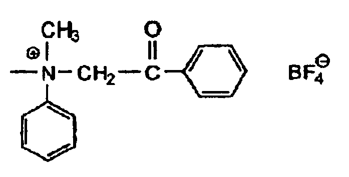 |
| H-16 | 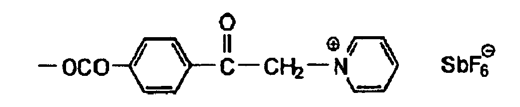 |
| H-17 | 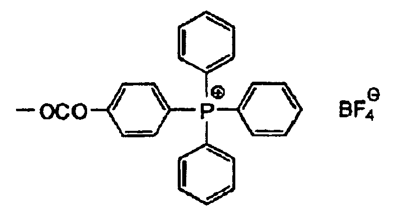 |
| H-18 | 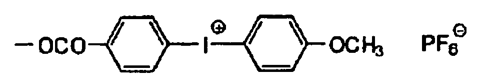 |
| H-19 | 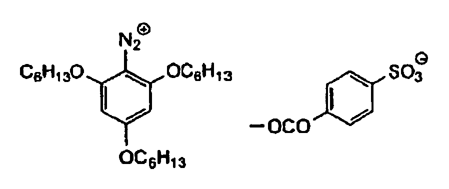 |
| H-20 | 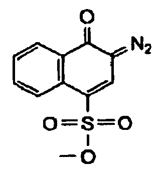 |
| H-21 | 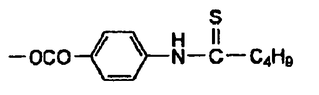 |
| H-22 | 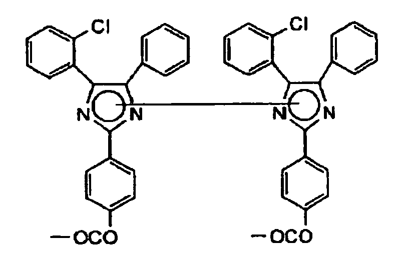 |
| H-23 | 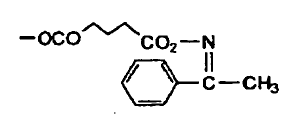 |
| H-24 | 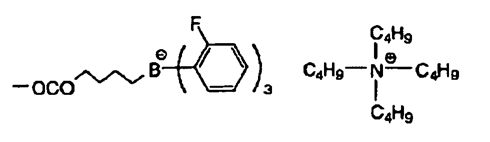 |
| H-25 | 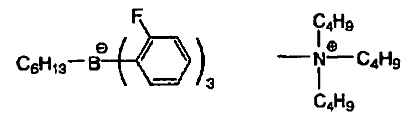 |
| H-26 | 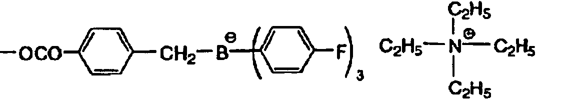 |
| H-27 | 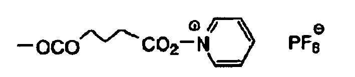 |
| H-28 | 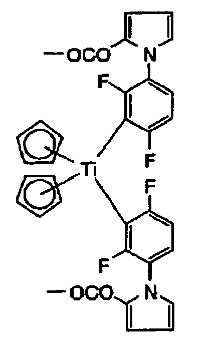 |
| H-29 | 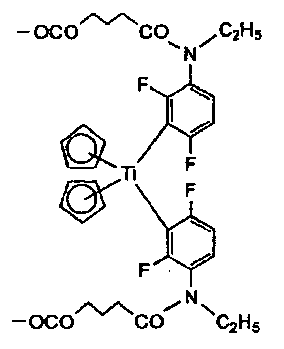 |
| H-30 | 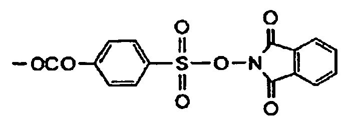 |
| H-31 | 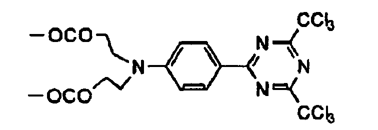 |
| H-32 | 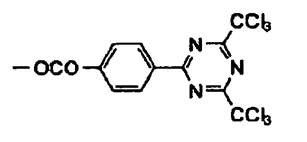 |
| H-33 | 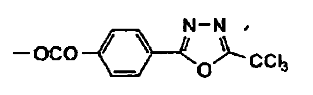 |
| H-34 | 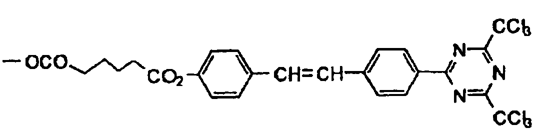 |
| H-35 | 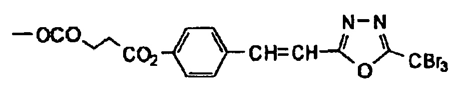 |
| H-36 | 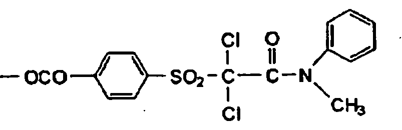 |
| H-37 | 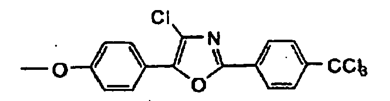 |
| H-38 | 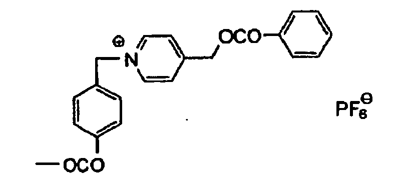 |
| H-39 | 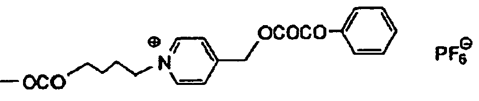 |
| H-40 | 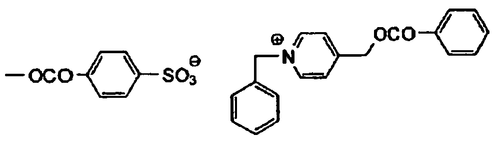 |

| | |
|---|---|
| Group J (J-1)-(J-40) | 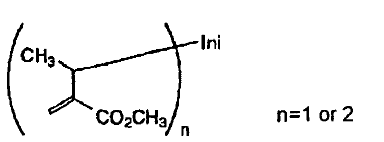 |

| Compound No. | Ini |
|---|---|
| J-1 | 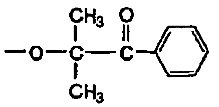 |
| J-2 | 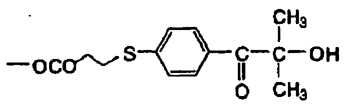 |
| J-3 | 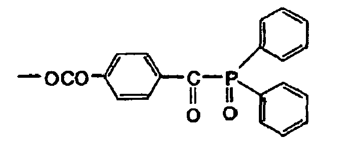 |
| J-4 | 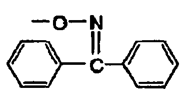 |
| J-5 | 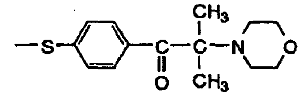 |
| J-6 | 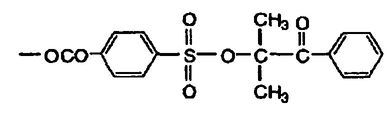 |
| J-7 | 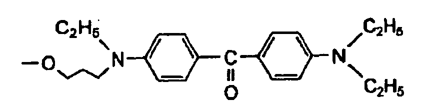 |
| J-8 | 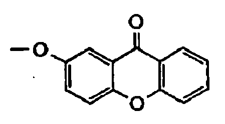 |
| J-9 | 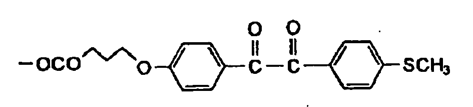 |
| J-10 | 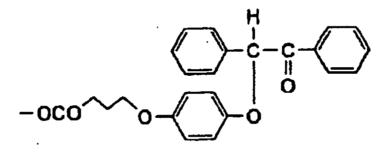 |
| J-11 | 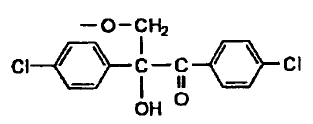 |
| J-12 | 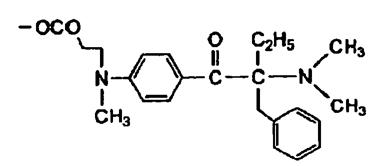 |
| J-13 | 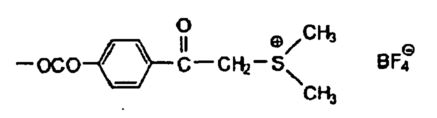 |
| J-14 | 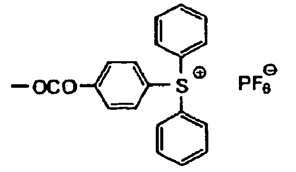 |
| J-15 | 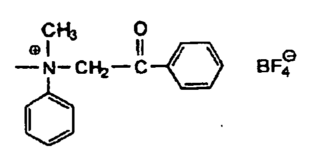 |
| J-16 | 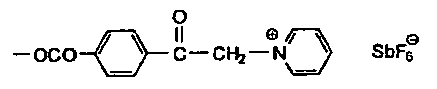 |
| J-17 | 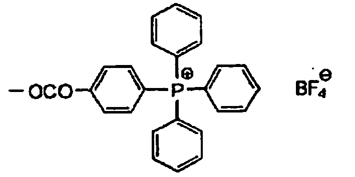 |
| J-18 | 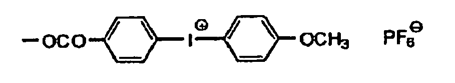 |
| J-19 | 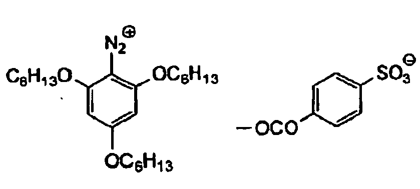 |
| J-20 | 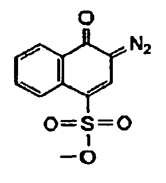 |
| J-21 | 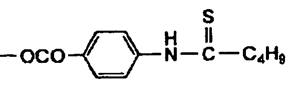 |
| J-22 | 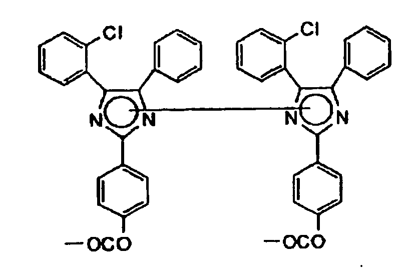 |
| J-23 | 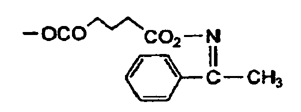 |
| J-24 | 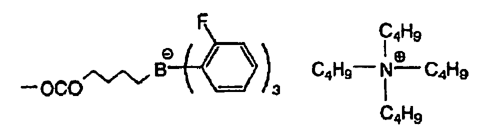 |
| J-25 | 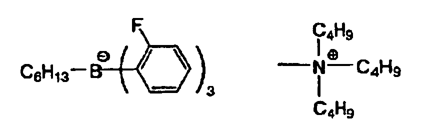 |
| J-26 | 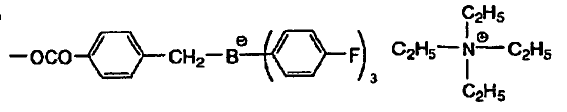 |
| J-27 | 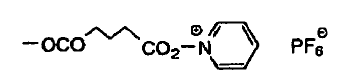 |
| J-28 | 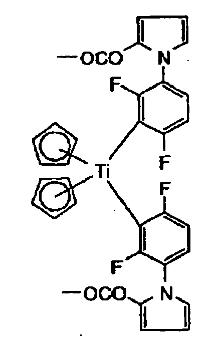 |
| J-29 | 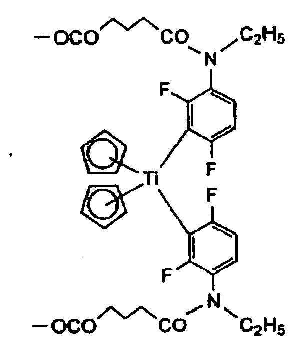 |
| J-30 | 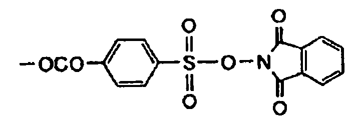 |
| J-31 | 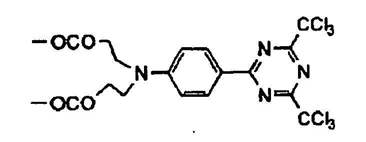 |
| J-32 | 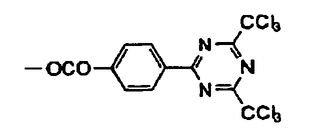 |
| J-33 | 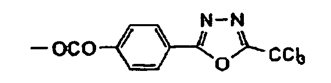 |
| J-34 | 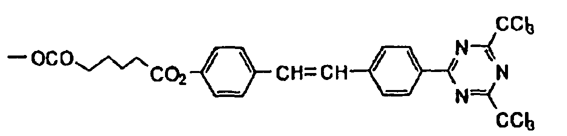 |
| J-35 | 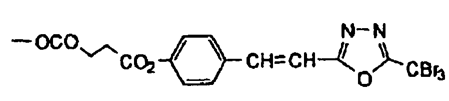 |
| J-36 | 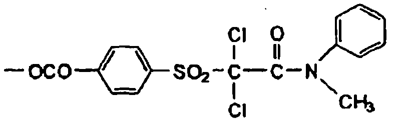 |
| J-37 | 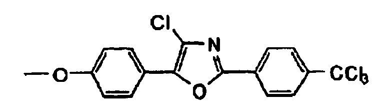 |
| J-38 | 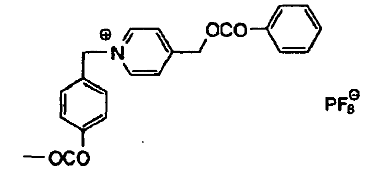 |
| J-39 | 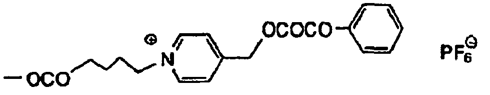 |
| J-40 | 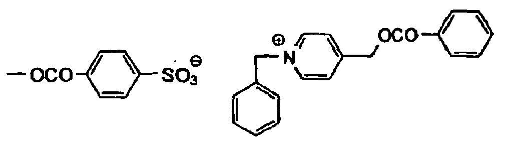 |

The polymerization initiators employed in the present invention may suitably be used alone or in any combination of at least two of them. The polymerization initiators each having a structure represented by the foregoing general formula (I) can in general be easily synthesized according to the method as shown in the following reaction scheme. However, the present invention is not restricted to the initiators prepared according to this specific method at all. 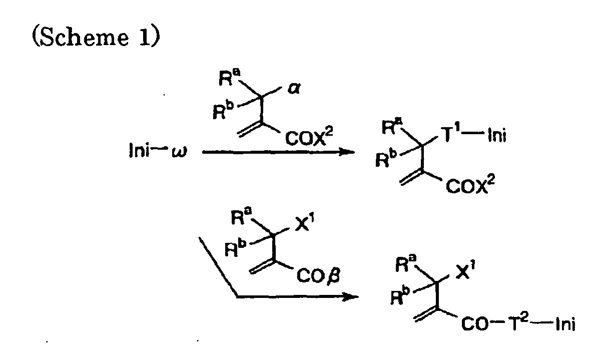 In the formulas, ω represents -CO₂H, -OH, -SH, -N(R)₂ (wherein R represents an alkyl group or an aryl group); *α* represents Br or OH; *β* represents Cl or OH; and T¹ and T² each represents a divalent coupling group generated through the reaction of *α* or *β* with ω or a single bond.

More specifically, a desired polymerization initiator having a structure represented by the foregoing Formula (I) can be prepared by reacting and coupling a polymerization initiator having, at the terminal of the molecular structure, a reactive group mainly selected from the group consisting of -CO₂H, -OH, -SH, -N(R)₂ groups (wherein R represents an alkyl group or an aryl group) with a compound as a precursor for the structure of Formula (I) (such as a Br-, OH-, CO₂H- or COCl-carrying derivative). In this connection, the details of other synthetic methods similar to the foregoing are disclosed in the patents listed above in connection with the foregoing corresponding polymerization initiators.

The amount of the polymerization initiator to be incorporated into the ink composition of the present invention preferably ranges from 0.01 to 60% by mass and more preferably 0.05 to 30% by mass on the basis of the mass of the whole components of the composition. In addition, when using a sensitizing dye, the molar ratio of the polymerization initiator to the sensitizing dye as will be detailed later preferably ranges from 100:0 to 1:99 and more preferably 90:10 to 10:90 and most preferably 80:20 to 20:80, in the ink composition of the present invention. Further, when using a co-sensitizing agent as will be described later, it is suitably used in an amount preferably ranging from 0.01 to 50 parts by mass, more preferably 0.02 to 20 parts by mass and most preferably 0.05 to 10 parts by mass, per one part by mass of the polymerization initiator used.

### [Polymerizable Compounds]

As the polymerizable compound, there can be used herein, for instance, *α* -hetero atom-containing methacrylic compounds, monoacrylate compounds, polyfunctional acrylate monomers and polyfunctional acrylate oligomers, which may be used herein alone or in any combination.

Examples of such other polymerizable compounds are isomyristyl acrylate, isostearyl acrylate, lauryl acrylate, isoamyl acrylate, stearyl acrylate, ethoxy-diethylene glycol acrylate, methoxy-polyethylene glycol acrylate, methoxy-dipropylene glycol acrylate, 2-(2-ethoxyethoxy) ethyl acrylate, butoxy ethyl acrylate, isobornyl acrylate, phenoxy polyethylene glycol acrylate, 2-ethylhexyl-diglycol acrylate, 2-acryloyloxyethyl phthalate, 2-acryloyloxyethyl-2-hydroxyethyl phthalate, ethoxylated phenyl acrylate, 2-acryloyloxyethyl succinate, nonylphenol-ethylene oxide adduct acrylate, 2-acryloyloxyethyl hexahydro-phthalate, lactone-modified flexible acrylate, poly(tetramethylene glycol diacrylate), tetramethylene glycol diacrylate, hydroxy pivalic acid neopentyl glycol diacrylate, dimethylol tricyclo- decane diacrylate, dimethylol di-cyclopentane diacrylate, propylene glycol diglycidyl ether-acrylic acid adduct, modified bisphenol A diacrylates such as bisphenol A diglycidyl ether-(meth)acrylic acid adduct, diacrylate of bisphenol A-propylene oxide adduct, diacrylate of bisphenol A-ethylene oxide adduct, glycerin propoxy tri- acrylate, pentaerythritol tetraacrylate, pentaerythritol ethoxy tetra-acrylate, pentaerythritol hexaacrylate, caprolactone-modified di-pentaerythritol hexaacrylate, ethylene oxide-modified trimethylol-propane triacrylate, capro-lactone-modified tri- methylol-propane triacrylate, di-trimethylolpropane tetra-acrylate, amine-modified polyester tetraacrylate, pentaerythritol triacrylate tolylene diisocyanate urethane prepolymer, and pentaerythritol triacrylate hexamethylene diisocyanate urethane prepolymer. It is also possible to use a polymerizable monomer or oligomer having a molecular weight of not less than 400 (such as an acrylate monomer or an acrylate oligomer having a molecular weight of not less than 400) simultaneous with the foregoing polymerizable compounds. Among them, preferably used herein as such polymerizable compounds are at least one member selected from the group consisting of isomyristyl acrylate, isostearyl acrylate, lauryl acrylate, isoamyl acrylate, stearyl acrylate, ethoxy-diethylene glycol acrylate, methoxy-polyethylene glycol acrylate, methoxy-dipropylene glycol acrylate, 2-(2-ethoxyethoxy) ethyl acrylate and lactone-modified flexible acrylate.

The polymerizable compound can be used in the ink composition of the present invention in an amount preferably ranging from 0.01 to 50.0% by mass, more preferably 0.1 to 10.0% by mass and most preferably 0.1 to 5.0% by mass on the basis of the total mass of the ink composition. The amount of the polymerizable compound thus preferably falls within the foregoing range from the viewpoint of the degree of curing and the storage stability of the resulting ink composition.

### [Coloring Material]

Then the coloring materials usable in the present invention will be described below in detail. The coloring material usable herein is not restricted to any specific one and preferably used herein are pigments excellent in the weatherability, but it is possible to use, in the present invention, any known coloring material such as water- soluble dyes and oil-soluble dyes.

Now, pigments preferably used herein will be described below in detail. The ink composition of the present invention may comprise pigments which cannot practically be applied to the ink jet-recording ink composition because they do not necessarily have high color-developing ability (color density per unitary concentration thereof added), while the use thereof at a high concentration would results in such a phenomenon that the melt viscosity of the resulting ink composition increases up to an extremely high level due to the difficulty in the preparation of a uniform fine particle-dispersion. More specifically, the coloring materials used in the present invention are not restricted to specific ones, but specific examples thereof are organic and inorganic pigments specified by the following numerals and disclosed in, for instance, Color Index:

Examples thereof include red or magenta pigments such as Pigment Red 3, 5, 19, 22, 31, 38, 43, 48:1, 48:2, 48:3, 48:4, 48:5, 49:1, 53:1, 57:1, 57:2, 58:4, 63:1, 81, 81:1, 81:2, 81:3, 81:4, 88, 104, 108, 112, 122, 123, 144, 146, 149, 166, 168, 169, 170, 177, 178, 179, 184, 185, 208, 216, 226, and 257, Pigment Violet 3, 19, 23, 29, 30, 37, 50, and 88, and Pigment Orange 13, 16, 20 and 36; blue or cyan pigments such as Pigment Blue 1, 15, 15:1, 15:2, 15:3, 15:4, 15:6, 16, 17-1, 22, 27, 28, 29, 36, and 60; green pigments such as Pigment Green 7, 26, 36, and 50; yellow pigments such as Pigment Yellow 1, 3, 12, 13, 14, 17, 34, 35, 37, 55, 74, 81, 83, 93, 94, 95, 97, 108, 109, 110, 137, 138, 139, 153, 154, 155, 157, 166, 167, 168, 180, 185, and 193; black pigments such as Pigment Black 7, 28, and 26; and white pigments such as Pigment White 6, 18, and 21, which can arbitrarily be selected depending on the intended purposes.

In this connection, the coloring material can be dispersed in the composition using a various kinds of dispersion devices such as a ball mill, a sand mill, an attritor, a roll mill, an agitator, a Henschel mixer, a colloid mill, an ultrasonic homogenizer, a pearl mill, a wet jet-mill, and a paint shaker. In addition, a dispersant may be used when the coloring material is dispersed within the composition. Such a dispersant is not restricted to any specific one, but preferably used herein are polymeric dispersants and examples thereof include those available from Zeneca Company under the trade name of Solsperse series. It is also possible to use, as an auxiliary agent for dispersion, a synergist corresponding to each pigment. These dispersants and auxiliary agents for dispersion are preferably added to the ink composition in an amount ranging from 1 to 50 parts by mass per 100 parts of the pigment used in the invention. In this connection, a dispersion medium may be used. The dispersion medium may be a solvent or the polymerizable compound used in the present invention, but the radiation-curable ink composition of the present invention is preferably free of any solvent, since it should be cured through the reaction thereof immediately after the bombardment of a subject with the ink composition. If the solvent remains within the cured images, various problems arise, for instance, the deterioration of the resistance to solvent attack and various troubles related to the VOC (Volatile Organic Compound) due to the residual solvent. For this reason, the dispersion medium used herein is not a solvent, but a polymerizable compound, in particular, a monomer preferably selected from those having a lowest possible viscosity, from the viewpoint of the dispersibility of the pigment.

In the present invention, a pigment, a dispersant and a dispersion medium, the conditions for the dispersion thereof and the conditions for the filtration thereof should appropriately be selected in such a manner that the average particle size of the pigment used in the invention preferably ranges from 0.08 to 0.5*µ* m; and the maximum particle size thereof suitably ranges, for instance, from 0.3 to 10*µ* m and preferably 0.3 to 3*µ* m. Such particle size control would permit and ensure the inhibition of the occurrence of any clogging of head nozzles, and the improvement or conservation of storage stability, transparency and sensitivity to curing of the resulting ink. Moreover, when incorporating a coloring material into the ink composition of the present invention, it is suitable that the amount thereof to be added ranges from 1 to 10% by mass and preferably 2 to 8% by mass on the basis of the total mass of the ink composition.

Other components may if necessary be incorporated into the ink composition of the present invention, in addition to those described above.

When using, for instance, an electron beam or X-rays as the radiant rays for irradiation, it is not necessary to use any polymerization initiator, but when using ultraviolet rays (UV light rays), visible or infrared light rays as the radiant rays, a radical polymerization initiator, an auxiliary agent for initiating polymerization, a sensitizing dye or the like is added to the composition while taking into consideration the wavelength of the radiant rays selected. The amount of these compounds to be added in general ranges from 1 to 10% by mass on the basis of the total mass of the ink composition. Such a polymerization initiator used herein may be a variety of known compounds, but it is preferred to select the same from those soluble in the polymerizable compounds used in the invention and specific examples thereof are xanthone or thioxanthone type polymerization initiators, benzophenone type polymerization initiators, quinone type polymerization initiators and phosphine oxide type polymerization initiators.

In addition, a polymerization inhibitor is preferably added to the ink composition in an amount ranging from 200 to 20000 ppm, in order to improve the shelf stability of the resulting composition. The ink jet-recording ink composition of the present invention is preferably heated to a temperature ranging from 40 to 80°C to thus reduce the viscosity thereof prior to the injection thereof and

accordingly, a polymerization inhibitor is preferably added to the composition to prevent any clogging of the head due to the heat polymerization thereof. Examples of such polymerization inhibitors are hydroquinone, benzoquinone, p-methoxy-phenol, TEMPO, TEMPOL and Cupferron Al.

### [Other Components]

In addition to the foregoing, any known compound may if necessary be added to the ink composition of the invention. Such known compounds may appropriately be selected from the group consisting of, for instance, surfactants, additives for leveling, matting agents, and additives for adjusting the physical properties of the ink film such as polyester resins, polyurethane resins, vinyl resins, acrylic resins, rubber type resins and waxes. In addition, it is likewise preferred that a tackifier which never adversely affects the polymerization, is incorporated into the ink composition for the improvement of the ink in the adhesion to the recording medium made of, for instance, polyolefin and/or PET. Specific examples of such tackifiers are high molecular weight adhesive polymers (such as copolymers derived from esters of (meth)acrylic acids and alcohols carrying alkyl groups each having 1 to 20 carbon atoms, esters of (meth)acrylic acids and alicyclic alcohols having 3 to 14 carbon atoms, and esters of (meth)acrylic acids and aromatic alcohols having 6 to 14 carbon atoms) disclosed in J.P. KOKAI 2001-49200 (the description appearing on pages 5 to 6), and polymerizable unsaturated bond-containing low molecular weight tackiness-imparting resins.

It is effective to use an organic solvent for the improvement of the adhesion thereof to a recording medium in a quite small amount. In this case, it is important to use the same in an amount which never becomes a cause of the occurrence of problems concerning the resistance to solvent attack and VOC and accordingly, the amount thereof preferably ranges from 0.1 to 5% by mass and more preferably 0.1 to 3% by mass on the basis of the total mass of the ink composition.

According to a further preferred embodiment of the present invention, a cation polymerizable monomer having a long service life as a polymerization initiator is used in combination with a polymerization initiator as a means for preventing any reduction of the sensitivity of the ink due to the light-shielding effect of the coloring material incorporated into the ink to thus give a radical/cation hybrid type curable ink.

The ink composition of the present invention preferably has a viscosity, at the temperature encountered when it is injected, on the order of, for instance, 7 to 30 mPa · sec and more preferably 7 to 20 mPa · sec, or the mixing ratio of the components of the composition is preferably controlled and determined in such a manner that the viscosity of the resulting composition falls within the range specified above. For instance, the viscosity of the ink composition, as determined at a temperature ranging from 25 to 30°C, ranges from 35 to 500 mPa · sec and preferably 35 to 200 mPa · sec. The use of an ink composition whose viscosity at room temperature is set at a higher level would permit the prevention of any penetration thereof into a recording medium even when using a porous recording medium, the reduction of the amount of uncured monomer and the reduction of the quantity of bad smells. Further, this likewise suppresses the occurrence of any bleeding upon the impact of the ink on the recording medium and as a result, the quality of the image obtained is considerably improved. If the viscosity of the ink, as determined at a temperature ranging from 25 to 30°C, is less than 35 mPa · sec, the resulting effect of controlling the bleeding is too low, while it exceeds 500 mPa · sec, the resulting ink liquid suffers from a problem concerning the delivery thereof.

The surface tension of the ink composition according to the present invention preferably ranges, for instance, from 20 to 30 mN/m and more preferably 23 to 28 mN/m. When using a variety of recording mediums such as polyolefin materials, PET materials, coated paper and non-coated paper for recording, the surface tension of the ink composition is preferably not less than 20 mN/m from the viewpoint of the bleeding and penetration of the resulting ink, while it is preferably not more than 30 mN/m from the viewpoint of the wettability.

### [Substrate]

Then, the substrate will be described hereunder in detail, which can be used in the method for the preparation of a lithographic printing plate, according to the present invention.

The substrate (recording medium) used in the present invention is not restricted to any specific one inasmuch as it is a dimensionally stable plate-like hydrophilic substrate. Specific examples thereof include paper, paper laminated with a plastic film (such as a polyethylene, polypropylene or polystyrene film), a metal plate (such as an aluminum, zinc or copper plate), a plastic film (such as a film of, for instance, cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate and polyvinyl acetal), and paper or a plastic film laminated with the foregoing metal foil or on which the foregoing metal is vapor-deposited. Preferred substrates are, for instance, polyester films and aluminum plates. Preferably used herein are polyester films and aluminum plates. Among them, aluminum plates are particularly preferred, since they have high dimensional stability and they are relatively cheap.

The aluminum plate may be a pure aluminum plate, a plate of an aluminum alloy comprising aluminum as a main component and a trace amount of foreign elements or a thin film of aluminum or an aluminum alloy, which is laminated with a plastic film. Examples of such foreign elements included in the aluminum alloy are silicon, iron, manganese, copper, magnesium, chromium, zinc, bismuth, nickel and titanium. The content of these foreign elements present in the aluminum alloy is preferably not more than 10% by mass. In the present invention, a pure aluminum plate is preferably used as such a substrate, but it would be difficult to form a completely pure aluminum plate because of the limit in the refining technique and therefore, preferably used herein may be aluminum plates containing trace amounts of foreign elements. The aluminum plate usable herein is not restricted in its composition and those prepared from any known and currently used aluminum material can appropriately be used without any restriction.

The thickness of the substrate preferably ranges from 0.1 to 0.6 mm and more preferably 0.15 to 0.4 mm.

Prior to the practical use of the aluminum plate, it is preferably subjected to a surface treatment such as a surface-roughening treatment and/or an anodization treatment. These surface-treatments permit the improvement of the hydrophilicity of the substrate surface and make, easy, the achievement of high adhesion thereof to the image-recording layer. The aluminum plate is if necessary degreased with, for instance, a surfactant, an organic solvent and/or an aqueous alkali solution for the removal of the rolling oil present on the surface of the plate prior to the surface-roughening treatment of the aluminum plate.

The aluminum plate may be surface-roughened according to a variety of methods and examples thereof include a mechanical surface-roughening treatment, an electrochemical surface-roughening treatment (surface-roughening treatment in which the surface of the aluminum plate is electrochemically dissolved) and a chemical surface-roughening treatment (surface-roughening treatment in which the surface of the plate is chemically and selectively dissolved).

Specific examples of such mechanical surface-roughening treatments are various known ones such as a ball-polishing method, a brush-polishing method, a blast- polishing method and a buff-polishing method. Alternatively, it is also possible to use a transfer method in which uneven patterns are transferred to the surface of the plate using a roll having such uneven patterns on its surface during the step for rolling the aluminum plate.

Examples of such electrochemical surface-roughening treatments include those in which the surface-roughening is carried out by passing, through the aluminum plate, an alternating or direct current in an electrolyte containing, for instance, an acid such as hydrochloric acid or nitric acid. In addition, it is also possible to use a method which makes use of a mixed acid as disclosed in J.P. KOKAI Sho 54-63902.

The aluminum plate thus surface-roughened may if necessary be subjected to an alkali etching treatment using an aqueous solution of, for instance, potassium hydroxide or sodium hydroxide, then it is subjected to a neutralization treatment and thereafter, the plate is if necessary anodized for the improvement of the wear resistance.

Electrolytes usable in the anodization treatment of the aluminum plate are, for instance, a variety of electrolytes capable of forming porous anodized layer and specific examples thereof currently used include sulfuric acid, hydrochloric acid, oxalic acid, chromic acid and mixtures thereof. The concentrations of these electrolytes are appropriately determined depending on the kinds of the electrolytes selected.

The anodization conditions may variously vary depending on the electrolyte used and cannot unconditionally be specified, but preferably used are as follows: an electrolyte concentration ranging from 1 to 80% by mass; an electrolyte solution temperature ranging from 5 to 70°C; a current density ranging from 5 to 60 A/dm²; an electric voltage ranging from 1 to 100 V; and an electrolyzation time ranging from 10 seconds to 5 minutes. The quantity of the anodized layer formed preferably ranges from 1.0 to 5.0 g/m² and more preferably 1.5 to 4.0 g/m². The anodized layer formed in an amount falling within the range specified above would permits the formation of a printing plate having good printing durability and carrying non-image area having good resistance to defects.

The foregoing surface-treated and anodized substrate may be used as the substrate of the present invention without any post-treatment, but the plate may if necessary be subjected to a treatment for the further improvement of the adhesion to the upper layers, the hydrophilicity, the anti-fouling properties, and heat insulating properties, selected from, for instance, the following ones: a treatment for expanding the micropores present in the anodized layer, a sealing treatment of the layer such as those disclosed in J.P. KOKAI Nos. 2001-253181 and 2001-322365; and a surface- hydrophilization treatment comprising dipping the plate in an aqueous solution containing a hydrophilic compound. Of course, the micropore-expansion treatment and the sealing treatment are not restricted to these specific ones and they may be any conventionally known one.

### [Sealing Treatment]

Examples of such sealing treatments are a steam-sealing treatment, a sealing treatment with fluoro-zirconic acid alone, a sealing treatment with an aqueous solution containing an inorganic fluorine atom-containing compound such as sodium fluoride, a lithium chloride-containing steam-sealing treatment and a sealing treatment with hot water.

Among them, preferably used herein are sealing treatments using aqueous solutions containing inorganic fluorine atom-containing compounds, a steam-sealing treatment and a sealing treatment with hot water. These treatments will now be described in more detail below:

### <Sealing Treatment with Aqueous Solution of Inorganic Fluoride Compound>

In this sealing treatment using an aqueous solution containing an inorganic fluorine atom-containing compound, such an inorganic fluorine atom-containing compound used may suitably be metal fluorides.

Specific examples thereof are sodium fluoride, potassium fluoride, calcium fluoride, magnesium fluoride, sodium fluorozirconate, potassium fluorozirconate, sodium fluorotitanate, potassium fluorotitanate, ammonium fluorozirconate, ammonium fluorotitanate, fluoro-zirconic acid, fluoro-titanic acid, hexafluoro-silicic acid, nickel fluoride, iron fluoride, fluoro- phosphoric acid, and ammonium fluoro-phosphate. Among these, preferred are sodium fluorozirconate, sodium fluorotitanate, fluoro-zirconic acid and fluoro-titanic acid.

The concentration of the inorganic fluorine atom-containing compound present in the aqueous solution is preferably not less than 0.01% by mass and more preferably not less than 0.05% by mass for ensuring the sufficient sealing of the micropores present in the anodized layer; and preferably not more than 1% by mass and more preferably not more than 0.5% by mass from the viewpoint of the anti-fouling properties.

Preferably, the aqueous solution containing an inorganic fluorine atom-containing compound further comprises a phosphoric acid salt compound. The incorporation of such a compound would permit the improvement of the hydrophilicity of the surface of the anodized layer and this in turn leads to the improvement in the ability of the resulting plate to be developed on a printing machine and the anti-fouling properties of the resulting printing plate.

Examples of such phosphoric acid salt compounds are salts of phosphoric acid with metals such as alkali metals and alkaline earth metals.

Specific examples thereof include zinc phosphate, aluminum phosphate, ammonium phosphate, di-ammonium hydrogen phosphate, ammonium di-hydrogen phosphate, mono-ammonium phosphate, mono-potassium phosphate, mono-sodium phosphate, potassium di-hydrogen phosphate, di-potassium hydrogen phosphate, calcium phosphate, ammonium sodium hydrogen phosphate, magnesium hydrogen phosphate, magnesium phosphate, ferrous phosphate, ferric phosphate, sodium di-hydrogen phosphate, sodium phosphate, di-sodium hydrogen phosphate, lead phosphate, di-ammonium phosphate, calcium di-hydrogen phosphate, lithium phosphate, phospho-tungstic acid, ammonium phospho-tungstate, sodium phospho- tungstate, ammonium phospho-molybdate, sodium phospho-molybdate, sodium phosphite, sodium tripolyphosphate, and sodium pyrophosphate. Among them, preferred are sodium di-hydrogen phosphate, di-sodium hydrogen phosphate, potassium di-hydrogen phosphate and di-potassium hydrogen phosphate.

The combination of the inorganic fluoride compound with the phosphoric acid salt compound is not restricted to any specific one, but the aqueous solution preferably comprises at least sodium fluorozirconate as the inorganic fluorine atom-containing compound and at least sodium di-hydrogen phosphate as the phosphoric acid salt compound.

The concentration of the phosphoric acid salt compound in the aqueous solution is preferably not less than 0.01% by mass and more preferably not less than 0.1% by mass from the viewpoint of the ability of the resulting plate to be developed on a printing machine and the anti-fouling properties of the resulting printing plate, while it is preferably not more than 20% by mass and more preferably not more than 5% by mass from the viewpoint of the solubility thereof in the solution.

The mixing ratio of the compounds in the aqueous solution is not restricted to any specific one, but the ratio (by mass) of the inorganic fluorine atom-containing compound to the phosphoric acid salt compound preferably ranges from 1/200 to 10/1 and more preferably 1/30 to 2/1.

Moreover, the temperature of the aqueous solution is preferably not less than 20°C and more preferably not less than 40°C, while it is preferably not more than 100°C and more preferably not more than 80°C.

In addition, the aqueous solution preferably has a pH value of not less than 1 and more preferably not less than 2, while the aqueous solution preferably has a pH value of not more than 11 and more preferably not more than 5.

The method for sealing treatment using an aqueous solution containing an inorganic fluorine atom-containing compound is not limited to any particular one and may be, for instance, a dipping method and a spraying method. These methods may be used alone once or over several times, or they may be used in any combination of at least two of them.

Among these, preferably used herein is a dipping method. When the aluminum plate is treated according to the dipping method, the treating time is preferably not less than one second and more preferably not less than 3 seconds, while it is preferably not more than 100 seconds and more preferably not more than 20 seconds.

### <Sealing Treatment with Water Vapor (Steam)>

The sealing treatment with steam may be, for instance, one in which the aluminum plate having an anodized layer formed thereon is continuously or intermittently brought into close contact with pressurized steam or the steam under ordinary pressure.

The temperature of the steam is preferably not less than 80°C and more preferably not less than 95°C, while it is preferably not more than 105°C.

The pressure of the steam preferably ranges from (atmospheric pressure - 50mmAq) to (atmospheric pressure + 300mmAq) (1.008 × 10⁵ to 1.043 × 10⁵ Pa).

In addition, the contact time is preferably not less than one second and more preferably not less than 3 seconds, while it is preferably not more than 100 seconds and more preferably not more than 20 seconds.

### <Sealing Treatment with Hot Water>

The sealing treatment with hot water may be, for instance, one in which the aluminum plate having an anodized layer formed thereon is dipped in hot water.

The hot water used in this treatment may comprise an inorganic salt (such as a phosphoric acid salt) or an organic salt.

The temperature of the hot water is preferably not less than 80°C and more preferably not less than 95°C, while it is preferably not more than 100°C.

The time required for dipping the plate in hot water is preferably not less than one second and more preferably not less than 3 seconds, while it is preferably not more than 100 seconds and more preferably not more than 20 seconds.

The hydrophilization treatment used in the present invention may be, for instance, the treatment with alkali metal silicates such as those disclosed in USP Nos. 2,714,066, 3,181,461, 3,280,734 and 3,902,734. In this method, the treatment comprises the step of dipping a substrate in an aqueous solution of, for instance, sodium silicate or electrolyzing the substrate in such an aqueous solution. In addition to the foregoing, usable herein include, for instance, a method disclosed in J.P. KOKOKU Sho 36-22063, in which a substrate is treated with potassium fluorozirconate; and methods disclosed in USP Nos. 3,276,868, 4,153,461 and 4,689,272, wherein a substrate is treated with polyvinyl sulfonic acid.

The substrate usable herein preferably has a center line average surface roughness on the order of 0.10 to 1.2*µ* m. The use of a substrate having such an average surface roughness would permit the achievement of good adhesion to the image- recording layer and the good printing durability and anti-fouling properties of the resulting printing plate.

### [Ink Jet-Recording Method and Device]

The ink jet-recording method and the ink jet-recording device, which can suitably be adopted in the present invention, will now be described below in detail.

In the ink jet-recording method, it is preferred that the ink composition is heated to a temperature ranging from 40 to 80°C to thus reduce the viscosity of the ink composition to a level on the order of 7 to 30 mPa·sec, prior to the injection thereof onto the surface of a substrate. The use of this method would permit the achievement of highly stable injection of the ink composition. In general, the radiation-curable ink composition has a high viscosity as compared with that observed for the usual water-based ink and therefore, the viscosity thereof widely varies in response to the temperature variation encountered during the printing operations. The variation of ink viscosity may greatly affect the size change of ink droplets and the fluctuation in the injection rate thereof and this in turn results in the deterioration of the image quality. Therefore, the variation of the ink temperature during printing should be controlled to a level as low as possible. Thus, the ink temperature should suitably be controlled so that the variation thereof falls within the following range: the set temperature±5°C, preferably the set temperature ±2°C and more preferably the set temperature ± 1°C.

The ink jet-recording device usable in the present invention is characterized, on the one hand, in that it is provided with a means for stabilizing the temperature of the ink composition in order to control the temperature, to a predetermined constant level, of the whole piping works and parts positioned between the ink tank (including an intermediate tank when the device is provided with the same) and the injection plane of the nozzle.

The method for controlling the temperature at this stage is not restricted to any particular one, but it is preferred to arrange a plurality of temperature sensors at every piping works to thus heat the system or to control the temperature while taking into consideration the flow rate of ink and the environmental temperature. The head unit to be heated is preferably thermally insulated or thermally shielded so that the main body of the device is never affected by the temperature of the outside air. It is likewise preferred that the heat content of a heating unit is reduced and simultaneously it is thermally isolated from other portions to make the printer-rise time required for the heating short or to reduce the loss of heating energy.

Then, the conditions for the irradiation of the ink composition injected on the surface of a substrate will be described below. The fundamental irradiation method and conditions for irradiating with such radiant rays are disclosed in J.P. KOKAI Sho 60-132767. Specifically, light sources are positioned on both sides of a head unit and the head unit and the light sources are scanned according to the so-called shuttle system to thus irradiate the ink composition. The irradiation with radiant rays is carried out after the elapse of a desired time period from the bombardment of the ink composition. Further, the curing of the ink may be completed by the use of a separate light source free of any driving means. WO 99/54415 discloses an irradiation method which makes use of an optical fiber or a method in which a collimated light beam from a light source is incident upon a mirror surface positioned on the side face of the head unit to thus irradiate the recording area with UV light rays. In the present invention, it is possible to use these irradiation methods.

Moreover, it is desirable in the present invention that the ink composition is warmed to a predetermined constant temperature and, simultaneously, the irradiation with radiant rays should be carried out after the elapse of a desired time period from the impact of the ink composition on the substrate, which ranges from 0.01 to 0.5 second, preferably 0.01 to 0.3 second and more preferably 0.01 to 0.15 second. Any bleeding of the ink composition injected on the substrate possibly observed prior to the curing of the ink composition can be inhibited by controlling the time elapsed from the impact of the ink till the irradiation with radiant rays to a level as short as possible, as has been discussed above. Moreover, in case of a porous recording medium, the ink injected on the substrate can be exposed to radiant rays before the ink penetrates even in such a deeper portion that the light rays from the light sources never reach and therefore, the cured ink composition or the recorded material is almost free of any un-reacted monomer and as a result, the generation of any offensive odor can be suppressed. The combination of the ink jet-recording method as has been described above with the ink composition of the present invention would permit the achievement of an extremely high synergistic effect. In particular, a considerably excellent effect would be obtained by the use of an ink composition having a viscosity as determined at 25°C ranging from 35 to 500MP · sec. If using the foregoing ink jet-recording method, the dot diameter of the ink impacted on the surface can be kept constant even when using a variety of recording mediums having different surface wettability and the quality of images can thus be improved. Incidentally, a color image is preferably obtained by superposing colors, in order, from a low lightness one to a higher lightness one. If multiple ink compositions are thus superposed, in order of the magnitude of lightness, the radiant rays are liable to easily reach even the lower ink layers and accordingly, it would be expected to ensure high sensitivity to curing, to reduce the amount of residual monomers, to suppress the generation of any offensive odor and to improve the adhesion. In addition, all of the ink compositions can first be injected and then comprehensively exposed to light rays, but it is rather preferred to expose each time a color is injected from the viewpoint of the acceleration of the curing.

The ink jet-recording device usable in the present invention is not restricted to any particular one and may be any commercially available one. According to the present invention, images can be recorded on a recording medium using any commercially available ink jet-recording device.

### [Examples]

The present invention will hereunder be described in more detail with reference to the following Examples, but the present invention is not restricted to the embodiments illustrated in these specific Examples at all.

### Example 1

### «Preparation of Pigment Dispersion»

According to the following method, there was prepared each of the following yellow, magenta, cyan and black pigment dispersions 1. In this respect, each dispersion was prepared using a known dispersion device while appropriately adjusting the dispersion conditions in such a manner that the average particle size of each pigment dispersion fell within the range of from 0.2 to 0.3*µ* m and then filtered through a filter with heating to thus give each corresponding pigment dispersion.

### (Yellow Pigment Dispersion 1)

| Component | Amt. (part by mass) |
|---|---|
| C.I. Pigment Yellow 12 | 10 |
| Polymeric dispersant (Solsperse series, available from Zeneca Company) | 5 |
| Stearyl acrylate | 85 |

### (Magenta Pigment Dispersion 1)

| Component | Amt. (part by mass) |
|---|---|
| C.I. Pigment Red 57:1 | 15 |
| Polymeric dispersant (Solsperse series, available from Zeneca Company) | 5 |
| Stearyl acrylate | 80 |

### (Cyan Pigment Dispersion 1)

| Component | Amt. (part by mass) |
|---|---|
| C.I. Pigment Blue 15:3 | 20 |
| Polymeric dispersant (Solsperse series, available from Zeneca Company) | 5 |
| Stearyl acrylate | 75 |

### (Black Pigment Dispersion 1)

| Component | Amt. (part by mass) |
|---|---|
| C.I. Pigment Black 7 | 20 |
| Polymeric dispersant (Solsperse series, available from Zeneca Company) | 5 |
| Stearyl acrylate | 75 |

### «Preparation of Ink»

An ink having each corresponding color was prepared according to the method described below and using each dispersion 1 prepared above:

### (Yellow Ink 1)

| Component | Amt. (part by mass) |
|---|---|
| Yellow Pigment Dispersion 1 | 20 |
| Stearyl acrylate | 60 |
| Difunctional aromatic urethane acrylate specified below (molecular weight (Mw): 1500) | 10 |
| Hexa-functional aliphatic urethane acrylate specified below (Mw: 1000) | 5 |
| Polymerization Initiator (A-2) | 5 |

### (Magenta Ink 1)

| Component | Amt. (part by mass) |
|---|---|
| Magenta Pigment Dispersion 1 | 20 |
| Stearyl acrylate | 60 |
| Difunctional aromatic urethane acrylate specified below (Mw: 1500) | 10 |
| Hexa-functional aliphatic urethane acrylate specified below (Mw: 1000) | 5 |
| Polymerization Initiator (A-2) | 5 |

### (Cyan Ink 1)

| Component | Amt. (part by mass) |
|---|---|
| Cyan Pigment Dispersion 1 | 15 |
| Stearyl acrylate | 65 |
| Difunctional aromatic urethane acrylate specified below (Mw: 1500) | 10 |
| Hexa-functional aliphatic urethane acrylate specified below (Mw: 1000) | 5 |
| Polymerization Initiator (A-2) | 5 |

### (Black Ink 1)

| Component | Amt. (part by mass) |
|---|---|
| Black Pigment Dispersion 1 | 15 |
| Stearyl acrylate | 65 |
| Difunctional aromatic urethane acrylate specified below (Mw: 1500) | 10 |
| Hexa-functional aliphatic urethane acrylate specified below (Mw: 1000) | 5 |
| Polymerization Initiator (A-2) | 5 |

Each of the foregoing formulations having the corresponding colors and compositions thus prepared was filtered through a filter having an absolute degree of filtration of 2 µm to thus give each intended ink 1 having the corresponding color.

### «Ink Jet-Recording of Images»

Then, images were recorded on a recording medium using a commercially available ink jet-recording device provided with a piezoelectric ink jet-nozzle. The ink-supply system thereof comprised a main tank, piping works for supply, an ink-supply tank arranged immediately before the ink jet head, a filter, and a piezoelectric ink-injection head and the region extending from the ink-supply tank to the ink jet head portion was thermally insulated and heated. Temperature sensors were positioned on the ink-supply tank and at a position in the proximity to the nozzle of the ink jet head and the temperature of the device was controlled in such a manner that the nozzle portion was always maintained at a temperature of 70°C±2°C. The piezoelectric ink-injection head was operated in such a manner that it could inject multiple-sized dots of 8 to 30 pl at a resolution of 720 × 720 dpi. After the impact of the ink on the recording medium, UV-A light rays were condensed to an illuminance at the exposed surface of 100 mW/cm², and the exposure system, the main scanning speed and the frequency of injection were controlled in such a manner that the irradiation with the light rays was initiated after 0.1 second from the impact of the ink on the medium. Moreover, the exposure time was set at a variety of levels and the exposure energy was applied onto the impacted ink. In this connection, the unit "dpi" used herein means the number of dots per unit length (one inch (2.54 cm)).

The inks each having the corresponding color and prepared above were injected on a recording medium in the order, black, cyan, magenta and yellow, at the environmental temperature of 25°C and the irradiation with the ultraviolet rays was carried out every time each ink was applied. In this respect, the total energy exposed per color was evenly set at 300 mJ/cm², which was the energy required for the complete curing of each color ink till the bombarded ink completely lost its stickiness through the examination by touch. Each color image was recorded on, as recording mediums, a surface-grained aluminum substrate, a surface-treated transparent twin-screw extruded polypropylene film to which good printability was imparted, a soft polyvinyl chloride film, cast-coated paper, and commercially available regenerated paper and as a result, each image thus obtained had a high resolution and was free of any dot's bleeding. Further, all of the inks were completely free of any strike through even when an image was recorded on wood free paper, the ink was sufficiently cured and the resulting recorded images never gave out bad smells due to the presence of un-reacted monomers. Moreover, the ink recorded on a film was sufficiently flexible, the ink never underwent any cracking even if it was folded and any problem never arose in the Cellotape (registered trade mark)-peel test for the inspection of adhesiveness.

### Examples 2 to 5:

### «Preparation of Ink»

Magenta inks 2 to 5 were prepared according to the method described below.

### (Magenta Ink 2)

| Component | Amt. (part by mass) |
|---|---|
| Magenta Pigment Dispersion 1 | 20 |
| Isonorbornyl acrylate | 40 |
| Di-functional aromatic urethane acrylate specified below (Mw: 1500) | 10 |
| Hexa-functional aliphatic urethane acrylate specified below (Mw: 1000) | 5 |
| Polymerization Initiator (A-18) | 5 |

### (Magenta Ink 3)

| Component | Amt. (part by mass) |
|---|---|
| Magenta Pigment Dispersion 1 | 20 |
| Isonorbornyl acrylate | 50 |
| Lactone-modified acrylate specified below (Mw: 458) | 20 |
| Hexa-functional aliphatic urethane acrylate specified below (Mw: 1000) | 5 |
| Polymerization Initiator (B-2) | 5 |

### (Magenta Ink 4)

| Component | Amt. (part by mass) |
|---|---|
| Magenta Pigment Dispersion 2 | 20 |
| Isonorbornyl acrylate | 70 |
| Hexa-functional aliphatic urethane acrylate specified below (Mw: 1000) | 5 |
| Polymerization Initiator (C-5) | 5 |

### (Preparation of Magenta Pigment Dispersion 2)

The same procedures used in the preparation of the magenta pigment dispersion 1 described in Example 1 were repeated except for using isobornyl acrylate in place of the stearyl acrylate used in Example 1 to thus obtain a pigment dispersion (magenta pigment dispersion 2).

### (Magenta Ink 5)

| Component | Amt. (part by mass) |
|---|---|
| Magenta pigment dispersion 2 | 20 |
| Isobornyl acrylate | 60 |
| Tetramethylol-methane triacrylate | 15 |
| Polymerization Initiator (J-1) | 5 |

### Di-functional aromatic urethane acrylate

A product obtained by capping the terminal of a condensate (Mw1500): 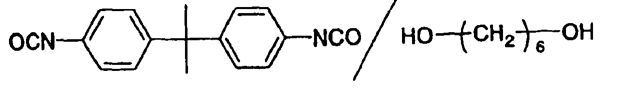 with

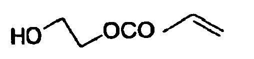

### Hexa-functional aliphatic urethane acrylate

A product obtained by capping the terminal of a condensate (Mw: 1500): 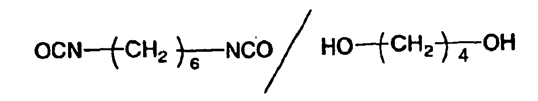 with

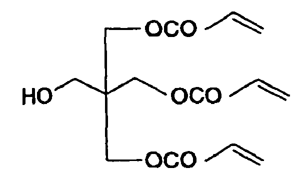

### Lactone-modified acrylate:

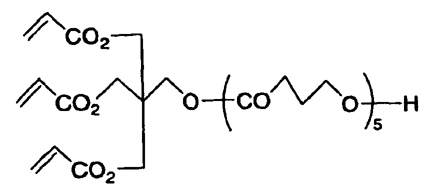

### Comparative Examples 1 to 5

### «Preparation of Ink»

The ink compositions prepared in Comparative Examples 1 to 5 were the same as the foregoing magenta inks 1 to 5 in which the following polymerization initiators each free of any polymerizable group were substituted for the polymerizable group-containing polymerization initiators:
"A-2" → "X-1"; "A-18" → "X-2"; "B-2" → "X-3"; "C-5" → "X-4"; and "J-1" → "X-5"

The following are the structures of these compounds (X-1 to X-5):

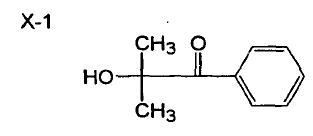

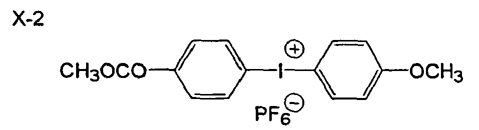

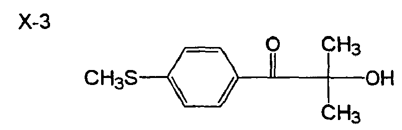

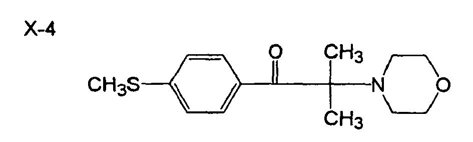

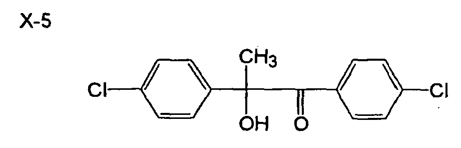

The ink compositions prepared in the foregoing Examples and Comparative Examples were found to have viscosities as determined at the injection temperature falling within the range of from 7 to 20 mPa · sec.

### «Ink Jet-Recording of Images»

Magenta images were printed according to the method used in Example 1 using the magenta inks 2 to 7 prepared above and the magenta ink 1 prepared in

### Example 1.

### «Evaluation of Ink Jet-Recorded Images»

Then the images thus recorded were inspected for the sensitivity required for curing, the penetrability thereof through commercially available regenerated paper, the ink-bleeding on a surface-grained aluminum substrate, the adhesion, the printing durability of the resulting printing plate and the storage stability, according to the following methods.

### (Determination of Sensitivity to Curing)

The quantity of energy (mJ/cm²) applied onto the image-carrying plane irradiated with ultraviolet rays, which was required for curing the ink till it completely lost the stickiness, was herein defined to be the desired sensitivity to curing. In this respect, the smaller the numerical value thus determined, the higher the sensitivity to curing.

### (Evaluation of Penetrability Through Commercially Available Regenerated Paper)

The images printed on commercially available regenerated paper were inspected for the ability thereof to pass through the paper and the latter was evaluated on the basis of the following evaluation criteria:
○: There was observed almost no penetration of ink and the image never gave out any smells of the residual monomers.
Δ: There was observed a slight penetration of the ink and the image slightly gave out smells of the residual monomers.
×: There was observed the distinct penetration of the ink even to the back face of the recording medium and the image gave out strong smells of the residual monomers.

### (Evaluation of Bleeding of Ink on Surface-Grained Aluminum Substrate)

The images printed on a surface-grained aluminum substrate were inspected for the bleeding thereof on the aluminum substrate and the latter was evaluated on the basis of the following evaluation criteria:
○: There was not observed any bleeding between the neighboring dots.
Δ: There was observed slight bleeding of dots.
×: There was observed bleeding of dots and the images distinctly became dim.

### (Evaluation of Adhesion to Surface-Grained Aluminum Substrate)

The foregoing printed images were used as such (defect-free samples) and there were made 11 each of vertical and horizontal cuts on each printed image at intervals of 1 mm according to JIS K-5400 to form 100 checkers of 1 mm square and to thus form each corresponding checker pattern-carrying sample. A cellophane tape (Cellotape (registered trade mark)) was adhered to the image-carrying face of each sample, then quickly peeled off at an angle of 90 degrees and the conditions or printed images remained un-remove were evaluated on the basis of the following criteria:
○: There was not observed any peeling off of the printed image even in the checker pattern-cutting (lattice pattern-cutting) test at all.
Δ: There was observed slight peeling off of the printed image in the checker pattern-cutting test, but there was observed almost no peeling off of the printed image on the defect (checker pattern)-free samples.
×: There was observed easy peeling off of the printed image in the both Cellotape-peeling tests carried out using the foregoing defect-free and checker pattern-carrying samples.

### (Evaluation of Printing Durability)

The printing plate prepared above by printing images on a surface-grained aluminum substrate was fitted to a Heidel KOR-D printing press and printed matters were prepared by the operation of the printing press to thus determine the number of printed matters carrying complete images and the number of printed matters were relatively compared with one another (the number of the complete printed matters obtained using the sample of Example 1 was defined to be 100) and the results thus obtained were used as the indication of the printing durability. In this respect, the greater the number of the printed matters, the higher the printing durability of the printing plate.

### (Evaluation of Storage Stability)

The viscosity of each ink was determined at the injection temperature after storing the same at 75% RH and 60°C for 3 days and the increment of the ink viscosity was expressed in terms of the ratio of the viscosity observed after its storage to that observed before its storage. In this connection, if the viscosity is not changed and the ratio is closer to 1.0, the corresponding ink had greater storage stability and it is not preferred to use an ink having a ratio exceeding 1.5, since the ink often causes clogging of the injection nozzle during the impact of the ink.

The results obtained in these evaluation tests are summarized in the following Table A.

**Table A-1 (Examples)**

| Ex. No. | 1 | 2 | 3 | 4 | 5 |
|---|---|---|---|---|---|
| Magenta Ink No. | 1 | 2 | 3 | 4 | 5 |
| Sensitivity to curing (mJ/cm²) | 170 | 150 | 150 | 140 | 160 |
| Penetrability | ○ | ○ | ○ | ○ | ○ |
| Bleeding of Ink | ○ | ○ | ○ | ○ | ○ |
| Adhesion | ○ | ○ | ○ | ○ | ○ |
| Printing Durability | 100 | 120 | 120 | 100 | 100 |
| Storage Stability | 1.2 | 1.2 | 1.3 | 1.3 | 1.2 |

**Table A-2 (Comparative Examples)**

| Ex. No. | 1 | 2 | 3 | 4 | 5 |
|---|---|---|---|---|---|
| Magenta Ink No. | 1 | 2 | 3 | 4 | 5 |
| Sensitivity to curing (mJ/cm²) | 200 | 200 | 200 | 200 | 200 |
| Penetrability | × | Δ | Δ | Δ | Δ |
| Bleeding of Ink | × | Δ | Δ | Δ | Δ |
| Adhesion | × | Δ | Δ | Δ | × |
| Printing Durability | 50 | 80 | 70 | 80 | 60 |
| Storage Stability | 1.6 | 1.5 | 1.6 | 1.5 | 1.5 |

As will be seen from the data listed in Table A, the ink composition which makes use of, as the polymerization initiator, the *α* -hetero atom-containing methacrylic compound according to the present invention is highly sensitive to the irradiation with radiant rays, has a good ability to form images on paper or an ability of forming high quality images thereon and is excellent in the storage stability and further, the ink composition likewise permits the formation of images excellent in the printing durability and the quality thereof even when using the same in the preparation of a printing plate. (see, Examples 1 to 5) Contrary to this, the ink composition which makes use of a conventional polymerization initiator has a low sensitivity to curing, can not form an image free of any ink bleeding on paper, and is further inferior in the adhesion to the substrate and the storage stability. The latter forms images having impaired printing durability, when using the same in the preparation of a printing plate. (see, Comparatice Examples 1 to 5)

## Claims

1. An ink jet-recording ink composition capable of being cured by irradiation with radiant rays, which comprises at least a coloring material, a polymerizable compound and a polymerization initiator, wherein the polymerization initiator is a compound possessing a polymerizable structure in the molecule selected from a styryl group, an allyl group, a vinyl group and an α-hetero methacryl group represented by the general formula (I): 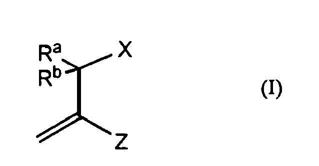 wherein R^{a} and R^{b} each independently represents a hydrogen atom, a halogen atom, a cyano group or an organic group; Z represents CN or COY; X represents a group or a halogen atom bonded to the α-carbon through a hetero atom; and Y represents a group or a halogen atom bonded to the carbonyl group through a hetero atom, provided that X and Y, R^{a} and R^{b}, or X and R^{a} or R^{b} may be linked together to form a ring-like structure.

2. An ink jet-recording ink composition according to Claim 1, wherein the polymerizable structure present in the polymerization initiator is an α-hetero methacryl group represented by the general formula (I).

3. An ink jet-recording ink composition according to Claim 1, wherein the polymerization initiator is a compound represented by the following general formula (II): 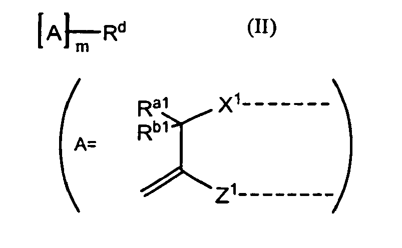 wherein m is an integer ranging from 1 to 6, R^{a1} and R^{b1} each independently represents a hydrogen atom, a halogen atom, a cyano group or a monovalent organic group; X¹ represents a halogen atom, a monovalent or divalent group bonded through a hetero atom, or a divalent hetero atom; Z¹ represents CN or COY¹; Y¹ represents a monovalent or divalent group bonded to a carbonyl group through a hetero atom, or a halogen atom, provided that at least one of X¹ and Y¹ represents a divalent group; R^{d} represents a monovalent to hexa-valent structure for initiating polymerization derived from a polymerization initiator; the dotted line represents a bonding arm when X¹ or Y¹ and R^{d} are linked together and the number of the bonding arms present in the structure ranges from 1 to 6 in total.

4. An ink jet-recording ink composition according to Claim 3, wherein the "monovalent group bonded through a hetero atom" is a hydroxyl group, a substituted oxy group, a mercapto group, a substituted thio group, an amino group, a substituted amino group, a sulfo group, a sulfonate group, a substituted sulfinyl group, a substituted sulfonyl group, a phosphono group, a substituted phosphono group, a phosphonate group, a substituted phosphonate group, a nitro group or a hetero ring-containing group (provided that this group is linked through the hetero atom), and the "divalent group bonded through a hetero atom" is one derived from the foregoing monovalent group in which one hydrogen atom or other atom or group is replaced with a bonding arm.

5. An ink jet-recording ink composition according to Claim 3, wherein the monovalent to hexa-valent structure for initiating polymerization is derived from a polymerization initiator selected from the group consisting of (a) an aromatic ketone, (b) an aromatic onium salt compound, (c) an organic peroxide, (d) a thio compound, (e) a hexaaryl-biimidazole compound, (f) a ketoxime ester compound, (g) a borate compound, (h) an azinium compound, (i) a metallocene compound, (j) an activated ester compound, and (k) a carbon-halogen bond-containing compound.

6. An ink jet-recording ink composition according to Claim 5, wherein the monovalent to hexa-valent structure for initiating polymerization is derived from a polymerization initiator selected from the group consisting of (a) an aromatic ketone, (b) an aromatic onium salt compound, (f) a ketoxime ester compound, and (k) a carbon-halogen bond-containing compound.

7. An ink jet-recording ink composition according to Claim 6, wherein the aromatic ketone (a) is represented by the following general formula Rd-1: 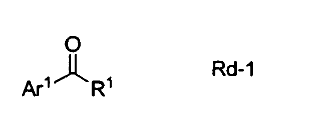 wherein Ar¹ is an optionally substituted C6-C18 aromatic hydrocarbon, and R¹ is an optionally substituted C1-C18 hydrocarbon.

8. An ink jet-recording ink composition according to Claim 6, wherein the ketoxime ester compound (f) is represented by the following general formula Rd-2: 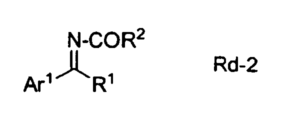 wherein Ar¹ is an optionally substituted C6-C18 aromatic hydrocarbon, and R¹ and R² independently represent an optionally substituted C1-C18 hydrocarbons.

9. An ink jet-recording ink composition according to Claim 6, wherein the aromatic onium salt compound (b) is represented by the following general formula Rd-3, Rd-4, Rd-5 or Rd-6: 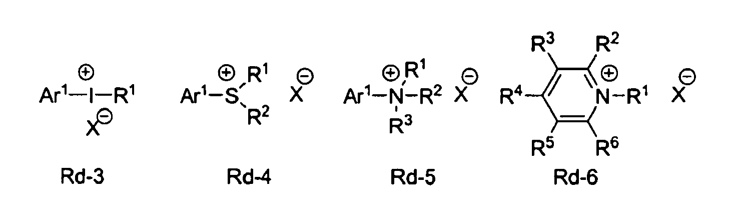 wherein Ar¹ is an optionally substituted C6-C18 aromatic hydrocarbon, R¹, R², R³, R⁴, R⁵, R⁶ independently represent an optionally substituted C1-C18 hydrocarbon, and X represents a counter anion.

10. An ink jet-recording ink composition according to Claim 6, wherein the carbon-halogen bond-containing compound (k) is represented by the following general formula Rd-7: 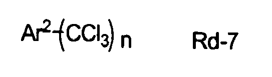 wherein Ar² is an optionally substituted C6-C18 hetero atom-containing aromatic hydrocarbon, and n is an integer from 1 to 3.

11. A method for the preparation of a lithographic printing plate comprising the steps of ejecting an ink composition as defined in any preceding Claim to place it on a hydrophilic substrate and then irradiating the ink composition with radiant rays to thus form an image on the substrate.

## Patentansprüche

1. Tintenzusammensetzung für das Tintenstrahlaufzeichnen, die in der Lage ist, durch Strahlung gehärtet zu werden, welche zumindest ein Färbematerial, eine polymerisierbare Verbindung und einen Polymerisationsinitiator umfaßt, worin der Polymerisationsinitiator eine Verbindung ist, die eine polymerisierbare Struktur in dem Molekül aufweist, die ausgewählt ist aus einer Styrylgruppe, einer Allylgruppe, einer Vinylgruppe und einer α-Heteromethacrylgruppe, die durch die allgemeine Formel (I) repräsentiert wird: 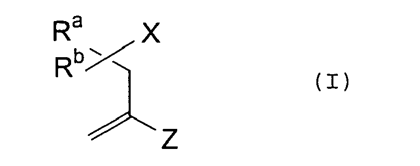 worin R^{a} und R^{b} jeweils unabhängig ein Wasserstoffatom, ein Halogenatom, eine Cyanogruppe oder eine organische Gruppe repräsentieren; Z CN oder COY repräsentiert; X eine Gruppe oder ein Halogenatom, gebunden an den α-Kohlenstoff durch ein Heteroatom, repräsentiert; und Y eine Gruppe oder ein Halogenatom, gebunden an die Carbonylgruppe durch ein Heteroatom, repräsentiert, vorausgesetzt, daß X und Y, R^{a} und R^{b}, oder X und R^{a} oder R^{b} miteinander verbunden sein können, um eine ringähnliche Struktur zu bilden.

2. Tintenzusammensetzung für das Tintenstrahlaufzeichnen gemäß Anspruch 1, worin die polymerisierbare Struktur, die in dem Polymerisationsinitiator vorliegt, eine durch die allgemeine Formel (I) repräsentierte α-Heteromethacrylgruppe ist.

3. Tintenzusammensetzung für das Tintenstrahlaufzeichnen gemäß Anspruch 1, worin der Polymerisationsinitiator eine Verbindung ist, die durch die folgende allgemeine Formel (II) repräsentiert wird: 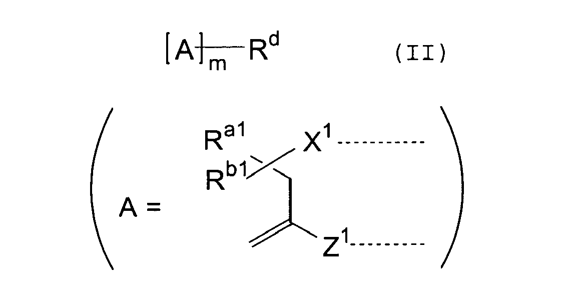 worin m eine ganze Zahl im Bereich von 1 bis 6 ist, R^{a1} und R^{b1} jeweils unabhängig ein Wasserstoffatom, ein Halogenatom, eine Cyanogruppe oder eine einwertige organische Gruppe repräsentieren; X¹ ein Halogenatom, eine einwertige oder zweiwertige Gruppe, die durch ein Heteroatom gebunden ist, oder ein zweiwertiges Heteroatom repräsentiert; Z¹ CN oder COY¹ repräsentiert; Y¹ eine einwertige oder zweiwertige Gruppe, die an eine Carbonylgruppe durch ein Heteroatom gebunden ist, oder ein Halogenatom repräsentiert, vorausgesetzt, daß zumindest eines von X¹ und Y¹ eine zweiwertige Gruppe repräsentiert; R^{d} eine einwertige bis sechswertige Struktur zum Initiieren von Polymerisation, abgeleitet aus einem Polymerisationsinitiator, repräsentiert; die gestrichelte Linie einen Bindungsarm repräsentiert, wenn X¹ oder Y¹ und R^{d} miteinander verbunden sind, und die Anzahl der Bindungsarme, die in der Struktur vorhanden sind, insgesamt von 1 bis 6 reicht.

4. Tintenzusammensetzung für das Tintenstrahlaufzeichnen gemäß Anspruch 3, worin die "einwertige Gruppe, die durch ein Heteroatom gebunden ist", eine Hydroxylgruppe, eine substituierte Oxygruppe, eine Mercaptogruppe, eine substituierte Thiogruppe, eine Aminogruppe, eine substituierte Aminogruppe, eine Sulfogruppe, eine Sulfonatgruppe, eine substituierte Sulfinylgruppe, eine substituierte Sulfonylgruppe, eine Phosphonogruppe, eine substituierte Phosphonogruppe, eine Phosphonatgruppe, eine substituierte Phosphonatgruppe, eine Nitrogruppe oder eine Heteroring-haltige Gruppe (vorausgesetzt, daß diese Gruppe durch das Heteroatom verbunden ist) ist, und die "zweiwertige Gruppe, die durch ein Heteroatom gebunden ist", eine ist, die aus der vorgehenden einwertigen Gruppe abgeleitet ist, worin ein Wasserstoffatom oder ein(e) andere(s) Atom oder Gruppe durch einen Bindungsarm ersetzt ist.

5. Tintenzusammensetzung für das Tintenstrahlaufzeichnen gemäß Anspruch 3, worin die einwertige bis sechswertige Struktur zum Initiieren von Polymerisation aus einem Polymerisationsinitiator abgeleitet ist, der ausgewählt ist aus der Gruppe bestehend aus (a) einem aromatischen Keton, (b) einer aromatischen Oniumsalzverbindung, (c) einem organischen Peroxid, (d) einer Thioverbindung, (e) einer Hexaarylbiimidazolverbindung, (f) einer Ketoximesterverbindung, (g) einer Boratverbindung, (h) einer Aziniumverbindung, (i) einer Metallocenverbindung, (j) einer aktivierten Esterverbindung und (k) einer eine Kohlenstoff-Halogen-Bindung enthaltenden Verbindung.

6. Tintenzusammensetzung für das Tintenstrahlaufzeichnen gemäß Anspruch 5, worin die einwertige bis sechswertige Struktur zum Initiierten von Polymerisation aus einem Polymerisationsinitiator abgeleitet ist, der aus der Gruppe ausgewählt ist, die aus (a) einem aromatischen Keton, (b) einer aromatischen Oniumsalzverbindung, (f) einer Ketoximesterverbindung und (k) einer eine Kohlenstoff-Halogen-Bindung enthaltenden Verbindung besteht.

7. Tintenzusammensetzung für das Tintenstrahlaufzeichnen gemäß Anspruch 6, worin das aromatische Keton (a) durch die folgende allgemeine Formel Rd-1 repräsentiert wird: 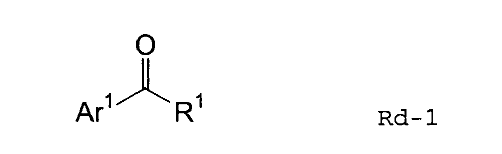 worin Ar¹ ein gegebenenfalls substituierter C₆-C₁₈ aromatischer Kohlenwasserstoff ist, und R¹ ein gegebenenfalls substituierter C₁-C₁₈ Kohlenwasserstoff ist.

8. Tintenzusammensetzung für das Tintenstrahlaufzeichnen gemäß Anspruch 6, worin die Ketoximesterverbindung (f) durch die folgende allgemeine Formel Rd-2 repräsentiert wird: 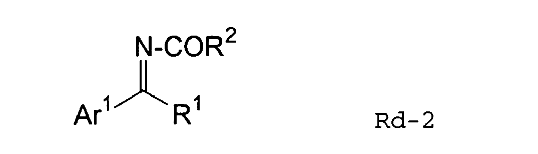 worin Ar¹ ein gegebenenfalls substituierter C₆-C₁₈ aromatischer Kohlenwasserstoff ist, und R¹ und R² unabhängig einen gegebenenfalls substituierten C₁-C₁₈ Kohlenwasserstoff repräsentieren.

9. Tintenzusammensetzung für das Tintenstrahlaufzeichnen gemäß Anspruch 6, worin die aromatische Oniumsalzverbindung (b) durch die folgende allgemeine Formel Rd-3, Rd-4, Rd-5 oder Rd-6 repräsentiert wird: 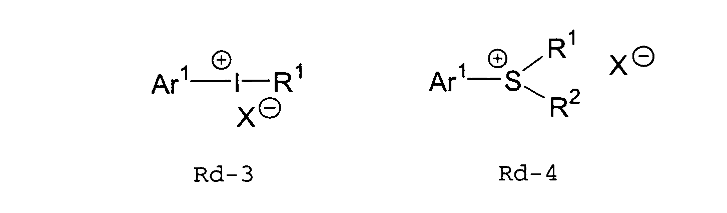 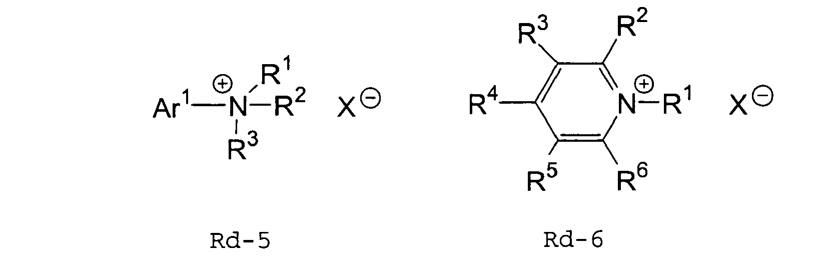 worin Ar¹ ein gegebenenfalls substituierter C₆-C₁₈ aromatischer Kohlenwasserstoff ist, R¹, R², R³, R⁴, R⁵, R⁶ unabhängig einen gegebenenfalls substituierten C₁-C₁₈ Kohlenwasserstoff repräsentieren, und X ein Gegenanion repräsentiert.

10. Tintenzusammensetzung für das Tintenstrahlaufzeichnen gemäß Anspruch 6, worin die eine Kohlenstoff-Halogen-Bindung-enthaltende Verbindung (k) durch die folgende allgemeine Formel Rd-7 repräsentiert wird: 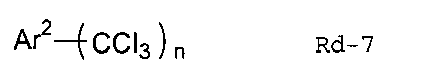 worin Ar² ein gegebenenfalls substituierter C₆-C₁₈ Heteroatom-haltiger aromatischer Kohlenwasserstoff ist, und n ist eine ganze Zahl von 1 bis 3.

11. Verfahren zur Herstellung einer Lithographiedruckplatte, umfassend die Schritte des Ausstoßens einer Tintenzusammensetzung, wie sie in irgendeinem vorhergehenden Anspruch definiert ist, um sie auf einem hydrophilen Substrat zu plazieren, und dann Bestrahlen der Tintenzusammensetzung mit Strahlung, um so ein Bild auf dem Substrat zu bilden.

## Revendications

1. Composition d'encre pour enregistrement par jet d'encre susceptible d'être durcie par irradiation avec des rayons énergétiques qui comprend au moins une matière colorante, un composé polymérisable et un initiateur de polymérisation, dans laquelle l'initiateur de polymérisation est un composé possédant une structure polymérisable dans une molécule sélectionnée parmi un groupe styryle, un groupe allyle, un groupe vinyle et un groupe α-hétéro méthacrylique représenté par la formule (I) : 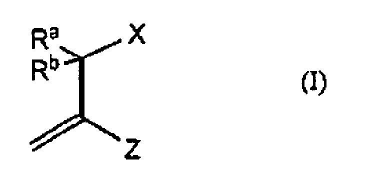 dans laquelle, R^{a} et R^{b} représentent chacun indépendamment un atome d'hydrogène, un atome d'halogène, un groupe cyano ou un groupe organique ; Z représente CN ou COY ; X représente un groupe ou un atome d'halogène lié au carbone α par l'intermédiaire d'un hétéroatome ; et Y représente un groupe ou un atome d'halogène lié au groupe carbonyle par l'intermédiaire d'un hétéroatome, à condition que X et Y, R^{a} et R^{b}, ou X et R^{a} ou R^{b} puissent être liés ensemble pour former une structure en forme de cycle.

2. Composition d'encre pour enregistrement par jet d'encre selon la revendication 1, dans laquelle la structure polymérisable présente dans l'initiateur de polymérisation est un groupe α-hétéro méthacrylique représenté par la formule générale (I).

3. Composition d'encre pour enregistrement par jet d'encre selon la revendication 1, dans laquelle l'initiateur de polymérisation est un composé représenté par la formule générale suivante (II) : 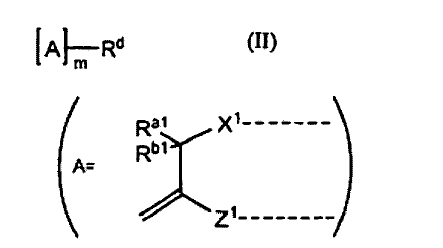 dans laquelle, m est un entier compris entre 1 et 6, R^{a1} et R^{b1} représentent chacun indépendamment un atome d'hydrogène, un atome d'halogène, un groupe cyano ou un groupe organique monovalent ; X¹ représente un atome d'halogène, un groupe monovalent ou divalent lié par l'intermédiaire d'un hétéroatome, ou un hétéroatome divalent ; Z¹ représente CN ou COY¹ ; Y¹ représente un groupe monovalent ou divalent lié à un groupe carbonyle par l'intermédiaire d'un hétéroatome, ou un atome d'halogène, à condition qu'au moins l'un de X¹ et Y¹ représente un groupe divalent ; R^{d} représente une structure monovalente à hexavalente pour amorcer la polymérisation dérivée d'un initiateur de polymérisation ; la ligne pointillée représente un bras de liaison quand X¹ ou Y¹ et R^{d} sont liés ensemble et le nombre de bras de liaison présents dans la structure est compris entre 1 et 6 au total.

4. Composition d'encre pour enregistrement par jet d'encre selon la revendication 3, dans laquelle "le groupe monovalent lié par l'intermédiaire d'un hétéroatome" est un groupe hydroxyle, un groupe oxy substitué, un groupe mercapto, un groupe thio substitué, un groupe amino, un groupe amino substitué, un groupe sulfo, un groupe sulfonate, un groupe sulfinyle substitué, un groupe sulfonyle substitué, un groupe phosphono, un groupe phosphono substitué, un groupe phosphonate, un groupe phosphonate substitué, un groupe nitro ou un groupe contenant un hétérocycle (à condition que ce groupe soit lié par l'intermédiaire de l'hétéroatome) et "le groupe divalent lié par l'intermédiaire d'un hétéroatome" est celui dérivé d'un groupe monovalent précédent dans lequel un atome d'hydrogène ou un autre atome ou groupe est remplacé par un bras de liaison.

5. Composition d'encre pour enregistrement par jet d'encre selon la revendication 3, dans laquelle la structure monovalente à hexavalente pour amorcer la polymérisation est dérivé d'un initiateur de polymérisation sélectionné parmi le groupe constitué par (a) une cétone aromatique, (b) un composé de sel d'onium aromatique, (c) un peroxyde organique, (d) un composé thio, (e) un composé hexaaryl-biimidazole, (f) un composé d'ester de cétoxime, (g) un composé de borate, (h) un composé d'azinium, (i) un composé de metallocène, (j) un composé d'ester activé et (k) un composé contenant une liaison carbone-halogène.

6. Composition d'encre pour enregistrement par jet d'encre selon la revendication 5, dans laquelle la structure monovalente à hexavalente pour amorcer la polymérisation est dérivé d'un initiateur de polymérisation sélectionné parmi le groupe constitué par (a) une cétone aromatique, (b) un composé de sel d'onium aromatique, (f) un composé d'ester de cétoxime, et (k) un composé contenant une liaison carbone-halogène.

7. Composition d'encre pour enregistrement par jet d'encre selon la revendication 6, dans laquelle la cétone aromatique (a) est représentée par la formule générale suivante Rd-1 : 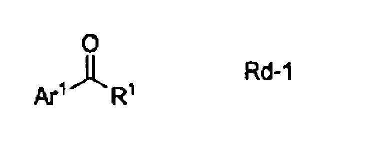 dans laquelle Ar¹ est un hydrocarbure aromatique en C6 - C18 substitué optionnellement et R¹ est un hydrocarbure en C1 - C18 substitué optionnellement.

8. Composition d'encre pour enregistrement par jet d'encre selon la revendication 6, dans laquelle le composé d'ester de cétoxime (f) est représenté par la formule générale suivante Rd-2 : 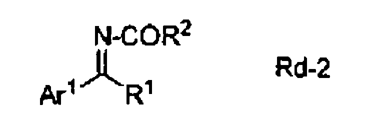 dans laquelle Ar¹ est un hydrocarbure aromatique en C6 - C18 substitué de manière facultative et R¹ et R² représentent de manière indépendamment un hydrocarbure en C1 - C18 substitué optionnellement.

9. Composition d'encre pour enregistrement par jet d'encre selon la revendication 6, dans laquelle le composé de sel d'onium aromatique (b) est représenté par la formule générale suivante Rd-3, Rd-4, Rd-5 ou Rd-6 : 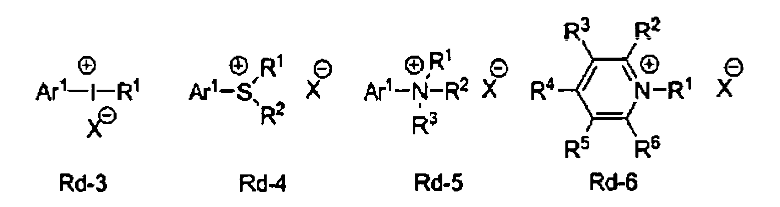 dans laquelles Ar¹ est un hydrocarbure aromatique en C6 - C18 substitué optionnellement, R¹, R², R³, R⁴, R⁵ , R⁶ représentent indépendamment un hydrocarbure en C1 - C18 substitué optionnellement et X représente un contre anion.

10. Composition d'encre pour enregistrement par jet d'encre selon la revendication 6, dans laquelle le composé contenant une liaison carbone-halogène (k) est représenté par la formule générale suivante Rd-7 : 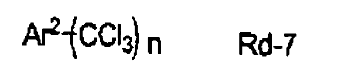 dans laquelle Ar² est un hydrocarbure aromatique en C6 - C18 contenant un hétéroatome substitué optionnellement et n est un entier de 1 à 3.

11. Procédé pour la préparation d'une plaque d'impression lithographique comprenant les étapes consistant à éjecter une composition d'encre telle que définie dans l'une quelconque des revendications précédentes pour la placer sur un substrat hydrophile et ensuite à irradier la composition d'encre avec des rayons énergétiques pour former ainsi une image sur le substrat.
